# EUROPÄISCHE PATENTSCHRIFT

(11) **EP 3 539 044 B1**
(45) Veröffentlichungstag und Bekanntmachung des Hinweises auf die Patenterteilung: **18.08.2021**
(21) Anmeldenummer: 17797140.5
(22) Anmeldetag: 08.11.2017
(51) Int. Cl.: G06F 21/62

(54) **ZUGRIFFSKONTROLLE AUF DATENOBJEKTE**
ACCESS CONTROL FOR DATA OBJECTS
CONTRÔLES D'ACCÈS À DES OBJETS DE DONNÉES

(30) Priorität: 09.11.2016 DE 102016221956
(43) Veröffentlichungstag der Anmeldung: 18.09.2019
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE)
(74) Vertreter: Richardt Patentanwälte PartG mbB
(86) Internationale Anmeldenummer: PCT/EP2017/078655
(87) Internationale Veröffentlichungsnummer: WO 2018/087175

(56) Entgegenhaltungen:
- US-A1- 2006 282 433
- US-A1- 2008 021 901
- Anonymous: "WITH GRANT OPTION: How to Delegate your Permission Management - sqlity.net", , 25. Januar 2014 (2014-01-25), XP055437370, Gefunden im Internet: URL:http://sqlity.net/en/1884/grant-option -delegate-permission-management/ [gefunden am 2017-12-21]
- Anonymous: "PostgreSQL: Documentation: 9.5: GRANT", , 22. Mai 2016 (2016-05-22), XP055437286, Gefunden im Internet: URL:https://web.archive.org/web/2016052223 2343/http://www.postgresql.org:80/docs/9.5 /static/sql-grant.html [gefunden am 2017-12-21]

## Beschreibung

### Technisches Gebiet

Die vorliegenden Darstellungen betreffen IT-Systeme und insbesondere die Zugriffskontrolle auf von IT-Systemen verwaltete Datenobjekte.

### Stand der Technik

Aus dem Stand der Technik sind verschiedene Ansätze zur Zugriffskontrolle auf in IT-Systemen, wie z.B. Datenbanken, gespeicherte Daten bekannt.

Beispielsweise können klassische, SQL basierte Datenbanken verwendet werden, die von entsprechend geschultem Personal verwaltet werden. Ein oder mehrere Datenbankadministratoren sind verantwortlich für die Pflege der Daten und die Einrichtung von Datenbanken und Datenbanknutzern.

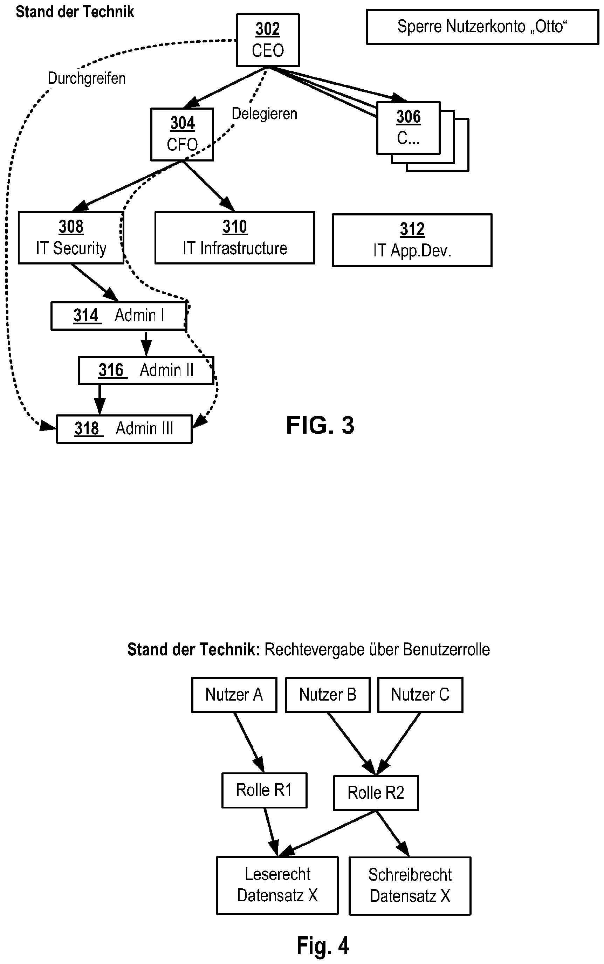

So zeigt beispielsweise Figur 3 eine typische Organisationsstruktur eines Unternehmens und die organisatorische Einbettung der Datenbanken und der Tätigkeit der Administratoren in die Unternehmenshierarchie. Typischerweise sind in einem Unternehmen ein oder mehrerer Geschäftsführer 302 sowie mehrere Abteilungsleiter 304, 306 tätig. Diesen untergeordnet sind Leiter 308, 310, 312 einzelner technischer Teams, die für die Sicherheit und Verfügbarkeit der IT-Struktur oder für die Entwicklung unternehmensrelevanter Applikationen verantwortlich sind. Zur IT Sicherheit können ein oder mehrere Administratoren 314, 316, 318 gehören.

Scheidet nun ein Mitarbeiter "Otto" aus dem Unternehmen aus, oder liegt der Verdacht einer Untreue vor, kann es notwendig sein, dem Mitarbeiter "Otto" kurzfristig seine Zugangsberechtigungen zu sensiblen Unternehmensdaten zu entziehen. Im Stand der Technik erfolgt dies typischerweise dadurch, dass eine leitende Stelle, z.B. der Geschäftsführer oder Leiter der Personalabteilung, die Aufgabe des Entzugs der Zugriffsberechtigung über mehrere Hierarchiestufen weitergibt, d.h. delegiert. Dies ist oftmals mit erheblichen zeitlichen Verzögerungen verbunden, da jede krankheits- oder urlaubsbedingte Abwesenheit eines Mitarbeiters innerhalb der Kette zu entsprechenden Verzögerungen führt. Alternativ kann der Geschäftsführer oder der Leiter der Personalabteilung selbst eingreifen, d.h. durchgreifen. Dies kann jedoch den Nachteil mit sich bringen, dass Personen, die ohnehin eine Vielzahl von Aufgaben wahrnehmen müssen und bereits damit zeitlich ausgelastet, wenn nicht gar überlastet sind, sich auch noch um IT-nahe Verwaltungstätigkeiten kümmern müssen. Hinzu kommt, dass leitende Mitarbeiter oftmals gar nicht über die technichen Möglichkeiten und/oder das notwendige Wissen verfügen, um solche IT-nahe Tätigkeiten auszuführen.

In einem weiteren Aspekt werden im Stand der Technik oft rollenbasierte Zugriffsberechtigungssysteme verwendet wie in Figur 4 dargestellt. Diese haben jedoch den Nachteil, dass nicht mehr nachvollzogen werden kann, welcher Nutzer für eine bestimmte Datenveränderung verantwortlich war, da verschiedene Nutzer unter derselben Rolle handeln können. Insbesondere für die Verwaltung sicherheitskritischer, sensibler Daten ist daher der Einsatz rollenbasierter Systeme zur Verwaltung von Zugriffsrechten problematisch.

In einem weiteren Aspekt haben im Stand der Technik verwendete Zugriffsverwaltungssysteme den Nachteil, dass die technischen Administratoren notwendigerweise Zugriff auf und Kontrolle über alle Daten des Unternehmens einschließlich der Daten des Geschäftsführers besitzt. Ferner sind es die technischen Administratoren, welche die Zugriffsrechte für all diese Daten gewähren und kontrollieren. Dies führt dazu, dass die Verfügungshoheit über die Daten des Unternehmens in den Händen dieser Administratoren liegt, während diejenigen Personen, wie etwa der Geschäftsführer, leitende Angestellte und andere Mitarbeiter des Unternehmens, welche wirtschaftliche Entscheidung treffen und dafür die Verantwortung tragen, sich vollständig auf die technischen Administratoren verlassen müssen und allenfalls über beschränkte Kontrollmöglichkeiten verfügen. Diese Problematik gewinnt umso mehr an Gewicht, je wichtiger Daten und deren Management für den wirtschaftlichen Erfolg von Unternehmen heutzutage werden. Ferner birgt diese Konstellation die Gefahr, dass sensible Daten nach außen dringen können, da es zumindest eine Gruppe von Personen gibt, welche uneingeschränkten Zugriff auf alle Daten hat, nämlich die Administratoren.

Der Artikel "WITH GRANT OPTION: How to Delegate your Permission Management", sqlity.net - 1.832.3SQLITY (775489), 25. Januar 2014, URL:http://sqlity.net/en/1884/grant-option-delegate-permission-management, beschreibt die "WITH GRANT OPTION"-Erweiterung für T-SQL GRANT-Anweisungen.

Die Dokumentation für PostgreSQL, Version 9.5, beschreibt im Kapitel "GRANT", 22. Mai 2016, URL:https://web.archive.org/web/20160522232343/http://www.postgresql.org:80/docs/9.5/static/sql-grant.html, beschreibt die GRANT-Anweisung für PostgreSQL.

### Technisches Problem und grundlegende Lösungen

Mit den bekannten IT-Systemen und diesbezüglich entwickelten Verfahren der Zugriffsverwaltung und/oder Organisation von Daten sind Möglichkeiten zur Verwaltung der Zugriffsrechte einzelner Nutzer auf verschiedene Inhalte beispielsweise von Datenbanken gegeben. Im Kontext einer typischen Organisationsstruktur mittelständischer oder großer Unternehmen bedeutet dies aber Nachteile in Bezug auf die Geschwindigkeit und Flexibilität, mit der Zugriffsrechte geändert werden können und in Bezug auf die Klarheit der Zuordnung und Feststellbarkeit von Verantwortlichkeiten.

Vor diesem Hintergrund besteht ein Bedarf an verbesserten Verfahren zur Verwaltung von Zugriffsrechten auf Datenobjekte und an entsprechend verbesserten Zugriffs-Verwaltungssystem insofern, dass die vorangehend erwähnten Nachteile damit zumindest teilweise vermeidbar sind.

Der Erfindung liegt demgemäß die Aufgabe zugrunde, ein verbessertes Verfahren zur Zugriffskontrolle auf Datenobjekte zu schaffen sowie ein entsprechendes System zum Ausführen des Verfahrens zur Verfügung zu stellen.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zur Zugriffskontrolle auf Datenobjekte. Das Verfahren umfasst:
- Bereitstellen einer ausgehend von einem ersten Nutzer durch eine Mehrzahl von Nutzern dynamisch erzeugten ersten Berechtigungshierarchie, wobei die erste Berechtigungshierarchie sukzessive erzeugt wird, indem ausgehend von dem ersten Nutzer der jeweils zuletzt in die erste Berechtigungshierarchie aufgenommene Nutzer einem neu aufzunehmenden Nutzer persönlich ein erstes Zugriffsrecht zuweist, sodass jedem von der ersten Berechtigungshierarchie umfassten Nutzer das erste Zugriffsrecht zugewiesen ist, und wobei die ersten Berechtigungshierarchie neben dem ersten Nutzer zumindest zwei weitere Nutzer umfasst,
- Bereitstellen einer ausgehend von einem zweiten Nutzer erzeugten zweiten Berechtigungshierarchie, wobei die zweite Berechtigungshierarchie sukzessive erzeugt wird, indem ausgehend von dem zweiten Nutzer der jeweils zuletzt in die zweite Berechtigungshierarchie aufgenommene Nutzer einem neu aufzunehmenden Nutzer persönlich ein zweites Zugriffsrecht zuweist, sodass jedem von der zweiten Berechtigungshierarchie umfassten Nutzer das zweite Zugriffsrecht zugewiesen ist, und wobei die zweite Berechtigungshierarchie neben dem zweiten Nutzer zumindest einen weiteren Nutzer umfasst,
- Prüfen von Zugriffsrechten eines dritten Nutzers für einen Zugriff auf eines der Datenobjekte, wobei ein Zugriff auf das Datenobjekt nur dann gewährt wird, wenn der dritte Nutzer sowohl von der ersten Berechtigungshierarchie umfasst ist, sodass ihm das erste Zugriffsrecht zugewiesen ist, als auch von der zweiten Berechtigungshierarchie, sodass ihm ferner das zweite Zugriffsrecht zugewiesen ist.

Dies kann vorteilhaft sein, da es ermöglicht bei der Prüfung, ob ein Nutzer berechtigt ist auf ein Datenobjekt, wie etwa einen Datensatz zuzugreifen, unterschiedliche Berechtigungshierarchien berücksichtigt werden können. Bei diesen unterschiedlichen Berechtigungshierarchien kann es sich insbesondere um Berechtigungshierarchien handeln, welche unabhängig voneinander erzeugt werden.

Beispielsweise beruht die erste Berechtigungshierarchie darauf, auf welcher "Rechte-Ebene" die einzelnen von ihr umfassten Nutzer in einem Unternehmen oder einer sonstigen Organisationsstruktur angesiedelt sind. Beispielsweise ist der erste Nutzer, von dem ausgehend die erste Berechtigungshierarchie erzeugt wird, auf der höchsten Rechte-Ebene aller von der ersten Berechtigungshierarchie umfassten Nutzer angesiedelt. Er hat somit die meisten "Rechte" inklusive eines ersten Zugriffsrechts inne und kann beispielsweise über die erste Berechtigungshierarchie den anderen Nutzern dieses erste Zugriffsrecht ebenfalls zuweisen.

Eine Berechtigungshierarchie kann beispielsweise eine Sequenz von Nutzer-Zertifikaten der einzelnen von der Berechtigungshierarchie umfassten Nutzer umfassen. Aus der Reihenfolge der Nutzerzertifikate kann beispielsweise abgelesen werden, wie ein von dem ersten Zertifikat der Sequenz umfasstes Recht oder Attribut von Nutzer zu Nutzer weiterverbreitet wurde. Die Authentizität dieser Sequenz kann beispielsweise durch eine Signatur einer dazu berechtigten und vertrauenswürdigen Instanz bestätigt bzw. gewährleitet werden. Diese berechtigte und vertrauenswürdige Instanz prüft beispielsweise bei der Erzeugung der entsprechenden Berechtigungshierarchie ihre Korrektheit und Authentizität bevor sie die Berechtigungshierarchie bestätigt, d.h. signiert.

Eine dynamische Erzeugung der Berechtigungshierarchien kann den Vorteil haben, dass jeder von der Berechtigungshierarchie umfasste Nutzer, welcher über eine Berechtigung zum Erweitern der Hierarchie verfügt und dieses Recht in Anspruch nimmt, d.h. einen Nutzer hinzufügt, dies in Eigenverantwortung tut. Somit ist jede Erweiterung der Berechtigungshierarchie eindeutig einem bestimmten Nutzer und dessen Verantwortung zuzuschreiben. Ferner kann sich aus der dynamische Erzeugung automatisch eine natürliche und/oder sachgerechte hierarchische Struktur ergeben, die sich leicht an Änderungen anpassen kann. Somit können insbesondere vordefinierte, starre und möglicherweise nur unter großem Aufwand anpassbare Strukturierungsvorgaben vermieden werden. Die Berechtigungshierarchie kann vielmehr das Ergebnis eines evolutionären Prozesses sein.

Beispielsweise ist die zweite Berechtigungshierarchie unabhängig von Zuordnungen zu den zuvor genannten Rechte-Ebenen. Die zweite Berechtigungshierarchie kann beispielsweise von dem zweiten Nutzer als einem Erzeuger des Datenobjekts ausgehen, auf welches zugegriffen werden soll. Somit kann der zweite Nutzer unabhängig von seinen sonstigen Rechten vollständige Kontrolle über von ihm erstellte Datenobjekte ausüben. Er entscheidet selbstständig, wer außer ihm Zugriff auf das Datenobjekt erhalten kann. Da unterschiedliche Datenobjekte im allgemeinen unterschiedliche Erzeuger haben, gibt es von Haus aus niemanden, der einen vollständigen Zugriff auf alle Datenobjekte besitzt.

Die zweite Berechtigungshierarchie kann auch auf anderen Kriterien beruhen. Beispielsweise kann den von der zweiten Berechtigungshierarchie umfassten Nutzern eine Eigenschaft bzw. ein Attribut zugewiesen bzw. bescheinigt werden. Beispielsweise ist für den Zugriff auf das Datenobjekt eine bestimmte Prüfung Voraussetzung, wie etwa eine Sicherheitsüberprüfung, eine physiologische oder psychologische Eignungsprüfung oder eine auf Wissen basierende Eignungsprüfung. Diese Prüfung kann unabhängig von der Rechte-Ebene sein. Somit kann eine solche zweite Berechtigungshierarchie eine zusätzliche Kontrolle implementieren. Die zweite Berechtigungshierarchie kann für die von ihr umfassten Nutzern beispielsweise die Erfüllung dieser weiteren Zugriffsvoraussetzung, insbesondere als Zugriffsvoraussetzung für sensiblen Daten, bestätigen.

Bei Datenobjekten kann es sich um Daten und/oder Datenkonstrukte im allgemeinsten Sinn handeln, wie beispielsweise Datenelemente, Datensätze, Sammlungen von Datensätzen, etc.

Nach Ausführungsformen wird eine Mehrzahl von zweiten Berechtigungshierarchien bereitgestellt, die jeweils ausgehend von dem zweiten Nutzer erzeugten sind.

Dies kann vorteilhaft sein, da so jeweils ausgehend von dem zweiten Nutzer für unterschiedliche Nutzer jeweils unterschiedliche zweiten Berechtigungshierarchien erzeugt und verwendet werden können. Beispielsweise wird jedem Nutzer aus einer Gruppe von Nutzern durch den zweiten Nutzer eine individuelle zweite Berechtigungshierarchie zugewiesen, welche jeweils den zweiten Nutzer und den entsprechenden Nutzer aus der Gruppe umfasst.

Nach Ausführungsformen umfasst das Verfahren ferner:
- Bereitstellen zumindest einer weiteren, ausgehend von einem vierten Nutzer erzeugten dritten Berechtigungshierarchie, wobei die dritte Berechtigungshierarchie sukzessive erzeugt wird, indem ausgehend von dem vierten Nutzer der jeweils zuletzt in die dritte Berechtigungshierarchie aufgenommene Nutzer einem neu aufzunehmenden Nutzer persönlich ein drittes Zugriffsrecht zuweist, sodass jedem von der dritten Berechtigungshierarchie umfassten Nutzer das dritte Zugriffsrecht zugewiesen ist, und wobei die dritte Berechtigungshierarchie neben dem vierten Nutzer zumindest einen weiteren Nutzer umfasst,
- wobei das Prüfen der Zugriffsrechte des dritten Nutzers für den Zugriff auf das Datenobjekt ferner ein Prüfen zumindest der weiteren dritten Berechtigungshierarchie umfasst und ein Zugriff auf das Datenobjekt nur dann gewährt wird, wenn der dritte Nutzer ferner von der dritten Berechtigungshierarchie umfasst ist, sodass ihm das dritte Zugriffsrecht zugewiesen ist.

Dies kann vorteilhaft sein, da durch die dritte Berechtigungshierarchie eine weitere Berechtigungshierarchie basierend auf anderen Kriterien eingeführt werden kann. Insbesondere kann somit eine zusätzliche Kontrollmöglichkeit geschaffen werden, welche etwa von einem Sicherheitsbeauftragten genutzt werden kann, um bestimmte Sicherheitsanforderungen für einen Zugriff auf das Datenobjekt zu implementieren. Beispielsweise kann den von der dritten Berechtigungshierarchie umfassten Nutzern eine Eigenschaft bzw. ein Attribut zugewiesen bzw. bescheinigt werden. Beispielsweise ist für den Zugriff auf das Datenobjekt eine bestimmte Prüfung Voraussetzung, wie etwa eine Sicherheitsüberprüfung, eine physiologische oder psychologische Eignungsprüfung oder eine auf Wissen basierende Eignungsprüfung. Diese Prüfung ist beispielsweise unabhängig von den Rechte-Ebenen, welchen die Nutzer zugeordnet sind. Beispielsweise ist der vierte Nutzer, etwa ein Sicherheitsbeauftragter, für diese zusätzliche Prüfung zuständig. Die dritte Berechtigungshierarchie kann somit für die von ihr umfassten Nutzern beispielsweise die Erfüllung einer weiteren Zugriffsvoraussetzung, insbesondere im Fall von sensiblen Daten, bestätigen.

Nach Ausführungsformen wird eine Mehrzahl von dritten Berechtigungshierarchien bereitgestellt, die jeweils ausgehend von dem vierten Nutzer erzeugten sind.

Dies kann vorteilhaft sein, da so jeweils ausgehend von dem vierten Nutzer für unterschiedliche Nutzer jeweils unterschiedliche dritte Berechtigungshierarchien erzeugt und verwendet werden können. Beispielsweise wird jedem Nutzer aus einer Gruppe von Nutzern durch den vierten Nutzer eine individuelle dritte Berechtigungshierarchie zugewiesen, welche jeweils den vierten Nutzer und den entsprechenden Nutzer aus der Gruppe umfasst.

Nach Ausführungsformen implementiert die erste Berechtigungshierarchie eine hierarchische Beziehungsstruktur zwischen den von der ersten Berechtigungshierarchie umfassten Nutzern, welche einer hierarchischen Beziehungsstruktur zwischen diesen Nutzer in einer hierarchisch strukturierten Organisation entspricht, der die Nutzer zugeordnet sind, und wobei der erste Nutzer an der Spitze dieser hierarchischen Beziehungsstruktur steht.

Dies kann vorteilhaft sein, da so eine zugrundliegende hierarchische Beziehungsstruktur eines Unternehmens oder einer sonstigen Organisationsstruktur in die Zugriffskontrolle eingebracht und berücksichtigt werden kann. Beispielsweise handelt es sich bei der zugrundliegenden hierarchischen Beziehungsstruktur um eine Hierarchie gemäß einem Baumdiagramm, wobei der erste Nutzer zum Beispiel der Position des Wurzelknotens zugeordnet ist, Die erste Berechtigungshierarchie kann beispielsweise einem Pfad von dem Wurzelknoten zu einem der Blätter oder einem Teil eines solchen Pfads entsprechen. Die die weiteren von der Berechtigungshierarchie umfassten Nutzer sind beispielsweise inneren Knoten und/oder den Blättern des Baumdiagramms zugeordnet.

Nach Ausführungsformen umfassen die Datenobjekten Datensätze. Das Erzeugen der ersten Berechtigungshierarchie umfasst:
- Erstellen einer ersten Verknüpfung eines ersten Eigner-Zertifikats, das einer Nutzdaten-Datenbank zugeordnet ist, mit dem dritten Nutzer, wobei ein Eigner-Zertifikat ein Zertifikat ist, das einer oder mehreren Nutzdaten-Datenbanken zugeordnet ist und jedem Nutzer, mit dem es verknüpft ist, das erste Zugriffsrecht gewährt, welches das Recht umfasst, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
- Bereitstellen einer ersten Schnittstelle, die es dem dritten Nutzer ermöglicht, eine zweite Verknüpfung des zweiten Nutzers mit dem ersten Eigner-Zertifikat für die Nutzdaten-Datenbank zu erstellen, um diesem zu ermöglichen, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank.

Das Erzeugen der zweiten Berechtigungshierarchie umfasst:
- Bereitstellen einer zweiten Schnittstelle, die es dem zweiten Nutzer, der einen der Datensätze in der Nutzdaten-Datenbank angelegt hat, ermöglicht, mindestens ein Zugriffs-Zertifikat, welches das zweite Zugriffsrecht gewährt und eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen.

Die Nutzdaten-Datenbank gewährt dem dritten Nutzer nur dann den Zugriff auf den von dem zweiten Nutzer angelegten Datensatz, wenn der dritte Nutzer sowohl mit einem Eigner-Zertifikat für die Nutzdaten-Datenbank als auch mit einem ZugriffsZertifikat für den Zugriff auf den Datensatz verknüpft ist.

Dies kann vorteilhaft sein, da jeder Nutzer, auch auf der untersten Rechte-Ebene, volle Kontrolle über die von ihm erstellten Daten behält: Auch wenn ein anderer Nutzer, z.B. der Geschäftsführer oder eine dem Geschäftsführer untergeordnete, vertrauenswürdige Person (z.B. Bereichsleiter, Abteilungsleiter, Gruppenleiter, Sicherheitsbeauftragter, etc.) dem Nutzer zunächst einmal durch Ausstellung eines Eigner-Zertifikats erlauben muss, überhaupt auf eine Nutzdaten-Datenbank zugreifen und Daten in dieser anlegen zu können, so bedeutet dies nicht, dass dadurch der Geschäftsführer oder die besagte vertrauenswürdige Person damit automatisch auch Zugriff auf die von diesem Nutzer erstellten Daten hat. Hierdurch kann der Datenschutz auf allen Ebenen enorm erhöht werden, denn bei dem die Daten erzeugenden Nutzer kann es sich sowohl um einfache Mitarbeiter und Angestellte als auch um leitende Angestellte oder Geschäftsführer handeln. Beispielsweise kann das erste Eigner-Zertifikat für eine Nutzdaten-Datenbank von einem Geschäftsführer bzw. für einen Geschäftsführer ausgestellt werden, welcher dann die mit dem Eigner-Zertifikat verbundenen Rechte an Abteilungsleiter und einfache Angestellte weitergewähren kann. Dies bedeutet aber nicht automatisch, dass dieser Geschäftsführer auf die Datensätze, welche die Abteilungsleiter oder die Angestellten dann in dieser Nutzdaten-Datenbank anlegen, zugreifen und diese beispielsweise lesen und/oder ändern kann. Dies ist vielmehr nur möglich, wenn ein Nutzer, der einen bestimmten Datensatz anlegt, ein oder mehrere Zugriffsrechte bezüglich dieses bestimmten Datensatzes explizit an den Geschäftsführer vergibt.

In einem vorteilhaften Aspekt ist also ein hohes Maß an Datenschutz gewährleistet, da eine Prüfung zweier unabhängiger Parameter vor Zugriffsgewährung erfolgt (sowohl bezüglich der Eignerschaft der Datenbank als auch bezüglich der Zugriffsberechtigung auf den konkreten Datensatz). Gerade im Hinblick auf die unabhängige Tätigkeit unternehmensinterner Kontrollgremien wie etwa des Aufsichtsrats, der Qualitätskontrolle, des Betriebsrats oder des Betriebsarztes kann es wichtig sein, dass ein Vorgesetzter die von diesen Personen bzw. Stellen generierte Daten nicht automatisch lesen darf.

In einem weiteren Aspekt können Ausführungsformen der Erfindung sicherstellen, dass technische Administratoren, die z.B. die Hardware für die Nutzdaten-Datenbanken bereitstellen und administrieren, hinsichtlich der Zugriffsrechte auf die in diesen Datenbanken gespeicherten Informationen keine privilegierte Stellung und insbesondere keine privilegierten Zugriffsrechte besitzen. Damit kann das Problem, dass heute das technisch-administrative Personal oftmals unbeschränkten Zugang auf hoch sensible Daten beispielsweise der Geschäftsführung besitzt, vermieden werden.

In einem weiteren vorteilhaften Aspekt ermöglicht die Verwendung der ersten und zweiten Schnittstelle eine unabhängige Kontrolle und Rechtevergabe bezüglich zweier technischer Funktionalitäten, nämlich a) der Funktionalität des Zugriffs auf eine Datenbank und der Datensatzerzeugung in dieser und b) der Funktionalität des Zugriffs auf Datensätze innerhalb der Datenbank. Eine in hohem Maße flexible und feingranulare Zuweisung von Rechten wird somit ermöglicht, was angesichts komplexer und sich häufig ändernder Zuständigkeitsverhältnisse gerade in großen Konzernen von hohem Vorteil ist. Durch die dynamische Erzeugung dieser Rechtezuweisungen können starre Zuständigkeitsstrukturen vermieden werden. Der initiale Eigner einer Datenbank kann frei bestimmen, welchen anderen Nutzern er Eignerschafts-Rechte zuerkennen will, ohne hierbei in technischer Hinsicht an bestimmte Unternehmenshierarchien gebunden zu sein. In analoger Weise ist jeder Nutzer, der Daten erstellt hat, frei, beliebigen anderen Nutzern Zugriffsrechte auf diese Daten über die Zuweisung entsprechender Zugriffsrechte zu gewähren, ohne hierbei in technischer Hinsicht an bestimmte Unternehmenshierarchien gebunden zu sein und ohne dass übergeordnete Personen und/oder das technisch-administrative Personal automatisch Zugriff auf die erstellten Daten erhalten.

Nach Ausführungsformen umfasst das erste Zugriffsrecht ferner das Recht, Datensätze in der Nutzdaten-Datenbank anzulegen, denen es zugeordnet ist.

Nach Ausführungsformen umfasst das Erzeugen der dritten Berechtigungshierarchie:
- Bereitstellen einer dritten Schnittstelle, die es dem vierten Nutzer, der eine Kontrollfunktion ausübt, ermöglicht, mindestens ein Attributs-Zertifikat mit dem Nutzer-Zertifikat des dritten Nutzers zu verknüpfen, wobei ein Attribut-Zertifikat ein Zertifikat ist, das zumindest ein Attribut umfasst und jedem Nutzer, mit dem es verknüpft ist, das zumindest eine Attribut zuordnet, wobei durch die Zuordnung des zumindest einen Attributs das dritte Zugriffsrecht gewährt wird.

Die Nutzdaten-Datenbank gewährt dem dritten Nutzer den Zugriff auf den von dem zweiten Nutzer angelegten Datensatz nur dann, wenn der dritte Nutzer zudem mit dem Attribut-Zertifikat verknüpft ist.

Dies kann vorteilhaft sein, da so eine weitere Kontrollfunktion zur Zugriffskontrolle auf Datensätze implementiert und insbesondere durch Verwendung der dritten Schnittstelle eine unabhängige Kontrolle und Rechtevergabe ermöglicht wird. Gerade im Hinblick auf die unabhängige Tätigkeit unternehmensinterner Kontrollgremien wie etwa des Aufsichtsrats, der Qualitätskontrolle, des Betriebsrats, Sicherheitsbeauftragten oder des Betriebsarztes kann es vorteilhaft sein, dass diese Gremien durch eine entsprechende dritte Berechtigungshierarchie ein unabhängiges Kontrollinstrument zur Kontrolle von Datenzugriffen an die Hand gegeben bekommen.

Nach Ausführungsformen umfasst die Prüfung der Zugriffsberechtigung:
- Empfangen einer Zugriffsanfrage durch die Nutzdaten-Datenbank von dem dritten Nutzer;
- Aufbauen einer Datenbankverbindung für den dritten Nutzer zu der Nutzdaten-Datenbank nur dann, wenn die Nutzdaten-Datenbank feststellt, dass ein valides Eigner-Zertifikat der Nutzdaten-Datenbank mit dem dritten Nutzer verknüpft ist, wobei der Aufbau der Datenbankverbindung unabhängig davon erfolgt, welche Zugriffs-Zertifikate mit dem dritten Nutzer verknüpft sind;
- falls die Datenbankverbindung aufgebaut wird, Gewährung des Zugriffs auf den Datensatz des zweiten Nutzers nur dann, wenn die Nutzdaten-Datenbank feststellt, dass ein Zugriffs-Zertifikat mit dem dritten Nutzer verknüpft ist, wobei der Zugriff nur im Rahmen der in dem Zugriffs-Zertifikat spezifizierten Art des Zugriffs gewährt wird.

Dies kann vorteilhaft sein, da einem Nutzer, der keine Verknüpfung zu einem entsprechenden Eigner-Zertifikat besitzt, von vorneherein bereits der Verbindungsaufbau zu der Datenbank verwehrt wird. Somit kann auf einfache Weise global sichergestellt werden (z.B. durch Entzug bzw. Lösen der Verknüpfung mit dem Eigner-Zertifikat), dass ein bestimmter Nutzer auf keinerlei Daten einer bestimmten Nutzdaten-Datenbank mehr zugreifen kann, ohne dass hierfür ggf. eine große Zahl an Nutzern, die diesem Nutzer ein Zugriffsrecht für individuelle, von ihnen jeweils erstellte Daten eingeräumt haben, diesem einen Nutzer die Zugriffsrechte einzeln entziehen müssten. Durch Zuweisung oder Entziehung (z.B. Invalidierung oder Verweigerung einer erneuten Ausstellung nach dem Ablauf eines Gültigkeitszeitraums eines aktuellen Eigner-Zertifikats, wobei typische Gültigkeitszeiträume beispielsweise einige Stunden, Tage, Wochen oder Monate umfassen können) einer entsprechenden Verknüpfung kann also ein weitreichender, global gut kontrollierbarer Zugriffsschutz für sämtliche in einer Datenbank gespeicherte Daten bereitgestellt werden.

Nach Ausführungsformen umfasst das mindestens eine Zugriffs-Zertifikat ein oder mehrere der folgenden Zugriffs-Zertifikattypen:
- ein Lesezugriffs-Zertifikat, welches einem Nutzer einen lesenden Zugriff auf den Inhalt eines Datensatzes ermöglicht;
- ein Schreibzugriffs-Zertifikat, welches einem Nutzer einen modifizierenden Zugriff auf den Inhalt eines bereits existierenden Datensatzes ermöglicht;
- ein Indexzugriffs-Zertifikat, welches einem Nutzer Kenntnis der Existenz des Datensatzes in der Nutzdaten-Datenbank und einen lesenden Zugriff auf Metadaten des Datensatzes ermöglicht.

Beispielsweise ermöglicht ein Indexzugriffs-Zertifikat bzw. eine Verknüpfung mit diesem einem Nutzer, eine statistische Auswertung mehrerer Datensätze zu erhalten, etwa bezüglich der Frage, auf wie viele Datensätze einer Nutzdaten-Datenbank ein bestimmter Nutzer Lesezugriff oder Schreibzugriff besitzt oder wie viele Datensätze in deinem Nutzdatenfeld die Wörter "Max Mustermann" beinhalten.

Die Verwendung mehrerer unterschiedlicher Typen von Zugriffs-Zertifikaten für unterschiedliche Zugriffsarten und die individuelle Verknüpfung dieser Zertifikatstypen mit einzelnen Nutzern, um diesen den Zugriff auf die erstellten Daten zu ermöglichen, kann vorteilhaft sein, da dadurch eine besonders feingranulare Kontrolle des Zugriffs auf die Daten ermöglicht wird.

Nach Ausführungsformen beinhaltet die erste und/oder zweite Verknüpfung mit dem ersten Eigner-Zertifikat einen Delegierbarkeitsparameter, welchem entweder ein Datenwert "DELEGIERBAR" oder ein Datenwert "NICHT DELEGIERBAR" zugeordnet werden kann, wobei eine zur Erstellung der Verknüpfungen mit den Eigner-Zertifikaten verwendete Programmlogik so konfiguriert ist, dass
- ein Nutzer, der mit einem Eigner-Zertifikat für die Nutzdaten-Datenbank zugeordnet ist und welcher eine Verknüpfung mit dem Eigner-Zertifikat für einen anderen Nutzer für diese Nutzdaten-Datenbank erstellt, dem Delegierbarkeitsparameter der erstellten Verknüpfung unabhängig vom Delegierbarkeitsparameter seiner Verknüpfung mit dem Eigner-Zertifikat den Datenwert "NICHT DELEGIERBAR" zuordnen kann, dem Delegierbarkeitsparameter der erstellten Verknüpfung jedoch nur dann den Datenwert "DELEGIERBAR" zuordnen kann, wenn dem Delegierbarkeitsparameter seiner Verknüpfung mit dem Eigner-Zertifikats der Datenwert "DELEGIERBAR" zugeordnet ist; und
- ein Nutzer, welcher mit einem Eigner-Zertifikat für eine Nutzdaten-Datenbank verknüpft ist, wobei dem Delegierbarkeitsparameter der Verknüpfung der Wert "NICHT DELEGIERBAR" zugeordnet ist, keine weiteren Verknüpfungen mit dem Eigner-Zertifikat für andere Nutzer für diese Nutzdaten-Datenbank erstellen kann
Nach Ausführungsformen beinhaltet eine Verknüpfung mit einem Zugriffs-Zertifikat und/oder eine Verknüpfung mit einem Attribut-Zertifikat in analoger Wiese einen Delegierbarkeitsparameter.

Nach Ausführungsformen beinhaltet die Verknüpfung in Form eines Datenkonstrukts, welches einen bestimmten Nutzer mit einem Eigner-Zertifikat verknüpft oder welches eine Kette aus zwei oder mehr Nutzern mit dem Eigner-Zertifikat verknüpft, wobei die Nutzer die Kette beispielsweise selber sukzessive erweitert haben, den Delegierbarkeitsparameter. Ein solches Datenkonstrukt, im Folgenden auch als Eignerschaftsermächtigungskettenobjekt bezeichnet, kann z.B. in Form einer neuen Kopie erzeugt und in der ID-Datenbank gespeichert werden, sobald eine Kette aus Nutzern, die ihre Nutzer-Zertifikate mit einem Eigner-Zertifikat für eine Nutzdaten-Datenbank verknüpft haben, um ein Kettenglied (also z.B. ein weiteres Nutzer-Zertifikat) erweitert wird. Dem Delegierbarkeitsparameter kann entweder der Datenwert "DELEGIERBAR" oder der Datenwert "NICHT DELEGIERBAR" zugeordnet werden.

Nach Ausführungsformen können ein Eigner-Zertifikat oder eines oder mehrere der Nutzerzertifikate den Delegierbarkeitsparameter umfassen. Beispielsweise kann das Eigner-Zertifikat als Ausgangspunkt der Verknüpfung den Delegierbarkeitsparameter umfassen. Beispielsweise kann das Nutzer-Zertifikat des letzten Nutzers, für den die Verknüpfung erstellt wird, als Endpunkt der Verknüpfung den Delegierbarkeitsparameter umfassen. Beispielsweise kann ein anderes von der Verknüpfung als Zwischenglied umfasstes Nutzer-Zertifikat den Delegierbarkeitsparameter umfassen.

Dies kann vorteilhaft sein, da ein hoher Grad an Dynamik und Flexibilität im Hinblick auf die Vergabe der Zugriffsrechte ermöglicht wird: typischerweise wird einem bestimmten Nutzer, zum Beispiel dem Geschäftsführer ein Eigner-Zertifikat für eine bestimmte Nutzdaten-Datenbank zugeordnet. Dieses "erste/initiale" Eigner-Zertifikat hat beispielsweise den Delegierbarkeitsparameterwert "DELEGIERBAR". Dieser Nutzer kann nun über die erste Schnittstelle dieses erste Eigner-Zertifikat in identischer oder modifizierter Kopie mit einem oder mehreren weiteren Nutzern verknüpfen bzw. mit den weiteren Nutzern zuordneten Nutzer-Zertifikaten, sodass diese weiteren Nutzer im Hinblick auf die Nutzdaten-Datenbank ebenfalls Eigner-Rechte bekommen und beispielsweise Datensätze anlegen können. Dabei kann der Inhaber des ersten Eigner-Zertifikats entscheiden, ob die Verknüpfungen für diese Nutzdaten-Datenbank mit den weiteren Nutzern ebenfalls delegierbar sein sollen, diese anderen Nutzer also ebenfalls die Möglichkeit haben sollen, ihrerseits weiteren Nutzern Eigner-Rechte bezüglich der Nutzdaten-Datenbank auszustellen. Falls Verknüpfung für die ein oder mehreren weiteren Nutzer erstellt wird, welche so modifiziert ist, dass ihr der Delegierbarkeitsparameterwert "NICHT DELEGIERBAR" zugeordnet ist, können die weiteren Nutzer zwar eine Datenbankverbindung zu der Nutzdaten-Datenbank erstellen und dort Datensätze erzeugen, jedoch keine weiteren Verknüpfungen für weitere Nutzer bezüglich dieser Nutzdaten-Datenbank erstellen. Die Kette ausgehend von dem Eigner-Zertifikat endet also notwendigerweise mit Erstellung einer nicht weiter delegierbaren Verknüpfung. Natürlich ist es möglich, dass für einen bestimmten Nutzer von einem Datenbank-Eigner eine delegierbare Verknüpfung mit einem Eigner-Zertifikat ausgestellt wird und von einem anderen Datenbank-Eigner eine nicht-delegierbare Verknüpfung mit einem anderen Eigner-Zertifikat. In diesem Fall kann der Nutzer die Verknüpfung um Dritte erweiterten bzw. weitere Verknüpfungen mit dem Eigner-Zertifikat für Dritte ausstellen. Es wird jedoch vorzugsweise die chronologische Kette der Verknüpfungen erstellenden Nutzer gespeichert, zum Beispiel in Form von Ermächtigungsobjekten und/oder Logeinträgen, sodass der Pfad der Verantwortungskette dokumentiert ist. Vorzugsweise erfolgt die Speicherung dieser chronologischen Kette in einer speziellen Datenbank, im folgenden "ID-Datenbank" genannt. In analoger Weise kann der Delegierbarkeitsparameter innerhalb eines Zuweisungsobjekts, also z.B. eines Eignerschaftsermächtigungskettenobjekts, gespeichert sein und vorgeben, ob ein Nutzer weitere Zuweisungsobjekte (weitere Eignerschaftsermächtigungskettenobjekte) erstellen darf, um ein Eigner-Zertifikat mit anderen Nutzern zu verknüpfen.

In einem weiteren vorteilhaften Aspekt wird jedem Datenbank-Eigner damit die Möglichkeit gegeben, frei zu entscheiden, ob er Verantwortung und Arbeit bezüglich der Zugriffsrechtsverwaltung einer Datenbank an eine bestimmte Person so weitreichend delegieren möchte, dass diese ihrerseits wiederum diese Tätigkeit delegieren kann, oder ob nur ein einfaches Eigner-Recht zum Erstellen von eigenen Datensätzen in der Nutzdaten-Datenbank erteilt werden soll.

Nach Ausführungsformen erfolgt die Verknüpfung des zumindest einen Zugriffs-Zertifikat mit dem erzeugten Datensatz so, dass das zumindest eine Zugriffs-Zertifikat desjenigen Nutzers, welcher den Datensatz angelegt hat, als Bestandteil des Datensatzes in einem eigenen Feld der Nutzdaten-Datenbank gespeichert wird.

Dies kann vorteilhaft sein, da das Zugriffs-Zertifikat getrennt von den übrigen Nutzdaten indiziert werden kann, sodass über den Index eine schnelle Suche nach Datensätzen, die ein bestimmter Nutzer erstellt hat, möglich ist.

Nach Ausführungsformen erfolgt eine Verknüpfung des zumindest einen Attribut-Zertifikat mit dem erzeugten Datensatz so, dass das zumindest eine Attribut-Zertifikat als Bestandteil des Datensatzes in einem eigenen Feld der Nutzdaten-Datenbank gespeichert wird. Beispielsweise wird eine logische mit zumindest einem ebenfalls in den Datensatz gespeicherten Zugriffs-Zertifikat erstellt. Die logische Verknüpfung kann beispielsweise festlegen, dass eine Verknüpfung mit beiden Zertifikaten, d.h. Zugriffs-Zertifikat und Attribut-Zertifikat, als Voraussetzung für einen Zugriff auf den Datensatz notwendig ist. Nach Ausführungsformen wird das zumindest eine Attribut-Zertifikat von dem Nutzer, welcher den Datensatz angelegt hat, als Bestandteil des Datensatzes in einem eigenen Feld der Nutzdaten-Datenbank gespeichert.

Vorzugsweise handelt es sich bei den in den entsprechenden Feldern des Datensatz gespeicherten Zugriffs-Zertifikaten und/oder Attribut-Zertifikaten um reine Zahlenwerte, nicht um komplexe x509 Zertifikate. Metadaten bezüglich der Gültigkeit und andere Aspekte können getrennt von dem eigentlichen Zugriffs-Zertifikat und/oder Attribut-Zertifikat in der ID-Datenbank gespeichert sein. Vorzugsweise enthält jeder von einem bestimmten Nutzer in einer Nutzdaten-Datenbank erstellte Datensatz in seinen entsprechenden Feldern sämtliche Zugriffs-Zertifikate des diesen Datensatz erstellenden Nutzers. Wird beispielsweise ein Datensatz DS von Nutzer U1 erstellt und der Nutzer-U1 hat gemäß dem Inhalt der ID-Datenbank genau 3 Typen von Zertifikaten (ein Lesezugriffs-Zertifikat "U1.Z-Zert[R]", ein Schreibzugriffs-Zertifikat "U1.Z-Zert[W]" und ein Indexzugriffs-Zertifikat "U1.Z-Zert[S]"), so werden Kopien genau dieser 3 Zugriffs-Zertifikate im Zuge der Speicherung des Datensatzes DS aus der ID-Datenbank erstellt und die in die entsprechenden Felder des Datensatzes DS gespeichert.

Wenn nun der Nutzer-U1 einem anderen Nutzer U2 Leserechte bezüglich des Datensatzes DS einräumt, bedeutet dies, dass in der ID-Datenbank eine Verknüpfung bzw. Zuordnung dieses Lesezugriffs-Zertifikat "U1.Z-Zert[R]" des Nutzers U1 und des Nutzer-Zertifikats des Nutzers U2 gespeichert wird. Falls der Nutzer U2 nun zu einem späteren Zeitpunkt auf den Datensatz DS zugreifen will, sendet die Nutzdaten-Datenbank, die den Datensatz DS beinhaltet, in Antwort auf die Zugriffsanfrage des Nutzers U2 automatisch eine Berechtigungsanfrage an die ID-Datenbank zusammen mit den in dem Datensatz DS gespeicherten Zugriffsrechten des Erstellers U1. Die ID-Datenbank prüft daraufhin, ob ein dem Nutzer U2 zugeordnetes Nutzer-Zertifikat in der ID-Datenbank mit ein oder mehreren der in dem Datensatz DS gespeicherten Zugriffsrechte des Erstellers U1 verknüpft gespeichert ist. Nur falls dies der Fall ist, und falls der Nutzer U2 außerdem Eigner der Nutzdaten-Datenbank ist, darf er auf den Datensatz zugreifen.

Nach Ausführungsformen umfasst das zumindest eine Zugriffs-Zertifikat, dass vorzugsweise als Bestandteil des erstellten Datensatzes gespeichert ist, mehrere Zugriffs-Zertifikate für jeweils andere Zugriffsarten. Die mehreren Zugriffs-Zertifikate umfassen zum Beispiel ein Schreibzugriffs-Zertifikat Z.Zert_U2[W] des erstellenden Nutzers, und/oder ein Lesezugriffs-Zertifikat Z.Zert_U2[R] des erstellenden Nutzers und/oder ein Indexzugriffs-Zertifikat Z.Zert_U2[S] des erstellenden Nutzers.

Das Zugriffs-Verwaltungssystem erzeugt automatisch für jede der Zugriffsarten eine Indexstruktur aus den Zugriffs-Zertifikaten sämtlicher Datensätze, die diese Zugriffsart spezifiziert. So kann zum Beispiel ein erster Index für die Schreibzugriffs-Zertifikate, ein zweiter Index für die Lesezugriffs-Zertifikate und ein dritter Index für die Indexzugriffs-Zertifikate sowie ein weiterer Index für die Nutzdaten selbst erstellt werden. In Antwort auf eine Datenbankfrage eines Nutzers, die auf einen oder mehrere der für die Nutzdaten-Datenbank erstellten Indices der Zugriffs-Zertifikate zugreift, prüft das Zugriffs-Verwaltungssystem, ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist. Diese Prüfung kann insbesondere durch die Nutzdaten-Datenbank in Interoperation mit der ID-Datenbank und gegebenenfalls weiteren Modulen, zum Beispiel dem ID-Management-Modul, erfolgen. Die Nutzdaten-Datenbank ermöglicht dem anfragenden Nutzer die Verwendung der ein oder mehreren Indices zur Ausführung der Datenbankabfrage nur dann, wenn dem anfragenden Nutzer das Indexzugriffs-Zertifikat zugewiesen ist. Ferner kann das Zugriffs-Verwaltungssystem in analoger Weise ein oder mehrere weiteren Indices für ein oder mehrere Attribut-Zertifikate erzeugen.

Dies kann vorteilhaft sein, da über den Index eine schnelle Abfrage einer Zugriffsberechtigungsstatistik über die Datensätze einer Datenbank im Hinblick auf mehrere verschiedene Nutzer durchgeführt werden kann. Aus dieser Abfrage geht dann zum Beispiel hervor, welche der bei dem Zugriffs-Verwaltungssystem registrierten Nutzer im Hinblick auf welche Datensätze zum Lesen, Schreiben und oder Indexzugriff berechtigt ist. Allerdings wird über eine Anfrage, die durch das Indexzugriffs-Zertifikat ermöglicht wird, nur eine statistische Auskunft über mehrere Datensätze gegeben, ein lesender oder schreibenden Zugriff auf die Nutzdaten der Datensätze selbst ist in den Rechten, die einen Indexzugriffs-Zertifikat gewährt, nicht umfasst.

Nach Ausführungsformen wird das Verfahren von einem Zugriffs-Verwaltungssystem, welches eine oder mehrere Nutzdaten-Datenbanken sowie eine ID-Datenbank umfasst, ausgeführt, wobei die Erstellung weiterer Verknüpfungen mit Zugriffs-Zertifikaten, Eigner-Zertifikaten und/oder Attribut-Zertifikaten für bestimmte Nutzer vorzugsweise in Interoperation mit menschlichen Nutzern erfolgt. Beispielsweise kann das Zugriffs-Verwaltungssystem eine grafische Benutzeroberfläche (GUI) bereitstellen, welche es den Nutzern eines Unternehmens bzw. einer sonstigen Organisation ermöglicht, weitere Verknüpfungen mit einem Eigner-Zertifikat einer bestimmten Nutzdaten-Datenbank für andere, manuell ausgewählte Nutzer zu erstellen, sofern der ausstellenden Nutzer selbst mit dem entsprechenden Eigner-Zertifikat in der ID-Datenbank verknüpft ist. Zusätzlich kann es diese Benutzeroberfläche dem Nutzer, der einen bestimmten Datensatz erstellt hat, ermöglichen, ein oder mehreren anderen manuell über die GUI ausgewählten Nutzern, ein oder mehrere ausgewählte Zugriffsrechte auf diesen Datensatz einzuräumen. Beispielsweise kann die GUI mehrere Personen, die der Organisation angehören, in Form einer auswählbaren Personenliste grafisch repräsentieren, sodass ein Nutzer der GUI durch Auswahl von ein oder mehreren Personen aus dieser Personenliste die Empfänger der einzuräumenden Eigner-und Zugriffsrechte und/oder Attribute spezifizieren kann. Weitere auswählbare GUI Elemente, zum Beispiel Radio-Buttons oder Check-Boxes können es dem Nutzer der GUI ermöglichen, durch Auswahl dieser Elemente den Delegierbarkeitsparameter der erstellten Verknüpfung zu bestimmen (delegierbar oder nicht-delegierbar), sofern die Berechtigung des Nutzers hierfür ausreichend ist. Die GUI kann ferner über auswählbare GUI Elemente verfügen, die es einem Nutzer ermöglichen, Zugriffsrechte, Eignerrechte und/oder Attribute, die er anderen Nutzern eingeräumt hat, auch wieder zu entziehen. Die GUI ist so konfiguriert, dass sie automatisch im Hintergrund neue Zertifikate und/oder Verknüpfungen von Zertifikaten gemäß den Eingaben des Nutzers über die GUI erstellt oder invalidiert und den Inhalt der ID-Datenbank entsprechend aktualisiert.

Nach Ausführungsformen handelt es sich bei den ein oder mehreren Nutzdaten-Datenbanken und der ID-Datenbank jeweils um eine NoSQL-Datenbank. Vorzugsweise handelt es sich bei den NoSQL-Datenbanken jeweils um eine sogenannte "strukturlose" Datenbank, die eine freie Definition der Art und Anzahl der Datenfelder unterstützt. Vorzugsweise ist die NoSQL-Datenbank so konfiguriert, dass der Inhalt sämtlicher Datenfelder eines jeden neuen Datensatzes automatisch indexiert wird und dass Änderungen des Inhalts der Datenbank in Form neuer Versionen gespeichert werden ("versionierte Datenbank"). Vorzugsweise wird die Erzeugung neuer Zugriffs-, Eigner- und/oder Attribut-Zertifikate sowie die chronologische Sequenz der Nutzer, die anderen Nutzern jeweils diese Zertifikate zugewiesen bzw. diese mit den Zertifikaten verknüpft haben, in einem Log (z.B. Log-Datei) der ID-Datenbank gespeichert.

Nach Ausführungsformen handelt es sich bei dem Zugriffs-Verwaltungssystem um ein Datenbanksystem. Es ist jedoch auch möglich, dass andere Systeme die zur Speicherung von Daten ausgelegt sind, verwendet werden, z.B. Mikrocontroller, in deren Speicher die Zertifikate und Ermächtigungskettenobjekte sowie die hier beschriebene Programmlogik implementiert sein kann. Ferner kann es sich bei dem Speichersystem, in welchem die Zertifikate gespeichert werden, auch um ein anderes Speichersystem als eine ID-Datenbank handeln, z.B. einen Mikrocontroller.

Nach Ausführungsformen handelt es sich bei dem Zugriffs-Verwaltungssystem, das die ein oder mehrere Nutzdaten-Datenbanken und die ID-Datenbank umfasst, um ein NoSQL-Datenbanksystem.

Nach Ausführungsformen ist dem dritten Nutzer ein erstes Nutzer-Zertifikat zugeordnet. Das erste Nutzer-Zertifikat kann zum Beispiel ein Root-Zertifikat sein, das von einer Zertifizierungsstelle (certifying authority - CA) herausgegeben wird. Das erste Nutzer-Zertifikat ist in eine von einer Zertifizierungsstelle herausgegebene erste Zertifikatskette prüfbar eingeordnet, es ist also beispielsweise bis zum Root-Zertifikat der Zertifizierungsstelle prüfbar. Dies kann vorteilhaft sein, da Zertifizierungsstellen als unabhängige Vertrauensgaranten auf breiter Basis bereits akzeptiert sind und bereits von vielen bestehenden technischen Systemen zur Prüfung der Authentizität bestimmter Nutzer und Nutzeraktionen verwendet werden.

Nach Ausführungsformen wird die zweite Verknüpfung mit dem ersten Eigner-Zertifikat so erstellt, dass dieses in die erste Zertifikatskette eingeordnet ist und durch das erste Nutzer-Zertifikat prüfbar ist. Beispielsweise wird die zweite Verknüpfung mit dem ersten Eigner-Zertifikat von dem Zugriffs-Verwaltungssystem durch den privaten Schlüssel des ersten Nutzer-Zertifikats signiert. In analoger Weise kann der erste Nutzer auch Verknüpfungen mit Zugriffs-Zertifikaten, die anderen Nutzern Zugriff auf die von dem ersten Nutzer erstellte Datensätze einräumen, mit dem privaten Schlüssel seines Nutzer-Zertifikats, hier also des ersten Nutzer-Zertifikats, signieren. Nach weiteren Ausführungsformen können die Signaturen auch mit einem privaten Schlüssel dem Zugriffs-Verwaltungssystem bzw. der ID-Datenbank zugeordneten privaten Schlüssel erzeugt werden.

Nach Ausführungsformen ist dem zweiten Nutzer ein zweites Nutzer-Zertifikat zugeordnet, wobei das zweite Nutzer-Zertifikat in eine von einer Zertifizierungsstelle herausgegebene zweite Zertifikatskette prüfbar eingeordnet ist.

Nach Ausführungsformen umfasst das Verfahren ein Erstellen einer dritten Verknüpfung eines fünften Nutzers mit dem ersten Eigner-Zertifikat durch den zweiten Nutzer, um dem fünften Nutzer zu ermöglichen, eine Kommunikationsverbindung zu der Nutzdaten-Datenbank aufzubauen zur Übertragung von ein oder mehreren Anfragen mit ein oder mehreren Datenbankoperationen an die Nutzdaten-Datenbank.

Nach Ausführungsformen ermöglicht die dritte Verknüpfung dem fünften Nutzer ferner Datensätze in der Nutzdaten-Datenbank anzulegen.

Nach Ausführungsformen beinhaltet die zumindest eine Verknüpfung mit dem zumindest einen Zugriffs-Zertifikat einen Delegierbarkeitsparameter, welchem entweder der Datenwert "DELEGIERBAR" oder der Datenwert "NICHT DELEGIERBAR" zugeordnet werden kann. Eine zur Erstellung jeder der Verknüpfungen mit den Zugriffs-Zertifikaten verwendete Programmlogik ist so konfiguriert, dass
- ein Nutzer, der mit einem Zugriffs-Zertifikat für einen Datensatz in der Nutzdaten-Datenbank verknüpft ist und welcher eine Verknüpfung mit dem Zugriffs-Zertifikat für einen anderen Nutzer für diesen Datensatz erstellt, dem Delegierbarkeitsparameter der erstellten Verknüpfung unabhängig vom Delegierbarkeitsparameter seiner Verknüpfung mit dem Zugriffs-Zertifikat den Datenwert "NICHT DELEGIERBAR" zuordnen kann, dem Delegierbarkeitsparameter der erstellten Verknüpfung jedoch nur dann den Datenwert "DELEGIERBAR" zuordnen kann, wenn dem Delegierbarkeitsparameter seiner Verknüpfung mit dem Zugriffs-Zertifikat der Datenwert "DELEGIERBAR" zugeordnet ist; und
- ein Nutzer, welcher mit einem Zugriffs-Zertifikat für einen Datensatz verknüpft ist, wobei dem Delegierbarkeitsparameter der Datenwert "NICHT DELEGIERBAR" zugeordnet ist, keine weiteren Verknüpfungen mit dem Zugriffs-Zertifikat für andere Nutzer für diesen Datensatz erstellen kann.

Nach Ausführungsformen kann der Delegierbarkeitsparameter auch als Bestandteil eines Datenkonstrukts gespeichert sein, welches einen Nutzer oder eine Kette von Nutzern mit einem bestimmten Zugriffs-Zertifikat verknüpft, wobei sich die Nutzer ihre Nutzer-Zertifikate beispielsweise selbst sukzessive mit diesem Zugriffs-Zertifikat verknüpft haben. Im Folgenden wird ein solches Datenkonstrukt auch als Zugriffsermächtigungskettenobjekt bezeichnet. Wie bereits oben für das Eignerschaftsermächtigungskettenobjekt dargestellt kann ein Nutzer in Abhängigkeit von dem Datenwert, welcher dem Delegierbarkeitsparameters des Zugriffsermächtigungskettenobjekts zugeordnet ist, das diesen Nutzer mit einem bestimmten Zugriff-Zertifikat verknüpft, eine Kopie dieses Zugriffsermächtigungskettenobjekts erstellen, die ein zusätzliches Nutzer-Zertifikat eines weiteren Nutzers enthält, welchem ein zweites Zugriffsrecht zugewiesen werden soll, oder nicht.

Auch die Zugriffs-Zertifikate oder die Zugriffsermächtigungskettenobjekte können also, wie bereits für die Eigner-Zertifikate beschrieben, als delegierbare Zugriffs-Zertifikate oder als nicht-delegierbare Zugriffs-Zertifikate erstellt und mit anderen Nutzern verknüpft werden bzw. die Verknüpfung selbst, also die Zugriffsermächtigungskettenobjekte, kann delegierbar oder nicht-delegierbar sein. So kann jeder Ersteller eines Datensatzes und jeder Inhaber eines delegierbaren Zugriffs-Zertifikats eines anderen Nutzers, der einen Datensatz erstellt hat, flexibel selbst entscheiden, ob und inwieweit er die Zugriffs-Verantwortung und damit zusammenhängende Pflichten und Tätigkeiten an andere Nutzer überträgt.

Dies kann vorteilhaft sein, da ein hoher Grad an Flexibilität und Komplexität der Zugangsgewährung ermöglicht wird.

Nach Ausführungsformen beinhaltet die zumindest eine Verknüpfung mit dem zumindest einen Attribut-Zertifikat einen Delegierbarkeitsparameter, welchem entweder der Datenwert "DELEGIERBAR" oder der Datenwert "NICHT DELEGIERBAR" zugeordnet werden kann. Eine zur Erstellung jeder der Verknüpfungen mit dem Attribut-Zertifikat verwendete Programmlogik ist so konfiguriert, dass
- ein Nutzer, der mit einem Attribut-Zertifikat verknüpft ist und welcher eine Verknüpfung mit dem Attribut-Zertifikat für einen anderen Nutzer erstellt, dem Delegierbarkeitsparameter der erstellten Verknüpfung unabhängig vom Delegierbarkeitsparameter seiner Verknüpfung mit dem Attribut-Zertifikat den Datenwert "NICHT DELEGIERBAR" zuordnen kann, dem Delegierbarkeitsparameter der erstellten Verknüpfung jedoch nur dann den Datenwert "DELEGIERBAR" zuordnen kann, wenn dem Delegierbarkeitsparameter seiner Verknüpfung mit dem Attribut-Zertifikat der Datenwert "DELEGIERBAR" zugeordnet ist; und
- ein Nutzer, welcher mit einem Attribut-Zertifikat für einen Datensatz verknüpft ist, wobei dem Delegierbarkeitsparameter der Datenwert "NICHT DELEGIERBAR" zugeordnet ist, keine weiteren Verknüpfungen mit dem Attribut-Zertifikat für andere Nutzer erstellen kann.

Nach Ausführungsformen kann der Delegierbarkeitsparameter auch als Bestandteil eines Datenkonstrukts gespeichert sein, welches einen Nutzer oder eine Kette von Nutzern mit einem bestimmten Attribut-Zertifikat verknüpft, wobei sich die Nutzer ihre Nutzer-Zertifikate beispielsweise selbst sukzessive mit diesem Attribut-Zertifikat verknüpft haben. Im Folgenden wird ein solches Datenkonstrukt auch als Attributzuweisungskettenobjekt bezeichnet. Wie bereits oben für das Eignerschaftsermächtigungskettenobjekt dargestellt kann ein Nutzer in Abhängigkeit von dem Datenwert, welcher dem Delegierbarkeitsparameters des Attributzuweisungskettenobjekts zugeordnet ist, das diesen Nutzer mit einem bestimmten Attribut-Zertifikat verknüpft, eine Kopie dieses Attributzuweisungskettenobjekts erstellen, die ein zusätzliches Nutzer-Zertifikat eines weiteren Nutzers enthält, welchem ein drittes Zugriffsrecht zugewiesen werden soll, oder nicht.

Auch Attribut-Zertifikat oder ein Attributzuweisungskettenobjekt kann also, wie bereits für die Eigner-Zertifikate beschrieben, als delegierbares Attribut-Zertifikat oder als nicht-delegierbares Attribut-Zertifikat erstellt und mit anderen Nutzern verknüpft werden bzw. die Verknüpfung selbst, also das Attributzuweisungskettenobjekt, kann delegierbar oder nicht-delegierbar sein. So kann jeder Aussteller eines Attribut-Zertifikats und jeder Inhaber eines delegierbaren Attribut-Zertifikats flexibel selbst entscheiden, ob und inwieweit er die Verantwortung für eine Zuweisung des Attributs und damit zusammenhängende Pflichten und Tätigkeiten an andere Nutzer überträgt.

Dies kann vorteilhaft sein, da ein hoher Grad an Flexibilität und Komplexität der Zugangsgewährung ermöglicht wird.

Nach Ausführungsformen sind in einer ID-Datenbank eine Mehrzahl von Nutzer-Zertifikaten, eine Mehrzahl von Eigner-Zertifikaten, und/oder eine Mehrzahl von Zugriffs-Zertifikaten und/oder zumindest ein Attributs-Zertifikat gespeichert. Das Verfahren umfasst die Speicherung von Eignerschaftsermächtigungskettenobjekten und/oder Zugriffsermächtigungskettenobjekten und/oder zumindest eines Attributszuweisungskettenobjekt in der ID-Datenbank.

Jedes Eignerschaftsermächtigungskettenobjekt ist ein Datenkonstrukt, welches eines der Eigner-Zertifikate und ein oder mehrere der Nutzer-Zertifikate beinhaltet (und dadurch einander zuweist). Die Reihung der Nutzer-Zertifikate in dem Eignerschaftsermächtigungskettenobjekt gibt die Sequenz der Nutzer wieder, die dieses Eigner-Zertifikat mit jeweils anderen Nutzern verknüpft haben, deren Nutzer-Zertifikat in dem Eignerschaftsermächtigungskettenobjekt enthalten ist. Die erste Berechtigungshierarchie umfasst eines der Eignerschaftsermächtigungskettenobjekte und dessen Reihung von Nutzer-Zertifikate gibt die hierarchische Beziehungsstruktur der von der ersten Berechtigungshierarchie umfassten Nutzer wieder.

Jedes Zugriffsermächtigungskettenobjekt ist ein Datenobjekt, welches eines der Zugriffs-Zertifikate und ein oder mehrere der Nutzer-Zertifikate beinhaltet (und dadurch einander zuweist). Die Reihung der Nutzer-Zertifikate in dem Zugriffsermächtigungskettenobjekt gibt die Sequenz der Nutzer, die dieses Zugriffs-Zertifikat für jeweils andere Nutzer, deren Nutzer-Zertifikat in dem Zugriffsermächtigungskettenobjekt enthalten ist, ausgestellt haben, wieder. Die zweite Berechtigungshierarchie umfasst eines der Zugriffsermächtigungskettenobjekte.

Jedes Attributszuweisungskettenobjekt ist ein Datenobjekt, welches das zumindest eine Attributs-Zertifikate und ein oder mehrere der Nutzer-Zertifikate beinhaltet (und dadurch einander zuweist). Die Reihung der Nutzer-Zertifikate in dem Attributszuweisungskettenobjekt gibt die Sequenz der Nutzer, die dieses Zugriffs-Zertifikat für jeweils andere Nutzer, deren Nutzer-Zertifikat in dem Attributszuweisungskettenobjekt enthalten ist, erstellt haben, wieder. Die dritte Berechtigungshierarchie umfasst das zumindest eine Attributszuweisungskettenobjekt.

Dies kann vorteilhaft sein, da im Falle eines von einem bestimmten Nutzer verursachten Fehlers, wie zum Beispiel der Löschung eines für mehrere Nutzer wichtigen Datensatzes, anhand der Zugriffsermächtigungskettenobjekte und/oder Eignerschaftsermächtigungskettenobjekte und/oder Attributzuweisungskettenobjekt sofort ersichtlich ist, wer diesem Nutzer die entsprechenden Rechte eingeräumt hat und damit eventuell mitverantwortlich für dessen Fehler ist. Vorzugsweise werden die besagten Ermächtigungskettenobjekte oder zumindest deren Inhalt regelmäßig oder zumindest bei jeder Änderung oder Aktualisierung in eine Logdatei des Zugriffsverwaltungs-Systems geschrieben, sodass die Kette der Verantwortlichkeit auch für jeden denkbaren Zeitpunkt in der Vergangenheit dokumentiert ist und rekonstruiert werden kann.

Nach Ausführungsformen sind die Nutzdaten-Datenbanken frei von Zugriffsermächtigungskettenobjekten und beinhalten für jeden Datensatz nur die Zugriffs-Zertifikate, die dem Nutzer, welcher diesen Datensetz angelegt hat, Zugriff auf diesen Datensatz gewähren.

Die Verknüpfung dieser Zugriffs-Rechte des Datensatzerzeugers mit ein oder mehreren anderen Nutzern um diesen Zugriff auf den Datensatz zu gewähren ist nicht in der Nutzdaten-Datenbank gespeichert, sondern in der ID-Datenbank. Umgekehrt enthält die ID-Datenbank keine Referenz auf einzelne Datensätze der Nutzdaten-Datenbänke. Dies kann vorteilhaft sein, da die Größe und Komplexität der einzelnen Datensätze der Nutzdaten-Datenbank begrenzt und logisch von der Verwaltung der Zugriffsrechte weitgehend entkoppelt wird. Die Größe der Datensätze wird also auch dadurch begrenzt, dass nicht die komplette Kette der Berechtigungsübertragungen als Bestandteil der Datensätze gespeichert werden. Insbesondere bei einer Mehrzahl kleiner Datensätze mit identischer Berechtigungsstruktur kann dies den von der Datenbank benötigten Speicherplatz erheblich reduzieren.

Nach Ausführungsformen sind die Nutzdaten-Datenbanken frei von Attributzuweisungskettenobjekten und beinhalten für ein oder mehrere Datensätze neben den Zugriffs-Zertifikaten ein oder mehrere Attribut-Zertifikate.

Nach Ausführungsformen umfasst das Verfahren ferner:
- Empfang einer Zugriffsanfrage des dritten Nutzers durch die Nutzdaten-Datenbank, wobei in der Zugriffsanfrage der dritte Nutzer Zugriff auf einen Datensatz, den der zweite Nutzer angelegt hat, anfragt,
- Ermitteln der Zugriffs-Zertifikate des zweiten Nutzers, der in der Nutzdaten-Datenbank als Bestandteil des einen Datensatzes gespeichert ist, durch die Nutzdaten-Datenbank,
- Senden des ersten Nutzer-Zertifikats, das dem anfragenden Nutzer zugeordnet ist, und der ermittelten Zugriffs-Zertifikate, von der Nutzdaten-Datenbank an die ID-Datenbank,
- in Antwort auf den Empfang des ersten Nutzer-Zertifikats und der ermittelten Zugriffs-Zertifikate, Erzeugen eines Berechtigungsnachweises durch die ID-Datenbank, wobei der Berechtigungsnachweis angibt, ob der dritte Nutzer mit einem Eigner-Zertifikat der Nutzdaten-Datenbank durch zumindest eines der Eignerschaftsermächtigungskettenobjekte verknüpft ist und ob der dritte Nutzer dem einen Datensatz durch zumindest eines der Zugriffsermächtigungskettenobjekte zugewiesen ist,
- Übermitteln des Berechtigungsnachweises von der ID-Datenbank an die Nutzdaten-Datenbank,
- Prüfen, durch die Nutzdaten-Datenbank, anhand des Berechtigungsnachweises, ob der dritten Nutzer mit einem Eigner-Zertifikat der Nutzdaten-Datenbank verknüpft ist und ob und welche Zugriffs-Zertifikate dem dritten Nutzer in Bezug auf den einen Datensatz zugewiesen sind,
- wobei die Nutzdaten-Datenbank dazu konfiguriert ist, dem dritten Nutzer einen Aufbau einer Datenbankverbindung nur dann zu gewähren, wenn dieser mit einem Eigner-Zertifikat der Nutzdaten-Datenbank verknüpft ist und dem dritten Nutzer Zugriff auf den einen Datensatz nur in dem Umfang zu gewähren, welche dem dritten Nutzer durch die diesem zugewiesenen Zugriffs-Zertifikate einräumen.

Nach Ausführungsformen beinhaltet die ID-Datenbank einen privaten Signierschlüssel. Die Nutzdaten-Datenbank beinhaltet einen öffentlichen Signaturprüfschlüssel, welcher zur Prüfung der mit dem Signierschlüssel erstellten Signaturen ausgebildet ist. Das Verfahren umfasst die Signierung des Berechtigungsnachweises (oder mehrerer für einen Nutzer ausgestellten Berechtigungsnachweise) durch die ID-Datenbank mit dem Signierschlüssel, wobei der Berechtigungsnachweis in signierter Form an die Nutzdaten-Datenbank übermittelt wird. Die Nutzdaten-Datenbank prüft mittels des Signaturprüfschlüssels, ob die Signatur des Berechtigungsnachweises valide ist, wobei der Aufbau der Datenbankverbindung und der Datensatzzugriff nur dann gestattet wird, wenn die Signatur valide ist.

Dies kann vorteilhaft sein, da es nicht erforderlich ist, einzelne Nutzdaten-Datenbanken mit Programlogik zur Zertifikatskettenprüfung auszustatten. Ganz allgemein kann durch das beschriebene Verfahren bzw. die beschriebene Datenbankstruktur eine weitgehende Trennung der Datenhaltung (in den Nutzdaten-Datenbanken) und der Verwaltung von Zugriffsrechten (in der ID-Datenbank) erzielt werden. Die ID-Datenbank enthält und/oder ist operativ gekoppelt an ein oder mehrere Programmmodule zum Beispiel zur Zertifikatskettenprüfung (zum Beispiel von Nutzer-Zertifikaten bis hin zum Root-Zertifikat von der das Nutzer-Zertifikat ausstellenden Zertifizierungsstelle), zur Speicherung von Änderungen der Zuweisungen von Zertifikaten und Nutzern in einer Log-Datei und in Ermächtigungskettenobjekten sowie zur dynamischen Erstellung von signierten Berechtigungsnachweisen unter Berücksichtigung der in den Ermächtigungskettenobjekten dokumentierten Chronologie der Übertragung von Rechten. Die einzelnen Nutzdaten-Datenbanken müssen dahingegen nur über Mittel verfügen zur Prüfung, ob für die Nutzdaten-Datenbank selbst bzw. für die darin enthaltenen Datensätze entsprechende Berechtigungen vorliegen oder an diese operativ gekoppelt sind, wobei diese Mittel gegebenenfalls Mittel zur Signaturprüfung umfassen.

Nach Ausführungsformen führt die ID-Datenbank im Zuge der Erzeugung des Berechtigungsnachweises, der eines der Eigner-Zertifikate und/oder Eignerschaftsermächtigungskettenobjekte beinhaltet, eine Zertifikatskettenprüfung durch. Dies geschieht, um festzustellen, ob dieses Eigner-Zertifikat prüfbar in eine Zertifikatskette mit dem oder den Nutzer-Zertifikaten eingebunden ist, welche mit diesem Eigner-Zertifikat in einem der Eignerschaftsermächtigungskettenobjekte verknüpft sind. Die ID-Datenbank signiert den Berechtigungsnachweises nur im Falle der Feststellung einer erfolgreichen Einbindung in die Zertifikatskette des Eigner-Zertifikat. Diese Zertifikatskettenprüfung kann also insbesondere entlang der Zertifikatskette der Zertifizierungsstelle, die das Nutzer-Zertifikat als Root-Zertifikat herausgegeben hat, erfolgen.

Zusätzlich oder alternativ dazu führt die ID-Datenbank im Zuge der Erzeugung eines Berechtigungsnachweises, der ein oder mehrere Zugriffs-Zertifikate eines Nutzers zum Zugriff auf von ihm erstellte Datensätze und/oder Zugriffsermächtigungskettenobjekte beinhaltet, eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist. Die ID-Datenbank signiert den Berechtigungsnachweis nur im Falle der Feststellung einer erfolgreichen Einbindung.

Nach Ausführungsformen verwendet der zweite Nutzer, der den Datensatz angelegt hat, oder durch einen fünften Nutzer, der durch ein Zugriffsermächtigungskettenobjekt mit einem oder mehreren Zugriffszertifikaten des Datenbank-Nutzers verknüpft ist, um ein weiteres Zugriffsberechtigungskettenobjekt anzulegen. In diesem weiteren Zugriffs-Zertifikat werden ein oder mehrere Zugriffs-Zertifikate desjenigen, der den Datensatz angelegt hat, also des zweiten Nutzers, einem sechsten Nutzer zugewiesen. Die Nutzdaten-Datenbank ist dazu konfiguriert, vor dem Gewähren des Zugriffs auf den von dem zweiten Nutzer erzeugten Datensatz durch den sechsten Nutzer zu prüfen, ob dem sechsten Nutzer ein oder mehrere dieser Zugriffs-Zertifikate zugewiesen sind.

Nach einer Ausführungsform sind jedem der Datensätze in der Nutzdaten-Datenbank ein oder mehrere Zugriffs-Zertifikate des den Datensatz erstellenden Nutzers zugeordnet.

Den Eigner-Zertifikaten in der ID-Datenbank jeweils ein oder mehrere Nutzer-Zertifikate so zugeordnet sind, dass die chronologische Sequenz von Nutzern, die sich Eignerrechte der Nutzdaten-Datenbank eingeräumt haben, jeweils in Form einer Hierarchie repräsentiert ist. Diese Zuordnung kann z.B. mittels Eignerschaftsermächtigungskettenobjekten erfolgen.

Den Zugriffs-Zertifikaten in der ID-Datenbank sind jeweils ein oder mehrere Nutzer-Zertifikate so zugeordnet, dass die chronologische Sequenz von Nutzern, die sich ein oder mehrere der Zugriffsrechte des den Datensatz erstellenden Nutzers eingeräumt haben, jeweils in Form einer Hierarchie repräsentieren ist. Diese Zuordnung kann z.B. mittels Zugriffsermächtigungskettenobjekten erfolgen.

Die den Eigner-Zertifikaten zugeordneten Hierarchien werden unabhängig von den den Zugriffs-Zertifikaten zugeordneten Hierarchien dynamisch erzeugt, z.B. dadurch, dass Nutzer mit Eigner-Berechtigung im Hinblick auf eine bestimmte Nutzdaten-Datenbank einem anderen Nutzer diese Berechtigung mittels einer GUI des Zugriffs-Verwaltungssystems übertragen und dieser andere Nutzer diesen Schritt wiederholt, um einem weiteren Nutzer Eigner-Rechte einzuräumen, sodass eine erste Hierarchie von erteilten Eigner-Rechten für diese bestimmte Datenbank entsteht. Werden mehrere Nutzdaten-Datenbanken verwaltet, kann für jede der Nutzdaten-Datenbanken eine eigene erste Hierarchie entstehen.

Die zweiten Hierarchien können z.B. dadurch gebildet werden, dass ein Nutzer U2 einen Datensatz anlegt, wobei in dem angelegten Datensatz drei Zugriffs-Zertifikate des Nutzers U2 (Lese-, Schreib-, und Index-Zugriff) enthalten sind. Der zweite Nutzer überträgt nun z.B. selektiv das Schreib-Zugriffsrecht an einen Nutzer U3, indem das Schreibzugriffs-Zertifikat von U2 mit dem Nutzer-Zertifikat von U3 in der ID-Datenbank verknüpft gespeichert wird (Zugriffsermächtigungskettenobjekt). Der dritte Nutzer U3 überträgt nun z.B. selektiv das Schreib-Zugriffsrecht an einen vierten Nutzer U4, indem das Schreibzugriffs-Zertifikat von U2 mit dem Nutzer-Zertifikat von U4 in der ID-Datenbank verknüpft gespeichert wird. Im Hinblick auf das Schreibzugriffs-Zertifikat von Nutzer U2 ist so eine zweite Hierarchie gemäß U2→U3→ U4 entstanden. In analoger Weise können weitere zweite Hierarchien für andere Zugriffsrechte (z.B. Lese- und Indexzugriffsrechte des gleichen Nutzers U2 oder anderer Nutzer) entstehen, die auf individuellen Vertrauensverhältnissen zwischen Nutzern beruhen, nicht auf einer starren, vorgegebenen Hierarchie einer Organisation.

Vorzugsweise prüft die ID-Datenbank bei der Übertragung von Zugriffsrechten nicht, ob der Empfänger auch über Eigner-Rechte für die entsprechende Datenbank verfügt, sodass auch die Entstehung der zweiten Hierarchien unabhängig von der Entstehung der ersten Hierarchien erfolgt. Dies kann z.B. dann sinnvoll sein, wenn ein Nutzer einem anderen Zugriff auf seine Daten zu einem Zeitpunkt verschaffen möchte, an dem er weiß, dass dem Empfänger der Zugriffsrechte in absehbarer Zukunft auch Eigner-Rechte für die Nutzdaten-Datenbank, die den fraglichen Datensatz enthält, eingeräumt werden.

Nach Ausführungsformen sind in der Nutzdaten-Datenbank die Datensätze in einem Format gespeichert, welches eine Extraktion der in den Datensätzen enthaltenen Information ohne einen Zugriff über eine Datenbankverbindung zu der Nutzdaten-Datenbank ausschließt. Beispielsweise können die Datensätze als binäre Objekte oder in verschlüsselter Form gespeichert sein. Backups der Nutzdaten-Datenbank führt ein administrative Aufgaben wahrnehmender Nutzer (also die digitale Repräsentanz einer technisch-administrativ tätigen Person ohne gesonderte Zugriffsrechte auf die Datensätze) oder das Zugriffs-Verwaltungssystem durch Kopieren der Nutzdaten-Datenbank auf ein anderes Speichermedium aus, wobei der Administrator-Nutzer kein Eigner-Zertifikat für diese Nutzdaten-Datenbank besitzt.

Dies kann vorteilhaft sein, da der administrative Aufgaben wahrnehmende Nutzer zwar noch die ihm typischerweise zugeordneten Tätigkeiten wie zum Beispiel das Erstellen von Backups durchführen kann, jedoch nicht mehr auf den Inhalt der in der Datenbank gespeicherten Nutzerdaten zugreifen kann. Dies schützt die Organisation gegenüber einer missbräuchlichen Weitergabe sensibler Daten an Dritte durch den administrative Aufgaben wahrnehmenden Nutzer. Der administrative Aufgaben wahrnehmende Nutzer des Zugriffs-Verwaltungssystems hat nach Ausführungsformen der Erfindung also deutlich weniger Zugriffsrechte als dies in herkömmlichen IT-Systemen der Fall ist.

Nach Ausführungsformen schreibt das Zugriffs-Verwaltungssystem die chronologische Sequenz der Erzeugung aller Verknüpfungen von Nutzer-Zertifikaten mit Eigner-Zertifikaten, Zugriffs-Zertifikaten und/oder Attribut-Zertifikaten in ein oder mehrere Datenbanklogs.

Beispielsweise kann das Zugriffs-Verwaltungssystem einen neuen Log-Eintrag erzeugen, wann immer ein Nutzer einen neuen Datensatz erzeugt, wann immer ein Nutzer einem anderen Nutzer ein Zugriffs-Zertifikat neu zuweist (oder in dieses entzieht) und wann immer ein Nutzer einem anderen Nutzer ein Eigner-Zertifikat neu zuweist (oder ihm dieses entzieht) und wann immer ein Nutzer einem anderen Nutzer ein Attribut-Zertifikat neu zuweist (oder ihm dieses entzieht). Vorzugsweise wird jeder Log-Eintrag mit einem Zeitstempel versehen, sodass die aktuellen Eigner-und Zugriffsrechte und/oder Attribute sämtlicher Nutzer, die sich bei dem Zugriffs-Verwaltungssystem registriert haben, zu einem beliebigen Zeitpunkt in der Vergangenheit rekonstruiertierbar ist.

Dies kann vorteilhaft sein, da anhand der Log-Datei auch für jeden Zeitpunkt der Vergangenheit überprüft werden kann, wer welche Rechte besaß und von wem. Im Falle eines missbräuchlichen Zugriffs auf eine Datenbank und/oder einen Datensatz kann somit nicht nur der jeweilige Nutzer, der den missbräuchlichen Zugriff durchgeführt hat, sondern auch die Kette aller Nutzer, die diesem Nutzer die entsprechenden Rechte eingeräumt haben, rekonstruiert werden.

Nach Ausführungsformen repräsentiert jeder oder zumindest einige der Datensätze in der Nutzdaten-Datenbank jeweils ein Funktionsobjekt. Nur ein Nutzer, dem sowohl ein Eigner-Zertifikat der Nutzdaten-Datenbank als auch ein Zugriffs-Zertifikat für den Zugriff auf das Funktionsobjekt zugewiesen ist, wird von dem Zugriffs-Verwaltungssystem gestattet, die Funktion durchzuführen bzw. die Ausführung der Funktion zu veranlassen. Bei der Funktion kann es sich beispielsweise um das Starten eines Geräts, die Aktivierung oder Bewegung einer Hardwarekomponente, das Öffnen oder Schließen einer Tür für Gebäude, Räume oder Fahrzeuge, das Öffnen oder Schließen sonstiger Zutrittsbarrieren oder Verschlussvorrichtungen von Behältnissen oder um eine bestimmte Software Funktionalität handeln. Ferner kann für die Ausführung der Funktion eine Verknüpfung mit einem Attribut-Zertifikat notwendig Voraussetzung sein.

Somit kann die oben beschriebene vorteilhafte, flexible und feingranulare Zugriffskontrolle nicht nur für die Kontrolle des Zugriffs auf Datensätze, sondern auch für die Kontrolle des Zugriffs auf eine Mehrzahl anderer Funktionen einschließlich Hardwarefunktionalitäten verwendet werden.

In einem weiteren Aspekt betrifft die Erfindung ein Computersystem. Das Computersystem bzw. dessen Komponenten ist bzw. sind zur Durchführung eines Verfahrens zur Zugriffskontrolle auf Datenobjekte konfiguriert. Das Verfahren umfasst:
- Bereitstellung einer ausgehend von einem ersten Nutzer durch eine Mehrzahl von Nutzern dynamisch erzeugten ersten Berechtigungshierarchie, wobei die erste Berechtigungshierarchie sukzessive erzeugt wird, indem ausgehend von dem ersten Nutzer der jeweils zuletzt in die erste Berechtigungshierarchie aufgenommene Nutzer einem neu aufzunehmenden Nutzer persönlich ein erstes Zugriffsrecht zuweist, sodass jedem von der ersten Berechtigungshierarchie umfassten Nutzer das erste Zugriffsrecht zugewiesen ist, und wobei die ersten Berechtigungshierarchie neben dem ersten Nutzer zumindest zwei weitere Nutzer umfasst,
- Bereitstellung einer ausgehend von einem zweiten Nutzer erzeugten zweiten Berechtigungshierarchie, wobei die zweite Berechtigungshierarchie sukzessive erzeugt wird, indem ausgehend von dem zweiten Nutzer der jeweils zuletzt in die zweite Berechtigungshierarchie aufgenommene Nutzer einem neu aufzunehmenden Nutzer persönlich ein zweites Zugriffsrecht zuweist, sodass jedem von der zweiten Berechtigungshierarchie umfassten Nutzer das zweite Zugriffsrecht zugewiesen ist, und wobei die zweite Berechtigungshierarchie neben dem zweiten Nutzer zumindest einen weiteren Nutzer umfasst,
- Prüfung von Zugriffsrechten eines dritten Nutzers für einen Zugriff auf eines der Datenobjekte, wobei ein Zugriff auf das Datenobjekt nur dann gewährt wird, wenn der dritte Nutzer sowohl von der ersten Berechtigungshierarchie umfasst ist, sodass ihm das erste Zugriffsrecht zugewiesen ist, als auch von der zweiten Berechtigungshierarchie, sodass ihm ferner das zweite Zugriffsrecht zugewiesen ist.

Nach Ausführungsformen umfasst das Computersystem ein Speichersystem, wie beispielsweise ein Datenbanksystem, mit einer oder mehreren Nutzdaten-Speichersystemen, z.B. Nutzdaten-Datenbanken, und einem ID-Speichersystem, z.B. einer ID-Datenbank. Das Speichersystem bzw. dessen Komponenten ist bzw. sind zur Durchführung eines Verfahrens zur Zugriffskontrolle auf Datensätze, die in einer der Nutzdaten-Datenbanken gespeichert sind, nach einem der zuvor genannten Ausführungsbeispiele konfiguriert.

Die Erzeugung der ersten Berechtigungshierarchie umfasst:
- Verknüpfen eines ersten Eigner-Zertifikats, das der Nutzdaten-Datenbank zugeordnet ist, mit dem dritten Nutzer, wobei ein Eigner-Zertifikat ein Zertifikat ist, das einer oder mehreren Nutzdaten-Datenbanken zugeordnet ist und jedem Nutzer, mit dem es verknüpft ist, das erste Zugriffs-Recht gewährt, welches das Recht umfasst, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
- Bereitstellen einer ersten Schnittstelle, die es dem dritten Nutzer ermöglicht, eine Verknüpfung des zweiten Nutzers mit dem ersten Eigner-Zertifikat für die Nutzdaten-Datenbank zu erstellen, um diesem zu ermöglichen, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank.

Beispielsweise kann die Prüfung von der Nutzdaten-Datenbank in Interoperation mit der ID-Datenbank durchgeführt werden. Die erste und zweite Schnittstelle können beispielsweise von einem ID-Management Modul oder einer ID-Management Applikation implementiert und instanziiert werden. Das ID-Management Modul bzw. die ID-Management Applikation hat Zugriff auf den Inhalt der ID-Datenbank und vorzugsweise auch auf die Zugriffs-Zertifikate, die in den einzelnen Datensätzen der Nutzdaten-Datenbanken gespeichert sind. Das ID-Management Modul kann zum Beispiel als Plug-In das Zugriffs-Verwaltungssystem implementiert sein.

Unter **"Nutzdaten"** werden hier Daten verstanden, die für einen Nutzer, für einen Arbeitsablauf oder für eine Hardware- oder Softwarefunktionalität außerhalb des sie beinhaltenden Zugriffs-Verwaltungssystems relevant sind und welche nicht der Zugriffsverwaltung von Zugriffsrechten verschiedener Nutzer eines Zugriffs-Verwaltungssystems dienen. Nutzdaten können insbesondere Text, Zeichen, Bilder und Töne umfassen.

Eine **"NoSQL"** (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Cache, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter einem "**Zugriffs-Verwaltungssystem**" oder **"System"** wird im Folgenden ein elektronisches System zur Speicherung und Wiedergewinnung von Daten verstanden. Beispielsweise kann es sich bei dem Zugriffs-Verwaltungssystem um ein "Datenbanksystem", auch "Datenbankmanagementsystem" (DBMS) handeln. Es ist aber auch möglich, dass die Daten in einem Mikrocontrollerspeicher gespeichert werden und von einem Applikationsprogramm verwaltet werden, das als Zugriffs-Verwaltungssystem arbeitet, ohne ein klassisches DBMS zu sein. Vorzugsweise werden die Daten in dem Zugriffs-Verwaltungssystem widerspruchsfrei und dauerhaft gespeichert und verschiedenen Anwendungsprogrammen und Nutzern in bedarfsgerechter Form effizient zur Verfügung gestellt. Ein Datenbankmanagementsystem kann typischerweise ein oder mehrere Datenbanken beinhalten und die darin enthaltenen Datensätze verwalten.

Unter einem "**Datensatz**" wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar.

Unter einer "**Datenbank**" wird im Folgenden eine (typischerweise große) Menge von Daten verstanden, die in einem Computersystem von einem Zugriffs-Verwaltungssystem nach bestimmten Kriterien verwaltet werden.

Unter einer **"ID-Datenbank"** wird im Folgenden eine Datenbank verstanden, welche nutzerbezogene Informationen wie zum Beispiel Nutzer-Zertifikate sowie diesen Nutzern zugewiesene Rechte in Form von weiteren Zertifikaten enthält und verwaltet. In Abgrenzung zu Nutzdaten-Datenbanken, welche vorwiegend der Speicherung von Nutzdaten dienen, dient die ID-Datenbank vorwiegend der Verwaltung der den Nutzern im Hinblick auf die Nutzdaten zugewiesenen Eigner- und Zugriffsrechte.

Unter einem **"Nutzer"** wird im Folgenden die digitale Repräsentanz einer menschlichen Person oder einer Softwarelogik verstanden, die bei dem Zugriffs-Verwaltungssystem registriert ist. Bei einem Nutzer kann es sich insbesondere um einen Datenbanknutzer handeln, der eine bestimmte menschliche Person repräsentiert. Alternativ dazu kann es sich bei dem Nutzer um einen System-Nutzer handeln, also eine digitale Repräsentation eines menschlichen Nutzers, die von einem Betriebssystem eines Rechners verwaltet wird, und welcher zum Beispiel ein oder mehrere Datenbanknutzer zugeordnet sein können. Auch ist es möglich, dass verschiedene Softwareapplikationen jeweils durch einen Nutzer repräsentiert und bei dem Zugriffs-Verwaltungssystem registriert sind, um gegebenenfalls auf bestimmte Nutzdaten-Datenbanken und deren Datensätze zuzugreifen.

Unter einem **"Zertifikat"** wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Beispielsweise kann das Zertifikat als Zahlenwert ausgebildet sein, welchem in der ID-Datenbank Metadaten zugeordnet sind. Die Verwendung von Zahlwerten kann vorteilhaft sein, da diese sich gut indexieren lassen und nicht einer Variation durch leicht modifizierte Metadaten unterworfen sind. Vorzugsweise sind die Zugriffs-Zertifikate einzelner Nutzer als Attributzertifikate, insbesondere als Zahlwerte ausgebildet. Attributzertifikate enthalten keinen öffentlichen Schlüssel, sondern verweisen auf ein Public-Key-Zertifikat und legen dessen Geltungsbereich genauer fest. Alternativ dazu kann ein Zertifikat auch nach dem Standard X.509 ausgebildet sein, also einen öffentlichen Schlüssel beinhalten und die Identität des Inhabers sowie weitere Eigenschaften des öffentlichen kryptographischen Schlüssels des Zertifikats bestätigen. Ein Zertifikat kann sich, muss sich aber nicht notwendigerweise auf einen kryptographischen Schlüssel beziehen, sondern kann allgemein Daten zur Prüfung einer elektronischen Signatur enthalten oder mit diesen Daten verknüpft gespeichert sein.

Unter **"Log"** wird hier insbesondere eine Datenmenge, z.B. eine Log-Datei, verstanden, welche automatisch erzeugt wird und in welcher Prozesse, die in einem Zugriffs-Verwaltungssystem ablaufen, aufgezeichnet werden.

Unter einer **"Schnittstelle"** wird im Folgenden eine Verbindungsstelle für den Datenaustausch zwischen einem Zugriffs-Verwaltungssystem und einem oder mehreren menschlichen Nutzern verstanden, welche eine Programmlogik beinhaltet, die in Abhängigkeit von Nutzer-Interaktionen mit der Schnittstelle Zugriffs- und Eigner-Rechte erzeugt und/oder anderen Nutzern zuweist. Die Schnittstelle kann insbesondere als graphische Benutzeroberfläche ("GUI") oder als ein Teilbereich einer GUI ausgebildet sein.

Unter einem **"Root-Zertifikat"** oder "Wurzel-Zertifikat" wird im Folgenden dasjenige Zertifikat bezeichnet, das den Vertrauensanker einer PKI darstellt. Da das Wurzel-zertifikat und damit die gesamte Zertifikatshierarchie nur vertrauenswürdig bleibt, solange dessen privater Schlüssel ausschließlich der ausstellenden Partei bekannt ist, kommt dem Schutz der Root-CA höchste Bedeutung zu.

Gemäß manchen Ausführungsformen stellt das Nutzer-Zertifikat desjenigen Nutzers, der in der Hierarchie einer Organisation ganz oben angesiedelt ist, das Root-Zertifikat der PKI dieser Organisation dar. Die Nutzer-Zertifikate aller anderen Mitglieder dieser Organisation sind von dem privaten Schlüssel dieses Root-Zertifikats signiert und damit von diesem gemäß einer Zertifikatskettenhierarchie abhängig. Aufgrund des hohen Schutzbedürfnisses des Root-Zertifikats erfolgt die automatische Verarbeitung von Signatur- oder Verschlüsselungsanforderungen mit Unterzertifikaten, die mit dem Root-Zertifikat signiert wurden und eine kürzere Gültigkeit (meist wenige Monate bis Jahre) als das Root-Zertifikat (das in der Regel mehrere Jahre oder Jahrzehnte gilt) aufweisen. Beispielsweise können die Nutzer-Zertifikate anderer Nutzer und/oder die von einzelnen Nutzern ausgestellten oder übertragenen Eigner-Zertifikate, Zugriffs-Zertifikate und/oder Attribut-Zertifikate eine begrenzte Gültigkeitsdauer von wenigen Tagen oder Monaten haben. Die Gültigkeit der Unterzertifikate wird so gewählt, dass es als unwahrscheinlich angesehen werden kann, dass die zu den Unterzertifikaten gehörenden privaten Schlüssel innerhalb des gewählten Gültigkeitszeitraums mit derzeit verfügbarer Rechenkapazität berechnet werden können. Auf diese Weise entsteht eine Zertifikatskette, bei der jeweils auf das unterzeichnende Zertifikat als ausgebende Stelle verwiesen wird. Diese Kette wird in der Regel als Teil eines Zertifikats mitgeliefert, um eine Prüfung bezüglich Vertrauenswürdigkeit, Gültigkeit und ggf. vorhandenem Zertifikatswiderruf entlang der gesamten Zertifikatskette zu ermöglichen.

Unter einem "**Eigner"** oder "Eigentümer" wird im Folgenden ein Nutzer verstanden, dem durch Zuweisung eines Eigner-Zertifikats das Recht im Hinblick auf eine bestimmte Nutzdaten-Datenbank eingeräumt wurde, in dieser Datensätze zu erstellen und eine Datenbankverbindung mit dieser Datenbank aufzubauen. Nach ausführungsformen leiten sich alle Eigner-Zertifikate, die für die Nutzdaten-Datenbanken eines Zugriffsverwaltungs-System ausgestellt wurden, vom Nutzer-Zertifikat ("CEO-Zertifikat") desjenigen Nutzers ab, der die höchste Position innerhalb der Organisation, die das Zugriffsverwaltungs-System betreibt, innehat. Die Ableitung aus diesem Nutzer-Zertifikat bedeutet, dass jede Kopie dieses Eigner-Zertifikats per Zertifikatskettenprüfung auf Validität überprüft werden kann, wobei die für die Zertifikatskettenprüfung verwendete Zertifikatskette das "CEO-Nutzer-Zertifikat" beinhaltet.

Unter einem **"zugriffsberechtigten Nutzer"** wird im Folgenden ein Nutzer verstanden, dem durch Zuweisung eines Zugriffs-Zertifikats das Recht eingeräumt wurde, auf einen Datensatz, der dieses Zugriffs-Zertifikat beinhaltet, auf die Weise zuzugreifen, die in diesem Zugriffs-Zertifikat spezifiziert ist, sofern weitere notwendige Kriterien, wie z.B. die Eignerschaft bezüglich der den Datensatz enthaltenden Datenbank, erfüllt sind.

Die Verwendung von Ordinalzahlen wie erstes, zweites, drittes etc. dient hier, allein der Unterscheidung voneinander Elemente und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Zugriffskontrolle auf Datensätze eines Zugriffs-Verwaltungssystems sowie ein entsprechendes exemplarisches Zugriffs-Verwaltungssystem sind in den anhängenden Zeichnungen 1 bis 2 sowie 5 bis 10 veranschaulicht. Darin zeigen:
- Figur 1: ein Blockdiagramm einer Ausführungsform eines erfindungsgemäßen Zugriffs-Verwaltungssystems mit mehreren Datenbanken,
- Figur 2: den Vorgang der Erstellung von Berechtigungsnachweisen für zwei Nutzer gemäß einer Ausführungsform des erfindungsgemäßen Verfahrens,
- Figur 3: im Stand der Technik verwendete Verfahren zur Zugriffskontrolle entlang einer vorgegebenen Unternehmenshierarchie,
- Figur 4: im Stand der Technik verwendete Verfahren zur Zugriffskontrolle basierend auf der Verwendung von Rollen,
- Figur 5: den Ablauf der Einräumung von Zugriffsrechten über eine Sequenz von Nutzern,
- Figur 6: Ein Beispiel für Nutzdaten, die Bestandteil eines Datensatzes sind,
- Figur 7: drei dynamisch und unabhängig voneinander generierte Hierarchien, entlang welcher Zugriffsrechte, Eignerrechte und Attribute über eine Kaskade von Nutzern vergeben wurden,
- Figur 8: die Neuausstellung eines Nutzer-Zertifikats für einen neuen Geschäftsführer einer Organisation,
- Figur 9: ein Flussdiagramm einer weiteren Ausführungsform eines erfindungsgemäßen Verfahrens, und
- Figur 10: ein Flussdiagramm einer weiteren Ausführungsform eines erfindungsgemäßen Verfahrens.

### Ausführliche Beschreibung

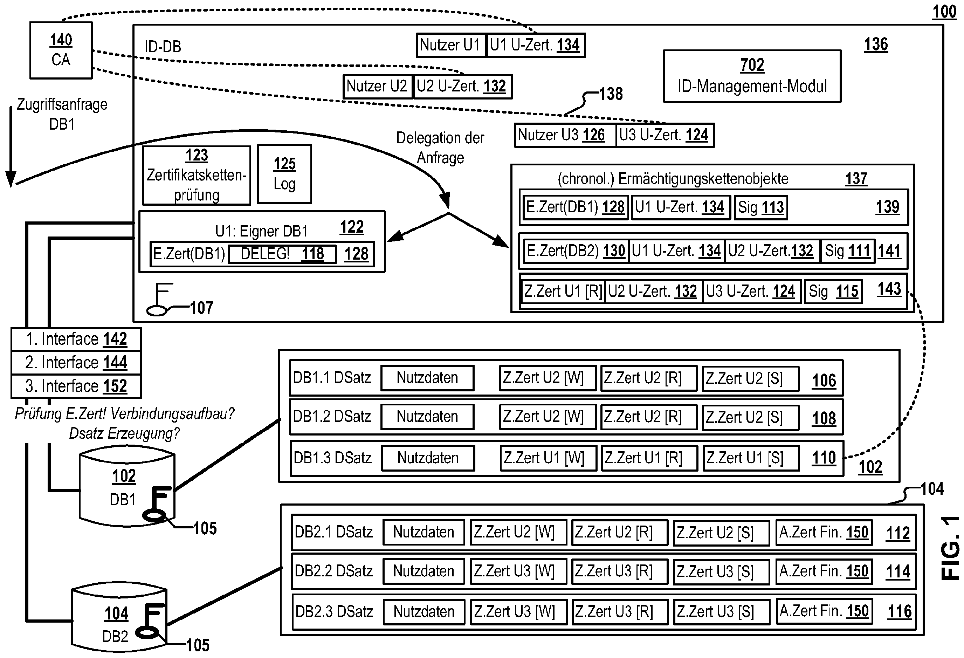

**Figur 1** zeigt ein Blockdiagramm einer Ausführungsform eines erfindungsgemäßen Zugriffs-Verwaltungssystems 100 mit mehreren Nutzdaten-Datenbanken 102 DB1, 104 DB2 und einer ID-Datenbank 136. Das Zugriffs-Verwaltungssystem 100 ist dazu konfiguriert den Zugriff von mehreren Nutzern U1, U2, U3, ..., auf mehrere Datensätze 112, 114, 116 zu kontrollieren.

Beispielsweise ist einem ersten Nutzer U1 ein Nutzer-Zertifikat 134 zugeordnet. Das Nutzer-Zertifikat 134 wurde von einer Zertifizierungsstelle 140 als ein Root-Zertifikat für den Nutzer-U1 ausgestellt. Nutzer U1 wie auch die anderen Nutzer U2, U3 könnten beispielsweise Mitarbeiter eines Unternehmens repräsentieren. In analoger Weise könnten auch den weiteren Mitarbeitern des Unternehmens Nutzer-Zertifikate 132,124 zugeordnet sein, die von der Zertifizierungsstelle als Root-Zertifikate ausgestellt wurden. Die Nutzer-Zertifikate 134,132,124 können durch Zertifikatskettenprüfung bis zum entsprechenden Root-Zertifikat der Zertifizierungsstelle geprüft werden.

Der erste Nutzer U1 könnte beispielsweise Geschäftsführer eines Unternehmens sein, dessen IT-System mehrere Nutzdaten-Datenbanken DB1, DB2 umfasst. Mit anderen Worten, der erste Nutzer U1 trägt die Verantwortung für sowie oberste Verfügungshoheit über die Nutzdaten-Datenbanken DB1, DB2. Entsprechend kann dem ersten Nutzer U1 ein Eigner-Zertifikat 128 für die erste Nutzdaten-Datenbank DB1 zugeordnet sein. Die Zuordnung, auch "Verknüpfung" genannt, kann beispielsweise in Form eines Ermächtigungskettenobjekts 139 implementiert und in einer ID-Datenbank 136 gespeichert sein.

Das Zugriffs-Verwaltungssystem 100 ist also dazu ausgebildet, ein erstes Eigner-Zertifikat, zum Beispiel Eigner-Zertifikat 128 bezüglich DB1 oder Eigner-Zertifikat 130 bezüglich DB2 mit dem ersten Nutzer U1 zu verknüpfen. Dies kann durch Speicherung des Eigner-Zertifikats 128 und des Nutzer-Zertifikat 134 des ersten Nutzers U1 in einem Eignerschaftsermächtigungskettenobjekt 139 erfolgen bzw. durch Speicherung des Eigner-Zertifikat 130 und des Nutzer-Zertifikats 134 des ersten Nutzers U1 in einem Eignerschaftsermächtigungskettenobjekt 141. Ein Eigner-Zertifikat ist ein Zertifikat, welches einer oder mehreren Nutzdaten-Datenbanken zugeordnet ist und jedem Nutzer, mit dem es verknüpft ist, das Recht gewährt, Datensätze in dieser Nutzdaten-Datenbank anzulegen. Beispielsweise gewährt das Eigner-Zertifikat 128 jedem Nutzer, dem es zum Beispiel durch ein Eignerschaftsermächtigungskettenobjekt) zugeordnet ist, das Recht, einen oder mehrere Datensätze in der Datenbank-DB1 zu erstellen.

Das Zugriffs-Verwaltungssystem 100 beinhaltet eine erste Schnittstelle 142, die es dem ersten Nutzer U1, dem das Eigner-Zertifikat 128 für die Datenbank DB1 zugeordnet ist, d.h. der also mit dem Eigner-Zertifikat 128 verknüpft ist, ermöglicht, eine zweite Verknüpfung des ersten Eigner-Zertifikat 128 für die Nutzdaten-Datenbank DB1 mit einem zweiten Nutzer U2 zu erstellen. Diese zweite Verknüpfung mit dem ersten Eigner-Zertifikat ermöglicht es dem zweiten Nutzer, nun seinerseits Datensätze in der Nutzdaten-Datenbank DB1 anzulegen. Auch der zweite Nutzer kann sich, sofern das die zweite Verknüpfung mit dem ersten Eigner-Zertifikat gemäß seines Delegierbarkeitsparameters delegierbar ist, dieser ersten Schnittstelle bedienen um weiteren Nutzern seines Vertrauens identische oder veränderte Kopien des Eigner-Zertifikats für die Datenbank-DB1 auszustellen und in Verbindung mit einem Nutzer-Zertifikat dieser weitere Nutzer in der ID-Datenbank zu speichern, zum Beispiel in Form weiterer Eignerschaft Ermächtigungskettenobjekte 139, 141.

Das Zugriffs-Verwaltungssystem 100 beinhaltet eine zweite Schnittstelle 144, die es dem zweiten Nutzer U2, der einen Datensatz 106, 108 in der Nutzdaten-Datenbank 102 erstellt hat (nachdem ihm bereits von dem ersten oder einem anderen Nutzer ein Eigner-Zertifikat für die DB1 ausgestellt wurde), ermöglicht, mindestens ein Zugriffs-Zertifikat zu erstellen und mit dem Nutzer-Zertifikat eines Nutzers, dem Zugriff auf diesen Datensatz gewährt werden soll, zu verknüpfen. Bei dem Nutzer, dem Zugriff gewährt werden soll, kann es sich um einen beliebigen anderen Nutzer, der bei dem Zugriffs-Verwaltungssystem registriert ist und der das Vertrauen des zweiten Nutzers (Datensatzerstellers) besitzt, handeln. Bei den Zugriffs-Zertifikaten des zweiten Nutzers U2 kann es sich zum Beispiel um ein Schreibzugriffs-Zertifikat Z.Zert_U2[W], ein Lesezugriffs-Zertifikat Z.Zert_U2[R] und/oder ein Indexzugriffs-Zertifikat Z.Zert_U2[S] handeln. Ein Zugriffs-Zertifikat kann also eine Art des Datensatzzugriffs auf den von dem zweiten Nutzer erstellten Datensatz spezifizieren.

Falls nun der erste Nutzer U1 auf einen Datensatz 106, 108, den der zweite Nutzer U2 erstellt hat, zugreifen will, prüft das Zugriffs-Verwaltungssystem die Zugriffsberechtigung des ersten Nutzers auf einen von dem zweiten Nutzer angelegten Datensatz 106, 108. Der gewünschte Zugriff wird dem ersten Nutzer nur dann gewährt, wenn das Zugriffs-Verwaltungssystem feststellt, dass dem ersten Nutzer U1 sowohl ein Eigner-Zertifikat für die Nutzdaten-Datenbank 102 als auch ein Zugriffs-Zertifikat Z.Zert U2 [W] (oder [R] oder [S]) für den Zugriff auf den Datensatz zugeordnet ist.

Die einzelnen Datensätze 106, 108, 110, 112, 114, 116 enthalten Zugriffs-Zertifikate, die der Nutzer, der den betreffenden Datensatz erstellt hat, diesen Datensätzen im Zuge der Erstellung zuweist. Beispielsweise kann das Zugriffs-Verwaltungssystem 100 während des Vorgangs der Erstellung eines neuen Datensatzes im Hintergrund automatisch prüfen, welche Zugriffs-Rechte für den Nutzer, der gerade einen Datensatz erstellt, in der ID-Datenbank hinterlegt sind. Dies kann insbesondere dann vorteilhaft sein, wenn jedem Nutzer ein vordefinierter Satz an Zugriffs-Zertifikaten (zum Beispiel für Lese-, Schreib-, und Indexzugriffsrechte) zugewiesen ist welcher automatisch auch komplett jedem neu erstellten Datensatz zugewiesen werden soll. Diese Situation ist in Figur 1 dargestellt. Alternativ dazu ist es jedoch auch möglich, dass jedem Nutzer mehrere verschiedene Zugriffs-Zertifikate (der gleichen Zugriffsart, zum Beispiel Lesezugriff) in der ID-Datenbank zugewiesen sind und der Nutzer manuell über eine GUI im Zuge der Datensatzerstellung auswählen kann, welche dieser Zugriffs-Zertifikate dem neuen Datensatz zugewiesen werden sollen. Dies kann vorteilhaft sein, da der Nutzer für eine große Mehrzahl von Datensätzen, die er anliegt und die zum Beispiel ähnlichen Inhalts sind oder ein ähnliches Vertraulichkeitsniveau besitzen, den gleichen Satz an Zugriffs-Zertifikaten im Zuge der Erstellung zuweisen kann. Für den Fall aber, dass der Nutzer zum Beispiel zehn verschiedene Kreditkarten verwaltet und die vertraulichen Kreditkartennummern in zehn verschiedenen Datensätzen speichert, hat der Nutzer auch die Möglichkeit, jedem dieser Datensätze ein anderes Zugriffs-Zertifikat zuzuweisen. Dies hat den Vorteil, dass der Ersteller jedes dieser Kreditkartennummern-Datensätze weiteren Nutzern selektiv nur für einen bestimmten Kreditkartennummern-Datensatz gewähren kann, also ohne den betreffenden weiteren Nutzer automatisch auch Zugriffsrechte für die anderen Kreditkartendatensätze zu geben. Der Einfachheit halber beziehen sich die meisten der hier beschriebenen Ausführungsformen und Beispiele darauf, dass einem Nutzer 3 Zugriffs-Zertifikate für Lese-, Schreib-, und Indexzugriffsrechte zugewiesen sind, die im Zuge einer Datensatzerstellung durch den Nutzer automatisch in diesen Datensatz integriert werden. Diese Beispiele sind jedoch so zu verstehen, dass nach alternativen Ausführungsformen und Beispielen der Nutzer, der einen Datensatz erstellt, auch manuell eine bestimmte Untermenge aus vordefinierten und ihm zugewiesenen Zugriffs-Zertifikaten auswählen und in den erstellten Datensatz integrieren kann.

Die einzelnen Datensätze 112, 114, 116 enthalten ferner Attribut-Zertifikate 150. Bei diesen Attribut-Zertifikaten 150 kann es sich beispielsweise um Attribute-Zertifikate für Finanzdaten handeln, welche ein oder mehrere Attribute festlegen, wie beispielsweise eine Sicherheitsfreigabe oder eine bestimmte Befähigung. Die Attribut-Zertifikate 150 stammen beispielsweise von einem Nutzer, wie etwa einem Sicherheitsbeauftragten, welcher unabhängig und nicht identisch mit dem Ersteller der Datensätze 112, 114, 116 ist. Durch Einbringen der Attribut-Zertifikate 150 kann somit eine zusätzliche, unabhängige Prüfinstanz implementiert werden. Die Attribut-Zertifikate 150 können beispielsweise derart in den Datensätze 112, 114, 116 gespeichert sein, dass die Datensätze 112, 114, 116 jeweils eine logische Verknüpfung zwischen dem Attribut-Zertifikate 150 und den Zugriffs-Zertifikaten des entsprechenden Datensatzes 112, 114, 116 aufweisen. Die logische Verknüpfung kann beispielsweise festlegen, dass für einen Zugriff auf den jeweiligen Datensatz 112, 114, 116 gemäß einem der Zugriffs-Zertifikate stets zusätzlich das bzw. die Attribute gemäß Attribut-Zertifikate 150 nachzuweisen sind. Ein Nachweis der entsprechenden Attribute kann beispielsweise durch ein Attributzuweisungskettenobjekt erfolgen, d.h. einer Verknüpfung zwischen dem Attribut-Zertifikate 150 und einem oder mehrerer Nutzer-Zertifikaten. Ein solches Attributzuweisungskettenobjekt kann beispielsweise analog zu dem Zugriffsermächtigungskettenobjekt 143 aufgebaut sein.

Die in Figur 1 dargestellten Datensätze zeigen, dass beispielsweise die Datensätze 106, 108, und 112 von dem Nutzer U2 angelegt wurden. Der Datensatz 110 wurde von dem Nutzer U1 angelegt. Der Datensatz 116 wurde von dem Nutzer U3 angelegt. Die vordefinierten Zugriffs-Zertifikate der jeweiligen Ersteller wurden in die Datensätze integriert. Zumindest die Ersteller haben also vollumfänglichen Zugriff auf ihre Datensätze, sofern sie auch über ein Eigner-Zertifikat für die jeweilige Nutzdaten-Datenbank verfügen. Es ist jedoch durchaus möglich, dass weitere Nutzer Zugriff auf einzelne Datensätze haben. Diese Information ist jedoch nicht in der Nutzdaten-Datenbank enthalten, sondern in Form von Zugriffsermächtigungskettenobjekten 143 in der ID-Datenbank gespeichert. So ist beispielsweise aus dem Objekt 143 ersichtlich, dass ein Zugriffs-Zertifikat des Nutzers U1, dass ein Leserecht spezifiziert, von dem Ersteller U1 dem Nutzer U2 zugewiesen wurde, indem das Nutzer-Zertifikat 132 dieses Nutzers U2 innerhalb des Objekts 143 mit dem Lesezugriffs-Zertifikat von U1 verknüpft wurde. Außerdem ist aus dem Objekt 143 ersichtlich, dass der Nutzer U2 dieses Leserecht auf einen weiteren Nutzer U3 übertragen (weitergegeben) hat, indem das Nutzer-Zertifikat 124 des Nutzers U3 innerhalb des Objekts 143 mit dem Lesezugriffs-Zertifikat von U1 verknüpft wurde. Im Zuge jeder Übertragung eines Zugriffsrechts bzw. damit einhergehend im Zuge jeder Zuweisung eines weiteren Nutzer-Zertifikats zu einem bestimmten Zugriffs-Zertifikat wird ein neues Zugriffsermächtigungskettenobjekt in der ID-Datenbank vom Zugriffs-Verwaltungssystems erstellt. Dem menschlichen Nutzer wird vorzugsweise eine intuitive GUI angeboten um Nutzern Zugriffs- bzw. Eignerrechte und/oder Attribute zu übertragen und dadurch im Hintergrund die Erzeugung weiterer Zertifikate oder weiterer Verknüpfungen von Zugriffs- bzw. Eigner-Zertifikaten und/oder Attribut-zertifikaten mit Nutzer-Zertifikaten zu initialisieren. Das Zugriffsermächtigungskettenobjekt 143 impliziert also, dass sowohl Nutzer U2 als auch Nutzer U3 (und selbstverständlich auch Nutzer U1) Lesezugriff auf die von Nutzer-U1 erstellten Datensätze, zum Beispiel Datensatz 110, haben.

In analoger Weise spezifizieren Eignerschaftsermächtigungskettenobjekten 139, 141 eine Kette aus ein oder mehreren Nutzern, die anderen Nutzern Eigner-Zertifikate zugewiesen und dadurch Eigner-Rechte übertragen haben. So geht beispielsweise aus Objekt 139 hervor, dass der Nutzer-U1 Eigner-Rechte im Hinblick auf die Nutzdaten-Datenbank-DB1 besitzt, da das Nutzer-Zertifikat 134 des Nutzers U1 in dem Objekt 139 dem Eigner-Zertifikat 128 der DB1 zugewiesen ist. Das Objekt 141 spezifiziert, dass der Nutzer U1 die Eigner-Rechte für die Datenbank DB2 an einen weiteren Nutzer U2 übertragen hat.

In analoger Weise ist die Information über Attributzuweisungen nicht in der Nutzdaten-Datenbank enthalten, sondern kann in Form von Attributzuweisungskettenobjekten analog zu den Zugriffsermächtigungskettenobjekten 143 in der ID-Datenbank gespeichert sein. Aus einem solchen Attributzuweisungskettenobjekten ist beispielsweise ersichtlich, dass ein Attribut-Zertifikat, etwa eines Sicherheitsbeauftragten, mit einem oder mehreren Nutzern verknüpft ist. Der Sicherheitsbeauftragte hat das Attribut gemäß Attribut-Zertifikat sowie das damit verbundene Zugriffsrecht mit dem Nutzer des ersten von dem Attributzuweisungskettenobjekt umfassten Nutzer-Zertifikat verknüpft. Dieser Nutzer hat das Attribut gemäß Attribut-Zertifikat sowie das damit verbundene Zugriffsrecht mit dem Nutzer des nächsten von dem Attributzuweisungskettenobjekt umfassten Nutzer-Zertifikat verknüpft und so fort, soweit das Attributzuweisungskettenobjekt ein nächstes Nutzer-Zertifikat umfasst. Im Zuge jeder Zuweisung eines Attributs bzw. damit einhergehend im Zuge jeder Zuweisung eines weiteren Nutzer-Zertifikats zu einem Attribut-Zertifikat wird ein neues Attributzuweisungskettenobjekt in der ID-Datenbank vom Zugriffs-Verwaltungssystems erstellt und signiert. Attributzuweisungskettenobjekt werden beispielsweise unter Verwendung der dritten Schnittstelle 152 erstellt.

Falls ein Nutzer eine Zugriffsanfrage auf eine bestimmte Nutzdaten-Datenbank 102 absendet, prüft das Zugriffs-Verwaltungssystem 100 oder eine Komponente desselben, zum Beispiel die betreffende Datenbank 102, ob dem Nutzer, von dem die Anfrage stammt, in der ID-Datenbank ein Eigner-Zertifikat zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der anfragenden Nutzer diese Eignerrechte hat, wird ihm der Aufbau einer Datenbank Verbindung zu der Nutzdaten-Datenbank 102 gewährt und, falls dies angefragt wird, auch die Erstellung neuer Datensätze in dieser Datenbank. Damit diese Nutzer jedoch auch auf einzelne Datensätze lesend oder schreibend zugreifen kann oder über einen Index in Erfahren bringen kann, ob ein bestimmter Datensatz überhaupt existiert, müssen ihm (also seinem Nutzer-Zertifikat) in der ID-Datenbank auch die entsprechenden Rechte zugewiesen sein. Das Zugriffs-Verwaltungssystem prüft vor jedem Zugriff eines Nutzers mit Eignerschaftsrechten also zusätzlich, ob der Nutzer über die erforderlichen Zugriffsrechte und ggf. Attribute verfügt.

Nach manchen Ausführungsformen verfügt jeder Datensatz einer bestimmten Nutzdaten-Datenbank über ein oder mehrere zusätzliche Felder für Zugriffs-Zertifikate oder Attribut-Zertifikate 150, die anderen Nutzern oder Funktionen zugewiesen sind (also nicht speziell dem Nutzer, der den Datensatz erstellt hat). Beispielsweise kann es sich bei einer Nutzdaten-Datenbank um eine Finanzdaten-Datenbank oder um eine Personaldaten-Datenbank handeln. Um die Sicherheit zu erhöhen, kann zum Beispiel in jedem Datensatz der Finanzdatenbank ein zusätzliches Feld enthalten sein, in welchem ein Finanzdaten-Zertifikat 150 gespeichert ist. Falls es sich bei der Datenbank um eine Personaldatenbank handelt, kann in jedem Datensatz der Personaldatenbank ein zusätzliches Feld enthalten sein, in welchem ein Personalabteilung-Zertifikat gespeichert ist. Es können eine Mehrzahl solcher Felder pro Datensatz enthalten sein, und das Zugriffs-Verwaltungssystem kann für bestimmte Typen von Nutzdaten-Datenbanken automatisch im Zuge der Erzeugung eines neuen Datensatzes die entsprechenden Zugriffs-Zertifikate in den Feldern speichern. Beispielsweise wird bei Erzeugung eines neuen Finanzdaten-Datensatzes automatisch in das entsprechende Feld ein Finanzdaten-Zertifikat 150 durch das Zugriffs-Verwaltungssystem eingefügt.

Ein Nutzer, der auf einen solchen Datensatz zugreifen möchte, muss also zusätzlich zu dem Eignerschaftsrecht bezüglich der Datenbank und zusätzlich zu der Zugriffsberechtigung durch den Ersteller oder einer von diesen dazu ermächtigten Nutzer auch noch nachweisen, dass ihm ein Finanzdaten-Zertifikat 150 zugewiesen ist. Dies kann die Sicherheit erhöhen, da so auf relativ generische und globale Art und Weise bestimmten Nutzern der Zugriff auf bestimmte Daten verwehrt werden kann, von welchen davon ausgegangen werden kann, dass sie für die Arbeit des Nutzers nicht notwendig sind. Vorzugsweise ist die Gesamtheit der Zugriffs-Zertifikate eines Datensatzes durch ein oder mehrere logische Verknüpfungen bzw. Operatoren wie zum Beispiel "AND" oder "OR" miteinander verbunden, sodass sich ein komplexer, logisch verbundener Ausdruck ergibt, welcher spezifiziert, welche Zugriffs-Zertifikate einem Nutzer zugewiesen sein müssen, damit dieser Zugriff auf einen Datensatz hat. Dabei beinhalten die Zugriffs-Zertifikate eines Datensatzes vorzugsweise eine Mischung aus Zugriffs-Zertifikaten, die dem Ersteller des Datensatzes persönlich zugewiesen sind und die anderen Nutzern persönlich zugewiesen werden müssen, um diesen Zugriff zu gewähren, und Zugriffs-Zertifikaten, die von dem Zugriffs-Verwaltungssystem oder einem menschlichen Nutzer automatisch oder manuell jedem Datensatz einer bestimmten Nutzdaten-Datenbank bei Erstellung zugewiesen werden (zum Beispiel Finanzdaten-Zugriffszertifikat 150 oder Personaldaten-Zugriffszertifikat). Diese Zugriffs-Zertifikate werden auch als "Attribut-Zertifikate" bezeichnet

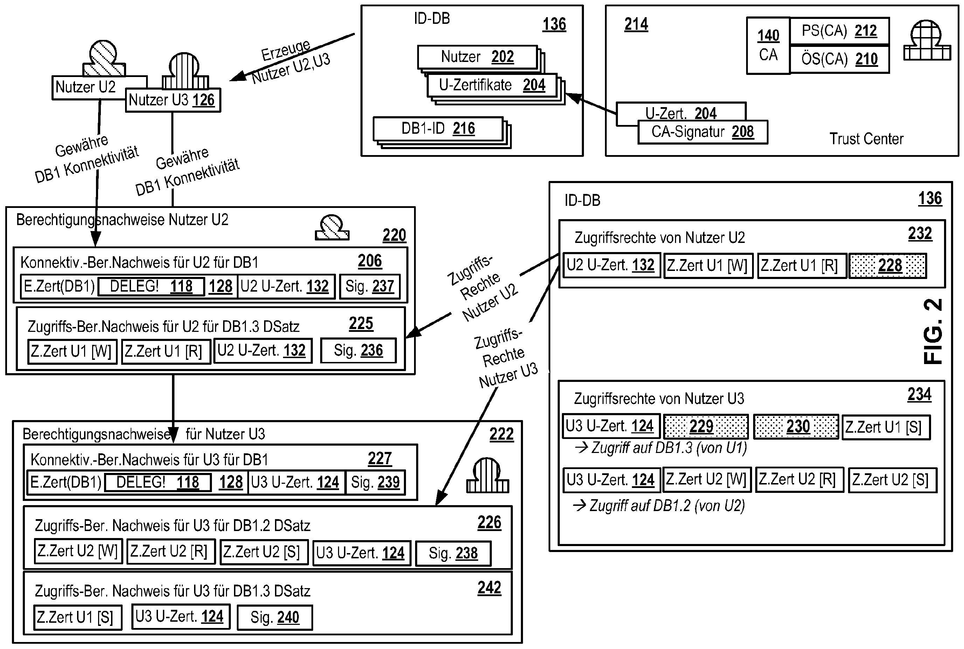

Optional können die einzelnen Ermächtigungsobjekte 139, 141, 143 mit dem privaten Signaturschlüssel 107 des Zugriffs-Verwaltungssystems signiert werden. Zusätzlich oder alternativ dazu können Berechtigungsnachweise, die in Antwort auf eine Zugriffsanfrage eines Nutzers an eine Nutzdaten-Datenbank von der ID-Datenbank für den Nutzer dynamisch erstellt werden, signiert werden (siehe Beschreibung Fig. 2).

**Figur 2** illustriert den Vorgang der Erstellung von Berechtigungsnachweisen für zwei Nutzer U2, U3 gemäß einer weiteren Ausführungsform des erfindungsgemäßen Verfahrens. Wesentliche Komponenten der hier dargestellten Ausführungsform entsprechen den in Figur 1 beschriebenen Komponenten, jedoch können die Eignerschafts-und Zugriffsrechtsverhältnisse der in Figur 2 abgebildeten Situation von der in Figur 1 abgebildeten Situation abweichen.

In der ID-Datenbank sind einer Mehrzahl von Nutzern 202 jeweils ein Nutzer-Zertifikat 204 zugewiesen. Die Nutzer-Zertifikate werden vorzugsweise von einer Zertifizierungsstelle 140 herausgegeben und mit einem privaten Signierschlüssel 212 der Zertifizierungsstelle signiert. Die Zertifizierungsstelle stellt zudem einen öffentlichen Signaturprüfschlüssel 210 zur Verfügung (zum Beispiel über entsprechende öffentliche Schlüsselverzeichnisse, die über das Internet einsehbar sind). Das bedeutet, dass die ID-Datenbank 136 die Validität eines Nutzer-Zertifikats durch Zertifikatskettenprüfung unter Einbeziehung des öffentlichen Signaturprüfschlüssels 210 der Zertifizierungsstelle prüfen kann. In der ID-Datenbank können Identifikatoren 216 mehrerer Nutzdaten-Datenbanken gespeichert sein, welchen wiederum jeweils ein oder mehrere eigene-Zertifikate zugewiesen sein können.

Vorzugsweise enthält die ID-Datenbank jedoch keine Nutzdaten oder Verweise auf einzelne Datensätze in Nutzdaten-Datenbanken.

Wenn ein Nutzer U2, zum Beispiel über eine grafische Benutzeroberfläche, Zugriff auf Datensätze, die in der Nutzdaten-Datenbank-DB1 gespeichert sind, anfordert, wird von dem Zugriffs-Verwaltungssystem 100 automatisch eine Berechtigungsanfrage für diesen Nutzer U2 generiert und an die ID-Datenbank gesendet. Diese analysiert eine Menge an Ermächtigungskettenobjekten 137 um festzustellen, welche Eigner-Zertifikate und Zugriffs-Zertifikate dem Nutzer-Zertifikat 132 des Nutzers U2 zugewiesen sind und erstellt dynamisch in Antwort an diese Berechtigungsanfrage einen Berechtigungsnachweis 220 für den Nutzer U2. Aus diesem Berechtigungsnachweis geht hervor, dass dem Nutzer U2 ein Eigner-Zertifikat 128 für die Datenbank-DB1 zugewiesen ist, der Nutzer also zum Aufbau einer Datenbank Verbindung zur DB1 berechtigt ist. Außerdem geht aus dem Berechtigungsnachweis hervor, dass der Nutzer U2 berechtigt ist für den Schreibzugriff auf sämtliche Datensätze, die von dem Nutzer-U1 erstellt wurden.

Beispielsweise kann der Berechtigungsnachweis gegliedert sein in einen Konnektivitätsnachweis 206 für den Nutzer U2 im Hinblick auf die Erstellung einer Datenbank Verbindung zur DB1 und in einen Zugriffsberechtigungsnachweis im Hinblick auf eine bestimmte Zugriffsart und im Hinblick auf alle Datensätze, die von einem bestimmten Nutzer erstellt wurden.

Der Berechtigungsnachweis 202 und/oder die jeweiligen Teilberechtigungsnachweise 206, 225 können eine Signatur 237, 236 enthalten, die mit dem privaten Signierschlüssel 107 der ID-Datenbank dynamisch in Antwort auf die Berechtigungsanfrage erzeugt wurde. Jede der Nutzdaten-Datenbanken beinhaltet einen öffentlichen Signaturprüfschlüssel 105, der mit dem privaten Signierschlüssel 107 ein asymmetrisches kryptographisches Schlüsselpaar bildet. Bevor die Nutzdaten-Datenbank-DB1 dem Nutzer U2 den Aufbau einer Datenbankverbindung und/oder den Zugriff auf einzelne Datensätze erlaubt, wird neben dem Vorhandensein der entsprechenden Zertifikate auch die Validität der Signaturen 237, 236 geprüft und der Verbindungsaufbau bzw. der Datensatzzugriff nur im Falle der Validität der Signatur zugelassen.

In analoger Weise wird in Antwort auf eine Zugriffsanfrage des Nutzers U3 von der ID-Datenbank der Berechtigungsnachweis 222 generiert und signiert, aus welchem hervorgeht, dass Nutzer U3 zum Verbindungsaufbau zur Datenbank-DB1 berechtigt ist. Außerdem geht aus den Berechtigungsnachweisen 226, 242 hervor, dass der Nutzer U3 auf die von Nutzer U2 erstellten Datensätze lesend und schreibend zugreifen darf und auch eine Indexabfrage um zu erfahren, ob ein bestimmter Datensatz, den der Nutzer erstellt hat, überhaupt existiert, durchführen darf. Außerdem darf Nutzer-U3 eine entsprechende Indexabfrage für Datensätze durchführen, die der Nutzer-U1 erstellt hat, jedoch nicht schreibend oder lesend zugreifen.

Dass der Nutzer U2 auf die Datensätze des Nutzers U1 nur lesend und schreibend, aber nicht per Indexzugriff zugreifen darf, geht aus dem Fehlen eines entsprechenden Zugriffs-Zertifikats in einem entsprechenden Zugriffsermächtigungskettenobjekt hervor. Dieses Fehlen ist durch Box 228 angedeutet.

Dass der Nutzer U3 auf die Datensätze des Nutzers U1 nicht schreibend oder lesend zugreifen darf, geht aus den Boxen 229, 230 hervor. Wenn einem Nutzer in der ID-Datenbank Zugriffsrechte in Form entsprechender Zugriffs-Zertifikate nicht zugewiesen sind, enthält auch der dynamisch erstellte Berechtigungsnachweis 220, 222 die entsprechenden Rechte nicht.

Vorzugsweise enthalten die dynamisch erstellten Berechtigungsnachweise 220, 222 nicht die gesamte Kette der Nutzer-Zertifikate derjenigen Nutzer, die anderen Nutzern entsprechende Eigner-Zertifikate oder Zugriffs-Zertifikate zugewiesen haben, sondern nur die dem anfragenden Nutzer zugewiesenen Eigner- und Zugriffs-Zertifikate sowie optional noch das Nutzer-Zertifikat des anfragenden Nutzers. Für den Nachweis der Berechtigung ist eine Dokumentation der Übertragungskette der Rechte nicht relevant. Dadurch, dass die Berechtigungsnachweise frei sind von den Nutzer-Zertifikaten der Übertragungskette, kann die Größe der Berechtigungsnachweise reduziert, das Verfahren beschleunigt und der Datenverkehr reduziert werden.

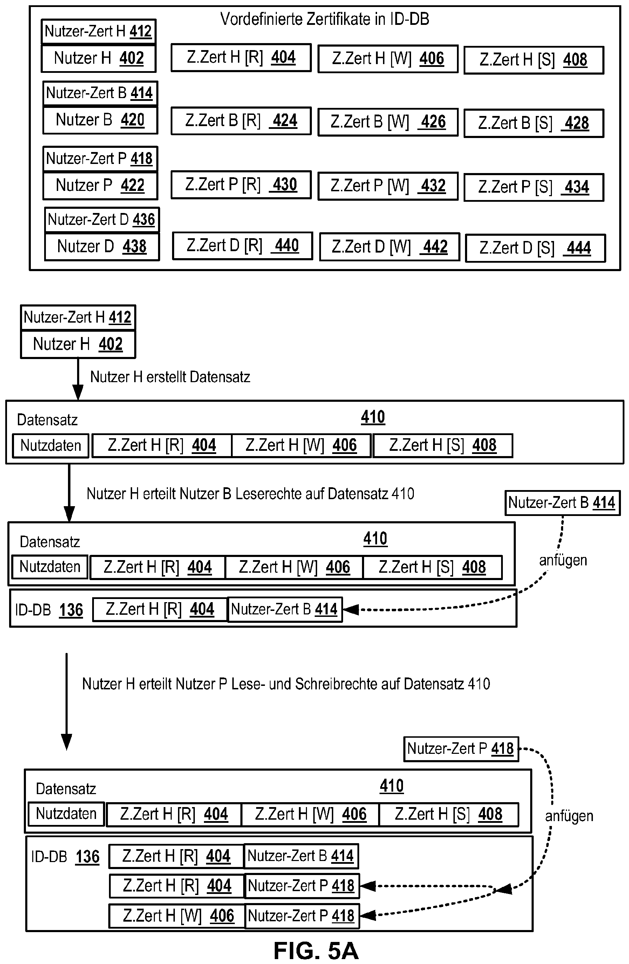

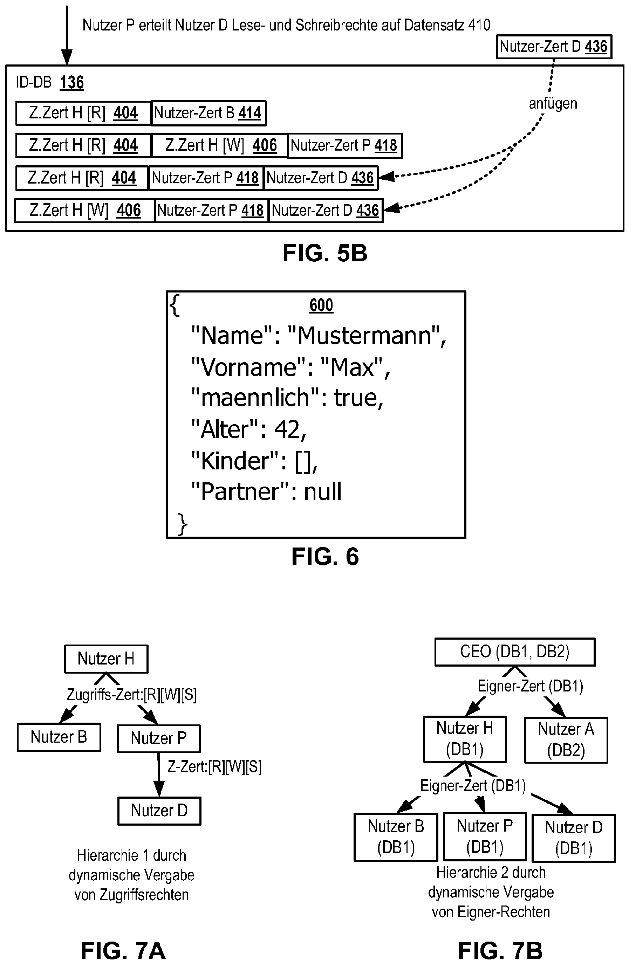

**Figur 5** zeigt beispielhaft für 4 Nutzer 402, 420, 422, 438, welche Zugriffs-Zertifikate und Nutzer-Zertifikate diesen Nutzern in der ID-Datenbank jeweils zugewiesen sein können. Beispielsweise ist dem Nutzer 402 ein Nutzer-Zertifikat 412 zugewiesen.

Außerdem sind dem Nutzer 3 Zugriffs-Zertifikate für unterschiedliche Arten des Zugriffs auf die von ihm erstellten Datensätze zugewiesen, nämlich das Zugriffs-Zertifikat 404 für den Lesezugriff, das Zugriffs-Zertifikat 406 für den Schreibzugriff sowie das Zugriffs-Zertifikat 408 für den Zugriff auf einen oder mehrere Indices eine Nutzdaten-Datenbank um zu erfahren, ob und wie viele Datensätze dieser Nutzer in der Nutzdaten-Datenbank erstellt hat. In analoger Weise sind auch den anderen Nutzern 420, 422, 438 entsprechende Nutzer-Zertifikate und Zugriffs-Zertifikate zugewiesen.

Figur 5 illustriert zudem eine mögliche Sequenz der Übertragung von Zugriffs-Rechten über eine Kette mehrerer Nutzer.

In einem ersten Schritt erstellt der Nutzer 402 in einer Nutzdaten-Datenbank DB1 einen Datensatz 410. Im Zuge der Erstellung werden neben den eigentlichen Nutzdaten, wie zum Beispiel in Figur 6 abgebildet, automatisch im Hintergrund auch die 3 Zugriffs-Zertifikate 404, 406, und 408, die dem erstellenden Nutzer 402 zugewiesen sind, in entsprechenden Feldern des Datensatzes gespeichert.

In einem nächsten Schritt überträgt der Ersteller 402 mithilfe einer GUI einem anderen Nutzer 420 Leserechte auf den Datensatz 410 (sowie auf sämtliche anderen Datensätze, die der Nutzer 402 mit diesem speziellen Lesezugriffs-Zertifikat 404 erstellt hat). Dies bedeutet, dass das Zugriffs-Verwaltungssystem in der ID-Datenbank dem Nutzer dieses spezielle Lesezugriffs-Zertifikat 404 zuweist, zum Beispiel in dem dieses Zertifikat 404 mit dem Nutzer-Zertifikat 414 des Nutzers 420 verknüpft gespeichert wird, zum Beispiel innerhalb des gleichen Zugriffsermächtigungskettenobjekts.

Der Ersteller des Datensatzes 410 kann auch einem anderen Nutzer Zugriffsrechte einräumen. So räumt der Nutzer 402 beispielsweise im nächsten Schritt einem anderen Nutzer 422 Lese-und Schreibrechte für sämtliche von dem Nutzer 402 erstellten Datensätze, die die Zertifikate 404 und 406 beinhalten, ein. Die ID-Datenbank bzw. die Ermächtigungskettenobjekte werden um ein neues Zugriffsermächtigungskettenobjekt erweitert, welches spezifiziert, dass der Nutzer 402 dem Nutzer 422 die Zugriffs-Zertifikate 404 und 406 zugewiesen hat. In dem neu generierten Zugriffsermächtigungskettenobjekt kann eine Kopie des oder der zugewiesenen Zugriffs-Zertifikate gespeichert sein, die zumindest im Hinblick auf den Wert eines Delegierbarkeitsparameters von dem ursprünglichen Zugriffs-Zertifikat abweicht. Dadurch kann jeder Nutzer der Kette kontrollieren, ob ein anderer Nutzer, dem er bestimmte Rechte einräumt, diese weitergeben kann oder nicht. In dem in Figur 5 dargestellten Beispiel wurden dem Nutzer 422 die Zugriffsrechte 404 und 406 in delegierbarer Form zugewiesen. Der Nutzer 418 kann diese Rechte also an andere weitergeben, was im nächsten Schritt illustriert ist: Der Nutzer 422 weist die ihm zugewiesenen Zugriffs-Rechte 404 und 406 nunmehr auch an den Nutzer 438 zu. Diese Zuweisung bewirkt eine Erstellung eines neuen Zugriffsermächtigungskettenobjekts in der ID-Datenbank, in welchem die Kette durch Anfügen eines weiteren Nutzer-Zertifikats 436 des Nutzers, dem die Rechte zugewiesen wurden, um ein Glied erweitert wird.

Die in den Ermächtigungskettenobjekten dokumentierte Kette an Nutzer-Zertifikaten dokumentiert die Übertragung von Eigner-oder Zugriffs-Rechten über eine Sequenz mehrerer Nutzer. Die Sequenz kann aus einer bloßen Aneinanderreihung von Nutzer-Zertifikaten bestehen, wobei beispielsweise die Position der Nutzer-Zertifikate innerhalb der Kettenobjekte die zeitliche Reihe der Übertragungen repräsentiert. Optional kann nach manchen Ausführungsformen die Kette von Nutzer-Zertifikaten innerhalb eines Ermächtigungskettenobjekten dadurch generiert werden, dass die ID-Datenbank die den einzelnen Nutzer-Zertifikaten zugeordneten privaten Schlüssel so verwendet, dass das letzte Nutzer-Zertifikat in der Kette das an dieses neuangefügte neue Nutzer-Zertifikat signiert, sodass auch innerhalb der Kette der Nutzer-Zertifikate der einzelnen Ermächtigungskettenobjekte eine Zertifikatskettenprüfung möglich ist.

**Figur 6** zeigt ein Beispiel für Nutzdaten 600, die Bestandteil eines Datensatzes 106, 108 sein können. Die Nutzdaten sind im JSon Format spezifiziert. Es können jedoch auch beliebige andere Datenformate verwendet werden.

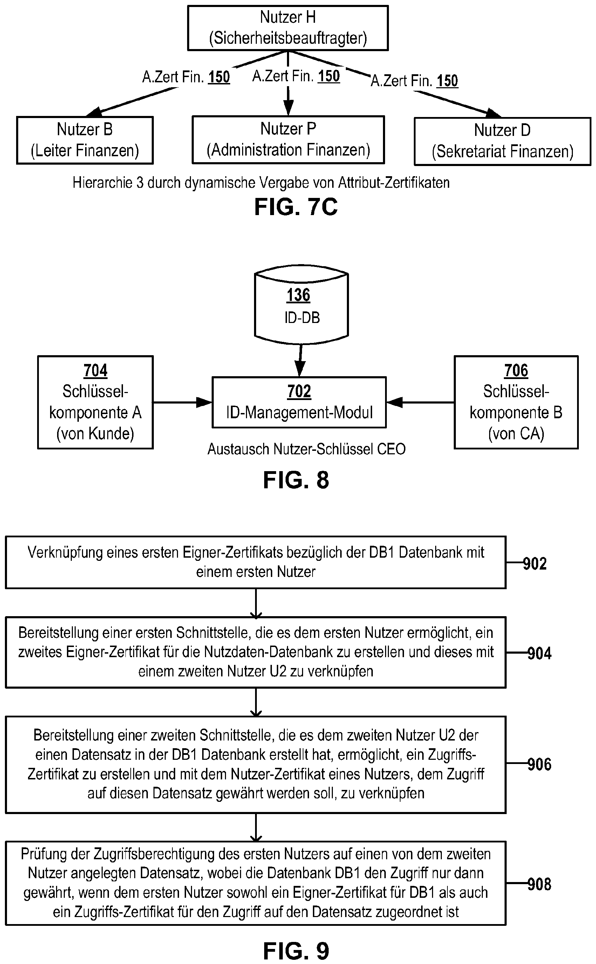

**Figur 7** zeigt drei dynamisch und unabhängig voneinander durch mehrere Nutzer über die erste, zweite und dritte Schnittstelle generierte Hierarchien, entlang welcher Zugriffsrechte, Eignerrechte und Attribute über eine Kaskade von Nutzern vergeben wurden.

So repräsentiert die in **Figur 7A** abgebildete Hierarchie eine Kaskade von Zugriffsrechten auf ein oder mehrere von Nutzer H erstellte Datensätze. Das Zugriffs-Recht umfasst z.B. drei Zugriffsarten Lesen [R], Schreiben [W] und Indexzugriff [S] und kann mittels einem kombinierten oder drei unterschiedlichen Zugriffs-Zertifikaten auf andere Nutzer übertragen werden. Im vorliegenden Fall hat der Nutzer H, der einen Datensatz erstellte und mit den besagten Zugriffsrechten (in der Nutzdaten-Datenbank) verknüpfte, die Zugriffrechte über drei Zugriffs-Zertifikate an die Nutzer B und P weitergegeben, wobei Nutzer P diese Zugriffsrechte auf die von H erstellten Datensätze wiederum an den Nutzer D weitergab. Somit bezieht Nutzer D seine Zugriffsrechte auf die Daten von H über den Mittelsmann ^{"}P".

Die in **Figur 7B** abgebildete Hierarchie bildet eine Kaskade von Eigner-Rechten auf ein oder mehrere Nutzdaten-Datenbanken DB1, DB2 ab. Der Geschäftsführer CEO hat z.B. Eigner-Zertifikate sowohl für Datenbank DB1 als auch DB2. Er überträgt diese Eigner-Rechte über eine Schnittstelle des Zugriffs-Verwaltungssystems derart, dass Nutzer H ein Eigner-Zertifikat für die Datenbank DB1 und Nutzer A ein Eigner-Zertifikat für Datenbank DB2 zugewiesen wird. Nutzer H wiederum überträgt Eignerschafts-Rechte für die Datenbank DB1 an die Nutzer B, P und D. Jedem Nutzer, der ein Eigner-Zertifikat für z.B. DB1 zugewiesen bekommt, ist damit ermächtigt, eine Datenbankverbindung zu der entsprechenden Nutzdaten-Datenbank aufzubauen und in dieser eigene Datensätze anzulegen. Im vorliegenden Fall hat der Nutzer D Eignerschaftsrechte für die Datenbank DB1 über den Nutzer H vom CEO erhalten. Die Weitergabe von Zugriffsrechten über Zugriffs-Zertifikate wie in 7A dargestellt und die Weitergabe von Eigner-Rechten über Eigner-Zertifikate wie in 7B dargestellt erfolgen entlang einer dynamisch zwischen Nutzern definierten Kette des Vertrauens und vorzugsweise unabhängig von einer vorgegebenen Hierarchie. Ein in der Unternehmenshierarchie in der Mitte angesiedelter Nutzer kann also sowohl seinem Vorgesetzten als auch seinen Untergebenen Zugriffsrechte und/oder Eigner-Rechte einräumen.

**Figur 7C** zeigt schließlich eine beispielhafte dritte Hierarchie, welche eine Kaskade bzw. eine Zuweisung von Attributen an Nutzer darstellt. Ein Sicherheitsbeauftragter, d.h. Nutzer H, verfügt beispielsweise über ein Attribut-Zertifikat 150, welches als Attribut beispielsweise eine Freigabe für einen Umgang mit bestimmten Finanzdaten bzw. Finanzgeschäften umfasst. Dieses Attribut kann beispielsweise einer Sicherheitsfreigabe für diese Daten entsprechen, welche der Sicherheitsbeauftragt nach einem vorausgegangenen positiven Sicherheitscheck bestimmten Nutzern erteilt. Zur Erhöhung der Sicherheit erfolgt ein entsprechender Sicherheitscheck oder eine andere Überprüfung unabhängig von der Position der betroffenen Nutzer im Unternehmen ebenso wie von dem oder den Erzeugern der Finanzdaten. Der Sicherheitsbeauftragte überträgt die Freigabe für den Zugriff auf die entsprechenden Finanzdaten über eine Schnittstelle des Zugriffs-Verwaltungssystems an Nutzer B, Nutzer P und Nutzer D. Bei Nutzer B handelt es sich beispielsweise um den Leiter der Finanzen, bei Nutzer P um einen Mitarbeiter im Bereich Administration Finanzen und bei Nutzer D um einen Mitarbeiter aus dem Sekretariat Finanzen. Die Zugriffs-Zertifikate sind beispielsweise verknüpft mit dem Attribut-Zertifikat 150 in den Datensätzen der Nutdaten-Datenbank, z.B. DB2, gespeichert. Die entsprechende Verknüpfung legt beispielsweise fest, dass für einen Zugriff auf die entsprechenden Datensätze gemäß den von den Zugriffs-Zertifikaten festgelegten Rahmenbedingungen zusätzlich ein oder mehrere von dem Attribut-Zertifikat festgelegte Attribute nachgewiesen werden müssen.

**Figur 8** zeigt eine Sonderfunktionalität des Zugriffs-Verwaltungssystems zum Austausch eines Nutzer-Zertifikats leitender Personen einer Organisation, insbesondere eines Geschäftsführers, gemäß einer weiteren Ausführungsform.

Die Nutzer-Zertifikate, die den Mitgliedern einer Organisation zugewiesen sind, werden vorzugsweise alle von der gleichen Zertifizierungsstelle ausgestellt und gehören der gleichen Public-Key-Infrastrukturen (PKI) an. Dies bedeutet, dass nach Ausführungsformen die Nutzer-Zertifikate alle Element eines Zertifikatskettenbaums sind, welcher von einem Root-Zertifikat der Zertifizierungsstelle ausgeht. Das Nutzer-Zertifikat des Geschäftsführers (oder einer anderen Person, die in der jeweiligen Organisation eine leitende Funktion einnimmt), im Folgenden auch CEO-Zertifikat genannt, wird nach Ausführungsformen der Erfindung dazu verwendet, um die Nutzer-Zertifikate anderer Nutzer, die diesem ^{"}CEO" Nutzer in der Organisationshierarchie untergeordnet sind, zu signieren, sodass die Gesamtheit der in der Organisation verwendeten Nutzer-Zertifikate oder zumindest eine Teilmenge dieser Nutzer-Zertifikate einen zusammenhängenden, hierarchischen, per Zertifikatskettenprüfung prüfbaren Baum von sich beglaubigenden Zertifikaten darstellt. Ergänzend oder alternativ dazu können die Nutzerzertifikate auch zur Beglaubigung/Signierung anderer Zertifikate, z.B. der Zugriffs-, Eigner- oder Attribut-Zertifikate, die ein Nutzer für andere Nutzer ausstellt, verwendet werden. Beispielsweise könnte ein privater Signierschlüssel, der dem Nutzer-Zertifikat eines Nutzers zugeordnet ist, eine für einen anderen Nutzer erstellte Verknüpfung mit einem Zugriffs-Zertifikat signieren, sodass diese Signatur als Nachweis dient, dass das entsprechende Zugriffsrecht mit Wissen und Wollen des vorigen Eigentümers auf einen anderen Nutzer übertragen wurde.

In den so gebildeten Zertifikatshierarchien innerhalb einer Organisation hängt die Gültigkeitsprüfung der Zertifikate von der Gültigkeit des CEO-Nutzers ab, dessen Nutzer-Zertifikat in der so gebildeten Hierarchie ganz oben steht. Sofern dieses Zertifikat und sein privater Schlüssel gesperrt werden muss (z.B. nach einem Ausscheiden des CEO, wenn dieser beim neuen Geschäftsführer kein Vertrauen besitzt) muss ein neues CEO-Zertifikat einschließlich eines neuen privaten Schlüssels des Zertifikats ausgestellt und an die Teilnehmer der Organisation verteilt werden. Da damit alle von dem CEO-Zertifikat abgeleiteten Zertifikate invalide werden, ist diese Situation für das technische Funktionieren der IT Infrastruktur der Organisation unter Umständen sehr problematisch. Es kann dabei zu erheblichen Problemen im laufende Betrieb der Organisation kommen.

Um einen sicheren Austausch des Zertifikats des CEO einer Organisation einschließlich des dem CEO-Zertifikat zugeordneten privaten Schlüssels zu ermöglichen, wird das Nutzer-Zertifikat des CEOs (oder einer anderen Person an der Spitze der Organisationshierarchie) durch eine spezielle Routine des Zugriffs-Verwaltungssystems 100, die z.B. in einem ID-Management Modul 702 implementiert sein kann, erstellt. Hierzu wird der private Schlüssel des CEO-Nutzers nicht wie die privaten Schlüssel der anderen Nutzer in der ID-Datenbank gespeichert, sondern in zumindest zwei Teile A 704 und B 706 geteilt. Die beiden Schlüsselkomponenten werden von zwei vertrauenswürdigen Personen außerhalb der ID-Datenbank getrennt voneinander und sicher verwahrt. Um diesen privaten CEO Schlüssel samt zugehörigem Zertifikat auszutauschen, müssen beide Personen die jeweiligen Schlüsselkomponenten A und B zur Verfügung stellen um den privaten Schlüssel des CEOs zu rekonstruieren. Die spezielle Routine ermöglicht es im Beisein beider Schlüsselkomponenten einen neuen privaten Schlüssel für das Zertifikat zu erzeugen, der den bisherigen CEO Schlüssel ersetzt. Der neue private Schlüssel wird nun ebenfalls in zwei oder mehr neue Schlüsselkomponenten geteilt, die getrennt außerhalb der ID-Datenbank sicher verwahrt werden.

**Figur 9** zeigt ein Flussdiagramm einer weiteren Ausführungsform eines erfindungsgemäßen Verfahrens zur Zugriffskontrolle auf Datensätze 106, 108, 110, 112, 114, 116 mehrerer Nutzdaten-Datenbanken eines Zugriffs-Verwaltungssystems 100. In einem ersten Schritt 902 des Verfahrens wird ein erstes Eigner-Zertifikats 128, 130, das einer Nutzdaten-Datenbank 102 zugeordnet ist, mit einem ersten Nutzer U1 verknüpft. Ein Eigner-Zertifikat ist ein Zertifikat, das einer oder mehreren Nutzdaten-Datenbanken zugeordnet ist und das jedem Nutzer, mit dem es verknüpft ist, das Recht gewährt, Datensätze in dieser Nutzdaten-Datenbank anzulegen. Die Verknüpfung kann z.B. manuell durch einen menschlichen Nutzer über eine GUI des Zugriffs-Verwaltungssystems 100 vorgenommen werden, oder automatisch und implizit durch das Datenbanksystem 100, z.B. dann, wenn ein Nutzer eine neue Nutzdaten-Datenbank innerhalb des Systems 100 anlegt.

In einem weiteren Schritt 904 wird eine erste Schnittstelle 142 bereitgestellt, die es dem ersten Nutzer U1 ermöglicht, ein eine zweite Verknüpfung des ersten Eigner-Zertifikats für die Nutzdaten-Datenbank 102 mit einem zweiten Nutzer U2 zu erstellen, um diesem zu ermöglichen, Datensätze in der Nutzdaten-Datenbank 102 anzulegen. Die erste Schnittstelle kann z.B. in Form einer GUI implementiert sein, welche Zugriff auf die ID-Datenbank hat und die von dem Nutzer erstellten Zertifikate und/oder die von einem entsprechend berechtigten Nutzer erstellte Zuweisung von Eigner-Zertifikaten an andere Nutzer in Form von Eigner- und Nutzer-Zertifikatszuweisungen in der ID-Datenbank zu speichert.

In einem weiteren Schritt 906 wird eine zweite Schnittstelle 144 bereitgestellt, die es dem zweiten Nutzer U2, der einen Datensatz 106, 108 in der Nutzdaten-Datenbank 102 erstellt hat, ermöglicht, mindestens ein Zugriffs-Zertifikat Z.Zert_U2[W], Z.Zert_U2[R], Z.Zert_U2[S], das eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen. Die zweite Schnittstelle kann z.B. ebenfalls in Form einer GUI oder eines Teils der oben erwähnten GUI implementiert sein, welche die von dem Nutzer erstellten Zertifikate und/oder die von einem entsprechend berechtigten Nutzer erstellte Zuweisung von Zugriffs-Zertifikaten an andere Nutzer in Form von Zugriffs-und Nutzer-Zertifikatszuweisungen in der ID-Datenbank zu speichert.

Das Zugriffs-Verwaltungssystem prüft, in Antwort auf eine Zugriffsanfrage des ersten Nutzers bezüglich der in der Nutzdaten-Datenbank 102 gespeicherten Datensätze in Schritt 908, ob der erste Nutzer eine Zugriffsberechtigung auf einen von dem zweiten Nutzer angelegten Datensatz besitzt, ob dem ersten Nutzer also von dem zweiten Nutzer ein entsprechendes Zugriffs-Zertifikat für die von dem zweiten Nutzer erstellten Datensätze zugewiesen wurde. Die Nutzdaten-Datenbank gewährt dem ersten Nutzer den Zugriff auf die von dem zweiten Nutzer angelegte Datensätze nur dann, wenn dem ersten Nutzer in der ID-Datenbank sowohl ein Eigner-Zertifikat für die Nutzdaten-Datenbank 102 als auch ein Zugriffs-Zertifikat für den Zugriff auf den Datensatz zugeordnet ist.

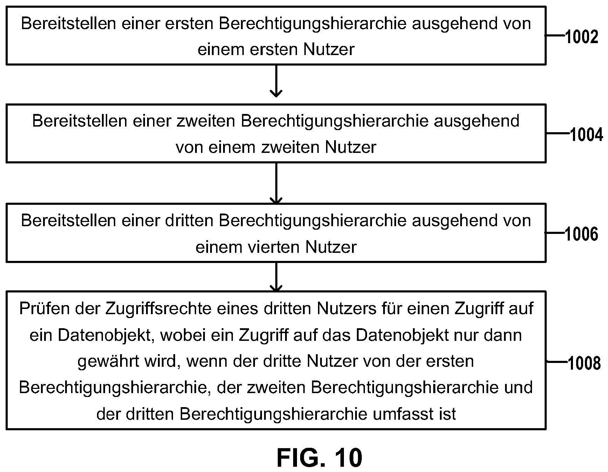

**Figur 10** zeigt ein Flussdiagramm einer weiteren Ausführungsform eines erfindungsgemäßen allgemeinen Verfahrens zur Zugriffskontrolle auf Datenobjekte. Bei den Datenobjekten kann es sich beispielsweise um Datensätze 106, 108, 110, 112, 114, 116 mehrerer Nutzdaten-Datenbanken eines Zugriffs-Verwaltungssystems 100 oder aber andere Datenobjekte handeln, welche beispielsweise von anderen Speichersystemen als Zugriffs-Verwaltungssystemen bereitgestellt werden. In Schritt 1002 wird eine erste Berechtigungshierarchie ausgehend von einem ersten Nutzer bereitgestellt. Hierbei kann es sich beispielsweise um eine Berechtigungshierarchie handeln, welche eine hierarchische Beziehungsstruktur, etwa innerhalb eines Unternehmens, zwischen den von ihr umfassten Nutzern wiedergibt. In Schritt 1004 wird eine zweite Berechtigungshierarchie ausgehend von einem zweiten Nutzer bereitgestellt. Diese zweite Berechtigungshierarchie kann beispielsweise direkt auf ein von dem zweiten Nutzer erstelltes Datenobjekt bezogen sein. Der zweite Nutzer als Erzeuger des Datenobjekts hat somit volle Kontrolle, welchen weiteren Nutzern er eine Möglichkeit einräumen möchte auf das Datenobjekt zugreifen zu können. In Schritt 1006 wird beispielsweise eine dritte Berechtigungshierarchie ausgehend von einem vierten Nutzer bereitgestellt. Durch die dritte Berechtigungshierarchie können weitere Kriterien als Zugriffsvoraussetzung für einen Zugriff auf das Datenobjekt miteinbezogen werden. Bei dem vierten Nutzer kann es sich beispielsweise um einen Sicherheitsbeauftragten handeln, welcher über die dritte Berechtigungshierarchie Nutzern, welche bestimmte Sicherheitskriterien erfüllen, eine Sicherheitsfreigabe zum Zugriff auf das Datenobjekt erteilt. Beispielsweise wird allen von der dritten Berechtigungshierarchie umfassten Nutzern das Attribut "Freigabe Sicherheitsstufe XY" oder ähnliches zugewiesen. Nach Ausführungsformen können beispielsweise auch nur die erste und zweite Berechtigungshierarchie bereitgestellt werden. Nach Ausführungsformen können Nutzern beispielsweise auch über die zweite Berechtigungshierarchie ein oder mehrere Attribute zugewiesen werden.

In Schritt 1008 wird werden die Zugriffsrechte eines dritten Nutzers vor der Freigabe eines geprüft für einen Zugriff auf ein Datenobjekt, wobei ein Zugriff auf das Datenobjekt nur dann gewährt wird, wenn der dritte Nutzer von der ersten Berechtigungshierarchie, der zweiten Berechtigungshierarchie und der dritten Berechtigungshierarchie umfasst ist

### Bezugszeichenliste

- 100: Zugriffs-Verwaltungssystem
- 102: Nutzdaten-Datenbank DB1
- 104: Nutzdaten-Datenbank DB2
- 105: öffentlicher Signaturprüfschlüssel
- 106: Datensatz
- 107: privater Signierschlüssel
- 108: Datensatz
- 110: Datensatz
- 111: Signatur
- 112: Datensatz
- 113: Signatur
- 114: Datensatz
- 115: Signatur
- 116: Datensatz
- 118: Delegierter-Parameter
- 122: Berechtigungsnachweis
- 123: Modul zur Zertifikatskettenprüfung
- 124: drittes Nutzer-Zertifikat
- 125: Log
- 126: Nutzer
- 128: Eigner-Zertifikat für Datenbank DB1
- 132: zweites Nutzer-Zertifikat
- 134: erstes Nutzer-Zertifikat
- 136: ID-Datenbank
- 137: Zugriffs-und Eignerschafts-Ermächtigungskettenobjekte
- 138: Zertifikatskette
- 139: Eignerschaftsermächtigungskettenobjekt
- 140: Zertifizierungsstelle
- 141: Eignerschaftsermächtigungskettenobjekt
- 142: erste Schnittstelle
- 143: Zugriffsermächtigungskettenobjekt
- 144: zweite Schnittstelle
- 150: Attribut-Zertifikat
- 152: dritte Schnittstelle
- 202: Nutzer/Datenbank Nutzer
- 204: Nutzer-Zertifikate
- 206: Konnektivitäts-Berechtigungsnachweis für best. Nutzer und DB
- 208: Signatur eines privaten Schlüssels einer Zertifizierungsstelle
- 210: öffentlicher Signaturprüfschlüssel einer Zertifizierungsstelle
- 212: privater Signaturschlüssel der Zertifizierungsstelle
- 214: Trust-Center
- 216: IDs von Nutzdaten-Datenbanken
- 220: Berechtigungsnachweis für Nutzer U2
- 222: Berechtigungsnachweis für Nutzer U3
- 225: Zugriffs-Berechtigungsnachweis für best. Nutzer und Datensatz
- 226: Zugriffs-Berechtigungsnachweis für best. Nutzer und Datensatz
- 227: Konnektivitäts-Berechtigungsnachweis für best. Nutzer und DB
- 228: Fehlen des [S] Zugriffsrechts für Nutzer U2 bzgl. Daten, die von Nutzer U1 erstellt wurden
- 229: Fehlen des [W] Zugriffsrechts für Nutzer U3 bzgl. Daten, die von Nutzer U1 erstellt wurden
- 230: Fehlen des [R] Zugriffsrechts für Nutzer U3 bzgl. Daten, die von Nutzer U1 erstellt wurden
- 232: [W] und [R] Zugriffsrechte des Nutzers U2 auf Daten, die von Nutzer U1 erstellt wurden
- 234: Zugriffsrechte des Nutzers U3 auf Daten, die von Nutzer U1 und U2 erstellt wurden
- 236: Signatur von Berechtigungsnachweis 225
- 237: Signatur von Berechtigungsnachweis 206
- 238: Signatur von Berechtigungsnachweis 226
- 239: Signatur von Berechtigungsnachweis 227
- 240: Signatur von Berechtigungsnachweis 242
- 242: Zugriffs-Berechtigungsnachweis für best. Nutzer und Datensatz
- 302: Geschäftsführer
- 304: Bereichsleiter Finanzen
- 308: Leitung IT-Sicherheit
- 310: Leitung IT-Infrastruktur
- 312: Leitung IT-Applikation Entwicklung
- 314: Administrator
- 316: Administrator
- 318: Administrator
- 402: Nutzer H
- 404-408: Zugriffs-Zertifikate für von H erstellte Daten
- 410: Datensatz
- 412: Nutzer-Zertifikat für Nutzer H
- 420: Nutzer B
- 424-428: Zugriffs-Zertifikate für von B erstellte Daten
- 414: Nutzer-Zertifikat für Nutzer B
- 422: Nutzer P
- 430-434: Zugriffs-Zertifikate für von P erstellte Daten
- 418: Nutzer-Zertifikat für Nutzer P
- 436: Nutzer D
- 440-444: Zugriffs-Zertifikate für von D erstellte Daten
- 438: Nutzer-Zertifikat für Nutzer D
- 600: Nutzdaten
- 702: ID-Management-Modul
- 704: Schlüsselkomponente A
- 706: Schlüsselkomponente B
- 902-908: Schritte
- 1002-1008: Schritte

## Patentansprüche

1. Verfahren zur Zugriffskontrolle auf Datenobjekte (106, 108, 110, 112, 114, 116), umfassend:
- Bereitstellen (1002) einer ausgehend von einem ersten Nutzer durch eine Mehrzahl von Nutzern dynamisch erzeugten ersten Berechtigungshierarchie, wobei die erste Berechtigungshierarchie sukzessive erzeugt wird, indem ausgehend von dem ersten Nutzer der jeweils zuletzt in die erste Berechtigungshierarchie aufgenommene Nutzer einem neu aufzunehmenden Nutzer persönlich ein erstes Zugriffsrecht zuweist, sodass jedem von der ersten Berechtigungshierarchie umfassten Nutzer das erste Zugriffsrecht zugewiesen ist, und wobei die ersten Berechtigungshierarchie neben dem ersten Nutzer zumindest zwei weitere Nutzer umfasst,
- Bereitstellen (1004) einer ausgehend von einem zweiten Nutzer erzeugten zweiten Berechtigungshierarchie, wobei die zweite Berechtigungshierarchie sukzessive erzeugt wird, indem ausgehend von dem zweiten Nutzer der jeweils zuletzt in die zweite Berechtigungshierarchie aufgenommene Nutzer einem neu aufzunehmenden Nutzer persönlich ein zweites Zugriffsrecht zuweist, sodass jedem von der zweiten Berechtigungshierarchie umfassten Nutzer das zweite Zugriffsrecht zugewiesen ist, und wobei die zweite Berechtigungshierarchie neben dem zweiten Nutzer zumindest einen weiteren Nutzer umfasst,
- Bereitstellen (1006) zumindest einer weiteren, ausgehend von einem vierten Nutzer erzeugten dritten Berechtigungshierarchie, wobei die dritte Berechtigungshierarchie sukzessive erzeugt wird, indem ausgehend von dem vierten Nutzer der jeweils zuletzt in die dritte Berechtigungshierarchie aufgenommene Nutzer einem neu aufzunehmenden Nutzer persönlich ein drittes Zugriffsrecht zuweist, sodass jedem von der dritten Berechtigungshierarchie umfassten Nutzer das dritte Zugriffsrecht zugewiesen ist, und wobei die dritte Berechtigungshierarchie neben dem vierten Nutzer zumindest einen weiteren Nutzer umfasst,
- Prüfen (1008) von Zugriffsrechten eines dritten Nutzers für einen Zugriff auf eines der Datenobjekte, wobei ein Zugriff auf das Datenobjekt nur dann gewährt wird, wenn der dritte Nutzer sowohl von der ersten Berechtigungshierarchie umfasst ist, sodass ihm das erste Zugriffsrecht zugewiesen ist, als auch von der zweiten Berechtigungshierarchie, sodass ihm ferner das zweite Zugriffsrecht zugewiesen ist, wobei das Prüfen (1008) der Zugriffsrechte des dritten Nutzers für den Zugriff auf das Datenobjekt ferner ein Prüfen zumindest der weiteren dritten Berechtigungshierarchie umfasst und ein Zugriff auf das Datenobjekt nur dann gewährt wird, wenn der dritte Nutzer ferner von der dritten Berechtigungshierarchie umfasst ist, sodass ihm das dritte Zugriffsrecht zugewiesen ist.

2. Verfahren nach Anspruch 1, wobei die erste Berechtigungshierarchie eine hierarchische Beziehungsstruktur zwischen den von der ersten Berechtigungshierarchie umfassten Nutzern implementiert, welche einer hierarchischen Beziehungsstruktur zwischen diesen Nutzer in einer hierarchisch strukturierten Organisation entspricht, der die Nutzer zugeordnet sind, und wobei der erste Nutzer an der Spitze dieser hierarchischen Beziehungsstruktur steht.

3. Verfahren nach einem der vorangehenden Ansprüche, wobei die Datenobjekten Datensätze umfassen und wobei das Erzeugen der ersten Berechtigungshierarchie umfasst:
- Erstellen einer ersten Verknüpfung (902) eines ersten Eigner-Zertifikats (128, 130), das einer Nutzdaten-Datenbank (102) zugeordnet ist, mit dem dritten Nutzer (U1), wobei ein Eigner-Zertifikat ein Zertifikat ist, das einer oder mehreren Nutzdaten-Datenbanken zugeordnet ist und jedem Nutzer, mit dem es verknüpft ist, das erste Zugriffsrecht gewährt, welches das Recht umfasst, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
- Bereitstellen (904) einer ersten Schnittstelle (142), die es dem dritten Nutzer (U1) ermöglicht, eine zweite Verknüpfung des zweiten Nutzers (U2) mit dem ersten Eigner-Zertifikat (128, 130) für die Nutzdaten-Datenbank (102) zu erstellen, um diesem zu ermöglichen, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
wobei das Erzeugen der zweiten Berechtigungshierarchie umfasst:
- Bereitstellen (906) einer zweiten Schnittstelle (144), die es dem zweiten Nutzer (U2), der einen der Datensätze (106, 108) in der Nutzdaten-Datenbank (102) angelegt hat, ermöglicht, mindestens ein Zugriffs-Zertifikat (Z.Zert_U2[W], Z.Zert_U2[R], Z.Zert_U2[S]), welches das zweite Zugriffsrecht gewährt und eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen,
wobei die Nutzdaten-Datenbank dem dritten Nutzer den Zugriff auf den von dem zweiten Nutzer angelegten Datensatz nur dann gewährt, wenn der dritte Nutzer sowohl mit einem Eigner-Zertifikat für die Nutzdaten-Datenbank als auch mit einem Zugriffs-Zertifikat für den Zugriff auf den Datensatz verknüpft ist.

4. Verfahren nach Anspruch 3, wobei das erste Zugriffsrecht ferner das Recht umfasst, Datensätze in der Nutzdaten-Datenbank anzulegen, denen es zugeordnet ist, und/oder
wobei das Erzeugen der dritten Berechtigungshierarchie umfasst:
- Bereitstellen einer dritten Schnittstelle (152), die es dem vierten Nutzer, der eine Kontrollfunktion ausübt, ermöglicht, mindestens ein Attributs-Zertifikat (150) mit dem Nutzer-Zertifikat des dritten Nutzers zu verknüpfen, wobei ein Attribut-Zertifikat ein Zertifikat ist, das zumindest ein Attribut umfasst und jedem Nutzer, mit dem es verknüpft ist, das zumindest eine Attribut zuordnet, wobei durch die Zuordnung des zumindest einen Attributs das dritte Zugriffsrecht gewährt wird,
wobei die Nutzdaten-Datenbank dem dritten Nutzer den Zugriff auf den von dem zweiten Nutzer angelegten Datensatz nur dann gewährt, wenn der dritte Nutzer zudem mit dem Attribut-Zertifikat verknüpft ist, und/oder
wobei die Prüfung der Zugriffsberechtigung umfasst:
- Empfangen einer Zugriffsanfrage durch die Nutzdaten-Datenbank von dem dritten Nutzer;
- Aufbauen einer Datenbankverbindung für den dritten Nutzer zu der Nutzdaten-Datenbank nur dann, wenn die Nutzdaten-Datenbank feststellt, dass ein valides Eigner-Zertifikat der Nutzdaten-Datenbank mit dem dritten Nutzer verknüpft ist, wobei der Aufbau der Datenbankverbindung unabhängig davon erfolgt, welche Zugriffs-Zertifikate mit dem dritten Nutzer verknüpft sind;
- falls die Datenbankverbindung aufgebaut wird, Gewährung des Zugriffs auf den Datensatz des zweiten Nutzers nur dann, wenn die Nutzdaten-Datenbank feststellt, dass ein Zugriffs-Zertifikat mit dem dritten Nutzer verknüpft ist, wobei der Zugriff nur im Rahmen der in dem Zugriffs-Zertifikat spezifizierten Art des Zugriffs gewährt wird, und/oder
wobei das mindestens eine Zugriffs-Zertifikat ein oder mehrere der folgenden Zugriffs-Zertifikattypen umfasst:
- ein Lesezugriffs-Zertifikat (Z.Zert_U2[R]), welches einem Nutzer einen lesenden Zugriff auf den Inhalt eines Datensatzes ermöglicht;
- ein Schreibzugriffs-Zertifikat (Z.Zert_U2[W]), welches einem Nutzer einen modifizierenden Zugriff auf den Inhalt eines bereits existierenden Datensatzes ermöglicht;
- ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, und/oder wobei die erste und/oder zweite Verknüpfung mit dem ersten Eigner-Zertifikat einen Delegierbarkeitsparameter (118) beinhaltet, welchem entweder ein Datenwert "DELEGIERBAR" oder ein Datenwert "NICHT DELEGIERBAR" zugeordnet werden kann, wobei eine zur Erstellung der Verknüpfungen mit den Eigner-Zertifikaten verwendete Programmlogik so konfiguriert ist, dass
- ein Nutzer, der mit einem Eigner-Zertifikat für die Nutzdaten-Datenbank (102) zugeordnet ist und welcher eine Verknüpfung mit dem Eigner-Zertifikat für einen anderen Nutzer für diese Nutzdaten-Datenbank erstellt, dem Delegierbarkeitsparameter der erstellten Verknüpfung unabhängig vom Delegierbarkeitsparameter seiner Verknüpfung mit dem Eigner-Zertifikat den Datenwert "NICHT DELEGIERBAR" zuordnen kann, dem Delegierbarkeitsparameter der erstellten Verknüpfung jedoch nur dann den Datenwert "DELEGIERBAR" zuordnen kann, wenn dem Delegierbarkeitsparameter seiner Verknüpfung mit dem Eigner-Zertifikats der Datenwert "DELEGIERBAR" zugeordnet ist; und
- ein Nutzer, welcher mit einem Eigner-Zertifikat für eine Nutzdaten-Datenbank verknüpft ist, wobei dem Delegierbarkeitsparameter der Verknüpfung der Wert "NICHT DELEGIERBAR" zugeordnet ist, keine weiteren Verknüpfungen mit dem Eigner-Zertifikat für andere Nutzer für diese Nutzdaten-Datenbank erstellen kann.

5. Verfahren nach einem der Ansprüche 3 bis 4, wobei die Verknüpfung des zumindest einen Zugriffs-Zertifikat mit dem erzeugten Datensatz so erfolgt, dass das zumindest eine Zugriffs-Zertifikat desjenigen Nutzers, welcher den Datensatz angelegt hat, als Bestandteil des Datensatzes in einem eigenen Feld der Nutzdaten-Datenbank gespeichert wird,
wobei vorzugsweise das zumindest eine Zugriffs-Zertifikat mehrere Zugriffs-Zertifikate (Z.Zert_U2[W], Z.Zert_U2[R], Z.Zert_U2[S]) für jeweils andere Zugriffsarten beinhaltet und das Verfahren ferner umfasst:
- für jede der Zugriffsarten, Erzeugen einer Indexstruktur aus den Zugriffs-Zertifikaten sämtlicher Datensätze, die diese Zugriffsart spezifiziert,
- in Antwort auf eine Datenbankfrage eines Nutzers, die auf einen oder mehrere der für die Nutzdaten-Datenbank erstellten Indices der Zugriffs-Zertifikate zugreift, Prüfen ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist, und Ermöglichung der Verwendung der ein oder mehreren Indices zur Ausführung der Datenbankabfrage nur dann, wenn dem Nutzer das Indexzugriffs-Zertifikat zugewiesen ist.

6. Verfahren nach einem der Ansprüche 3 bis 5, wobei es sich bei der Nutzdaten-Datenbank um eine NoSQL-Datenbank handelt.

7. Verfahren nach einem der Ansprüche 3 bis 6, wobei dem dritten Nutzer (134) ein erstes Nutzer-Zertifikat zugeordnet ist, wobei das erste Nutzer-Zertifikat in eine von einer Zertifizierungsstelle (140) herausgegebene erste Zertifikatskette prüfbar eingeordnet ist.
wobei vorzugsweise die Erstellung der zweiten Verknüpfung mit dem ersten Eigner-Zertifikat umfasst:
- Erzeugen der zweiten Verknüpfung mit dem ersten Eigner-Zertifikat so, dass dieses in die erste Zertifikatskette eingeordnet ist und durch das erste Nutzer-Zertifikat prüfbar ist.

8. Verfahren nach einem der Ansprüche 3 bis 7, wobei dem zweiten Nutzer ein zweiten Nutzer-Zertifikat (132) zugeordnet ist, wobei das zweite Nutzer-Zertifikat in eine von einer Zertifizierungsstelle (140) herausgegebene zweite Zertifikatskette prüfbar eingeordnet ist,
vorzugsweise ferner umfassend:
- Erstellen einer dritten Verknüpfung eines fünften Nutzers (126) mit dem ersten Eigner-Zertifikat durch den zweiten Nutzer, um dem fünften Nutzer zu ermöglichen, eine Kommunikationsverbindung zu der Nutzdaten-Datenbank aufzubauen zur Übertragung von ein oder mehreren Anfragen mit ein oder mehreren Datenbankoperationen an die Nutzdaten-Datenbank.

9. Verfahren nach einem der Ansprüche 3 bis 8, wobei die zumindest eine Verknüpfung mit dem zumindest einen Zugriffs-Zertifikat einen Delegierbarkeitsparameter beinhaltet, welchem entweder der Datenwert "DELEGIERBAR" oder der Datenwert "NICHT DELEGIERBAR" zugeordnet werden kann, wobei eine zur Erstellung jeder der Verknüpfungen mit den Zugriffs-Zertifikaten verwendete Programmlogik so konfiguriert ist, dass
- ein Nutzer, der mit einem Zugriffs-Zertifikat für einen Datensatz (106-116) in der Nutzdaten-Datenbank (102) verknüpft ist und welcher eine Verknüpfung mit dem Zugriffs-Zertifikat für einen anderen Nutzer für diesen Datensatz erstellt, dem Delegierbarkeitsparameter der erstellten Verknüpfung unabhängig vom Delegierbarkeitsparameter seiner Verknüpfung mit dem Zugriffs-Zertifikat den Datenwert "NICHT DELEGIERBAR" zuordnen kann, dem Delegierbarkeitsparameter der erstellten Verknüpfung jedoch nur dann den Datenwert "DELEGIERBAR" zuordnen kann, wenn dem Delegierbarkeitsparameter seiner Verknüpfung mit dem Zugriffs-Zertifikat der Datenwert "DELEGIERBAR" zugeordnet ist; und
- ein Nutzer, welcher mit einem Zugriffs-Zertifikat für einen Datensatz verknüpft ist, wobei dem Delegierbarkeitsparameter der Datenwert "NICHT DELEGIERBAR" zugeordnet ist, keine weiteren Verknüpfungen mit dem Zugriffs-Zertifikat für andere Nutzer für diesen Datensatz erstellen kann.

10. Verfahren nach einem der Ansprüche 3 bis 9, wobei in einer ID-Datenbank (136) eine Mehrzahl von Nutzer-Zertifikaten, eine Mehrzahl von Eigner-Zertifikaten, und/oder eine Mehrzahl von Zugriffs-Zertifikaten und/oder zumindest ein Attributs-Zertifikat gespeichert sind, ferner umfassend:
- Speichern von Eignerschaftsermächtigungskettenobjekten (139, 141), wobei jedes Eignerschaftsermächtigungskettenobjekt eines der Eigner-Zertifikate und ein oder mehrere der Nutzer-Zertifikate beinhaltet, wobei die Reihung der Nutzer-Zertifikate in dem Eignerschaftsermächtigungskettenobjekt die Sequenz der Nutzer, die dieses Eignerschafts-Zertifikat für jeweils andere Nutzer, deren Nutzer-Zertifikat in dem Eignerschaftsermächtigungskettenobjekt enthalten ist, erstellt haben, wiedergibt, wobei die erste Berechtigungshierarchie eines der Eignerschaftsermächtigungskettenobjekte umfasst und dessen Reihung von Nutzer-Zertifikate die hierarchische Beziehungsstruktur der von der ersten Berechtigungshierarchie umfassten Nutzer wiedergibt, und/oder
- Speichern von Zugriffsermächtigungskettenobjekten (143), wobei jedes Zugriffsermächtigungskettenobjekt eines der Zugriffs-Zertifikate und ein oder mehrere der Nutzer-Zertifikate beinhaltet, wobei die Reihung der Nutzer-Zertifikate in dem Zugriffsermächtigungskettenobjekt die Sequenz der Nutzer, die dieses Zugriffs-Zertifikat für jeweils andere Nutzer, deren Nutzer-Zertifikat in dem Zugriffsermächtigungskettenobjekt enthalten ist, erstellt haben, wiedergibt, wobei die zweite Berechtigungshierarchie eines der Zugriffsermächtigungskettenobjekte umfasst, und/oder
- Speichern von zumindest einem Attributszuweisungskettenobjekt, wobei das zumindest eine Attributszuweisungskettenobjekt das zumindest eine Attributs-Zertifikate und ein oder mehrere der Nutzer-Zertifikate beinhaltet, wobei die Reihung der Nutzer-Zertifikate in dem Attributszuweisungskettenobjekt die Sequenz der Nutzer, die dieses Zugriffs-Zertifikat für jeweils andere Nutzer, deren Nutzer-Zertifikat in dem Attributszuweisungskettenobjekt enthalten ist, erstellt haben, wiedergibt, wobei die dritte Berechtigungshierarchie das zumindest eine Attributszuweisungskettenobjekt umfasst.
- wobei vorzugsweise die Nutzdaten-Datenbanken frei sind von Zugriffsermächtigungskettenobjekten und für jeden Datensatz nur die Zugriffs-Zertifikate beinhalten, die dem Nutzer, welcher diesen Datensetz angelegt hat, Zugriff auf diesen Datensatz gewähren.

11. Verfahren nach einem der Ansprüche 3 bis 10, ferner umfassend:
- Empfangen einer Zugriffsanfrage des dritten Nutzers (U1) durch die Nutzdaten-Datenbank (102), wobei in der Zugriffsanfrage der dritte Nutzer Zugriff auf einen Datensatz (108), den der zweite Nutzer (U2) angelegt hat, anfragt;
- Ermitteln der Zugriffs-Zertifikate (Z.Zert_U2[W], Z.Zert_U2[R], Z.Zert_U2[S]) des zweiten Nutzers, der in der Nutzdaten-Datenbank als Bestandteil des einen Datensatzes (108) gespeichert ist, durch die Nutzdaten-Datenbank;
- Senden des ersten Nutzer-Zertifikats, das dem anfragenden Nutzer zugeordnet ist, und der ermittelten Zugriffs-Zertifikate, von der Nutzdaten-Datenbank an die ID-Datenbank;
- in Antwort auf den Empfang des ersten Nutzer-Zertifikats und der ermittelten Zugriffs-Zertifikate, Erzeugen eines Berechtigungsnachweises (220, 222) durch die ID-Datenbank, wobei der Berechtigungsnachweis angibt, ob der dritte Nutzer mit einem Eigner-Zertifikat der Nutzdaten-Datenbank (102) durch zumindest eines der Eignerschaftsermächtigungskettenobjekte verknüpft ist und ob der dritte Nutzer dem einen Datensatz (108) durch zumindest eines der Zugriffsermächtigungskettenobjekte zugewiesen ist;
- Übermitteln des Berechtigungsnachweises von der ID-Datenbank an die Nutzdaten-Datenbank;
- Prüfen, durch die Nutzdaten-Datenbank, anhand des Berechtigungsnachweises, ob der dritten Nutzer mit einem Eigner-Zertifikat der Nutzdaten-Datenbank verknüpft ist und ob und welche Zugriffs-Zertifikate dem dritten Nutzer in Bezug auf den einen Datensatz (108) zugewiesen sind;
- wobei die Nutzdaten-Datenbank dazu konfiguriert ist, dem dritten Nutzer einen Aufbau einer Datenbankverbindung nur dann zu gewähren, wenn dieser mit einem Eigner-Zertifikat der Nutzdaten-Datenbank verknüpft ist und dem dritten Nutzer Zugriff auf den einen Datensatz nur in dem Umfang zu gewähren, welche dem dritten Nutzer durch die diesem zugewiesenen Zugriffs-Zertifikate einräumen.

12. Verfahren nach einem der Ansprüche 3 bis 11, wobei die ID-Datenbank einen privaten Signierschlüssel (107) umfasst, wobei die Nutzdaten-Datenbank (102, 104 einen öffentlichen Signaturprüfschlüssel (105) umfasst, welcher zur Prüfung der mit dem Signierschlüssel erstellten Signaturen ausgebildet ist, ferner umfassend:
- Signieren des Berechtigungsnachweises durch die ID-Datenbank mit dem Signierschlüssel, wobei der Berechtigungsnachweis in signierter Form an die Nutzdaten-Datenbank übermittelt wird; und
- Prüfen, durch die Nutzdaten-Datenbank mittels des Signaturprüfschlüssels, ob die Signatur des Berechtigungsnachweises valide ist, wobei der Aufbau der Datenbankverbindung und der Datensatzzugriff nur dann gestattet wird, wenn die Signatur valide ist,
vorzugsweise ferner umfassend:
- im Zuge des Erzeugens des Berechtigungsnachweises (220, 222) beinhaltend eines der Eigner-Zertifikate, Durchführung einer Zertifikatskettenprüfung durch die ID-Datenbank, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekten zugewiesen ist, eingebunden ist, wobei die Signierung des Berechtigungsnachweises nur im Falle der Feststellung einer erfolgreichen Einbindung erfolgt; und/oder
- im Zuge der Erzeugens des Berechtigungsnachweises (220, 222) beinhaltend ein oder mehrere Zugriffs-Zertifikate eines Nutzers (U2), Durchführung einer Zertifikatskettenprüfung durch die ID-Datenbank, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist, wobei die Signierung des Berechtigungsnachweises nur im Falle der Feststellung einer erfolgreichen Einbindung erfolgt.

13. Verfahren nach einem der Ansprüche 3 bis 12, ferner umfassend:
- Verwenden der zweiten Schnittstelle durch den zweiten Nutzer (U2), der den Datensatz (108) angelegt hat, oder durch einen fünften Nutzer (U3), der durch ein Zugriffsermächtigungskettenobjekt mit einem oder mehreren Zugriffszertifikaten des Datenbank-Nutzers verknüpft ist, um ein weiteres Zugriffsberechtigungskettenobjekt anzulegen, in welchem ein oder mehrere dieser Zugriffs-Zertifikate (Z.Zert_U2[W], Z.Zert_U2[R], Z.Zert_U2[S]) desjenigen, der den Datensatz (108) angelegt hat, einem sechsten Nutzer zugewiesen werden,
- wobei die Nutzdaten-Datenbank dazu konfiguriert ist, vor dem Gewähren des Zugriffs auf den von dem zweiten Nutzer erzeugten Datensatz durch den sechsten Nutzer zu prüfen, ob dem sechsten Nutzer ein oder mehrere dieser Zugriffs-Zertifikate (Z.Zert_U2[W], Z.Zert_U2[R], Z.Zert_U2[S]) zugewiesen sind, und/oder
- wobei jedem der Datensätze in der Nutzdaten-Datenbank ein oder mehrere Zugriffs-Zertifikate des den Datensatz erstellenden Nutzers zugeordnet sind;
- wobei den Eigner-Zertifikaten in der ID-Datenbank jeweils ein oder mehrere Nutzer-Zertifikate so zugeordnet sind, dass die chronologische Sequenz von Nutzern, die sich Eignerrechte der Nutzdaten-Datenbank eingeräumt haben, jeweils in Form einer Hierarchie repräsentiert ist; und
- wobei den Zugriffs-Zertifikaten in der ID-Datenbank jeweils ein oder mehrere Nutzer-Zertifikate so zugeordnet sind, dass die chronologische Sequenz von Nutzern, die sich ein oder mehrere der Zugriffsrechte des den Datensatz erstellenden Nutzers eingeräumt haben, jeweils in Form einer Hierarchie repräsentieren ist; und
- wobei die den Eigner-Zertifikaten zugeordneten Hierarchien unabhängig von den den Zugriffs-Zertifikaten zugeordneten Hierarchien dynamisch erzeugt werden, und/oder
wobei die Nutzdaten-Datenbank die Datensätze in einem Format speichert, welches eine Extraktion der in den Datensätzen enthaltenen Information ohne einen Zugriff über eine Datenbankverbindung zu der Nutzdaten-Datenbank ausschließt, ferner mit:
- Durchführen eines Backups der Nutzdaten-Datenbank durch Kopieren der Nutzdaten-Datenbank durch einen Administrator-Nutzer auf ein anderes Speichermedium, wobei der Administrator-Nutzer kein Eigner-Zertifikat für diese Nutzdaten-Datenbank besitzt, und/oder
ferner mit:
- Schreiben der chronologischen Sequenz der Erzeugung aller Verknüpfungen von Nutzer-Zertifikaten mit Eigner-Zertifikaten und/oder Zugriffs-Zertifikaten in ein oder mehrere Datenbanklogs.

14. Computersystem zur Zugriffskontrolle auf Datenobjekte (106, 108, 110, 112, 114, 116), wobei das Computersystem ausgebildet ist zur:
- Bereitstellung (1002) einer ausgehend von einem ersten Nutzer durch eine Mehrzahl von Nutzern dynamisch erzeugten ersten Berechtigungshierarchie, wobei die erste Berechtigungshierarchie sukzessive erzeugt wird, indem ausgehend von dem ersten Nutzer der jeweils zuletzt in die erste Berechtigungshierarchie aufgenommene Nutzer einem neu aufzunehmenden Nutzer persönlich ein erstes Zugriffsrecht zuweist, sodass jedem von der ersten Berechtigungshierarchie umfassten Nutzer das erste Zugriffsrecht zugewiesen ist, und wobei die ersten Berechtigungshierarchie neben dem ersten Nutzer zumindest zwei weitere Nutzer umfasst,
- Bereitstellung (1004) einer ausgehend von einem zweiten Nutzer erzeugten zweiten Berechtigungshierarchie, wobei die zweite Berechtigungshierarchie sukzessive erzeugt wird, indem ausgehend von dem zweiten Nutzer der jeweils zuletzt in die zweite Berechtigungshierarchie aufgenommene Nutzer einem neu aufzunehmenden Nutzer persönlich ein zweites Zugriffsrecht zuweist, sodass jedem von der zweiten Berechtigungshierarchie umfassten Nutzer das zweite Zugriffsrecht zugewiesen ist, und wobei die zweite Berechtigungshierarchie neben dem zweiten Nutzer zumindest einen weiteren Nutzer umfasst,
- Bereitstellen (1006) zumindest einer weiteren, ausgehend von einem vierten Nutzer erzeugten dritten Berechtigungshierarchie, wobei die dritte Berechtigungshierarchie sukzessive erzeugt wird, indem ausgehend von dem vierten Nutzer der jeweils zuletzt in die dritte Berechtigungshierarchie aufgenommene Nutzer einem neu aufzunehmenden Nutzer persönlich ein drittes Zugriffsrecht zuweist, sodass jedem von der dritten Berechtigungshierarchie umfassten Nutzer das dritte Zugriffsrecht zugewiesen ist, und wobei die dritte Berechtigungshierarchie neben dem vierten Nutzer zumindest einen weiteren Nutzer umfasst,
- Prüfung (1008) von Zugriffsrechten eines dritten Nutzers für einen Zugriff auf eines der Datenobjekte, wobei ein Zugriff auf das Datenobjekt nur dann gewährt wird, wenn der dritte Nutzer sowohl von der ersten Berechtigungshierarchie umfasst ist, sodass ihm das erste Zugriffsrecht zugewiesen ist, als auch von der zweiten Berechtigungshierarchie, sodass ihm ferner das zweite Zugriffsrecht zugewiesen ist, wobei das Prüfen (1008) der Zugriffsrechte des dritten Nutzers für den Zugriff auf das Datenobjekt ferner ein Prüfen zumindest der weiteren dritten Berechtigungshierarchie umfasst und ein Zugriff auf das Datenobjekt nur dann gewährt wird, wenn der dritte Nutzer ferner von der dritten Berechtigungshierarchie umfasst ist, sodass ihm das dritte Zugriffsrecht zugewiesen ist.

15. Computersystem nach Anspruch 14, wobei das Computersystem ein Zugriffs-Verwaltungssystem (100) mit zumindest einer Nutzdaten-Datenbank (102, 104) sowie einer ID-Datenbank (136) umfasst und wobei die Datenobjekten Datensätze umfassen,
wobei die Erzeugung der ersten Berechtigungshierarchie umfasst:
- Verknüpfen (902) eines ersten Eigner-Zertifikats (128, 130), das der Nutzdaten-Datenbank (102) zugeordnet ist, mit dem dritten Nutzer (U1), wobei ein Eigner-Zertifikat ein Zertifikat ist, das einer oder mehreren Nutzdaten-Datenbanken zugeordnet ist und jedem Nutzer, mit dem es verknüpft ist, das erste Zugriffs-Recht gewährt, welches das Recht umfasst, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
- Bereitstellen (904) einer ersten Schnittstelle (142), die es dem dritten Nutzer (U1) ermöglicht, eine Verknüpfung des zweiten Nutzers (U2) mit dem ersten Eigner-Zertifikat (128, 130) für die Nutzdaten-Datenbank (102) zu erstellen, um diesem zu ermöglichen, eine Kommunikationsverbindung zu dieser Nutzdaten-Datenbank aufzubauen zur Übertragung von ein oder mehreren Anfragen mit ein oder mehreren Datenbankoperationen an die Nutzdaten-Datenbank,
wobei die Erzeugung der zweiten Berechtigungshierarchie umfasst:
- Bereitstellen (906) einer zweiten Schnittstelle (144), die es dem zweiten Nutzer (U2), der einen der Datensätze (106, 108) in der Nutzdaten-Datenbank (102) angelegt hat, ermöglicht, mindestens ein Zugriffs-Zertifikat (Z.Zert_U2[W], Z.Zert_U2[R], Z.Zert_U2[S]), welches das zweite Zugriffsrecht gewährt und eine Art des Datensatzzugriffs auf den von dem zweiten Nutzer erstellten Datensatz spezifiziert, zu erstellen und mit dem Nutzer-Zertifikat eines Nutzers, dem Zugriff auf diesen Datensatz gewährt werden soll, zu verknüpfen,
wobei die Nutzdaten-Datenbank dem dritten Nutzer den Zugriff auf den von dem zweiten Nutzer angelegten Datensatz nur dann gewährt, wenn der dritte Nutzer sowohl mit einem Eigner-Zertifikat für die Nutzdaten-Datenbank als auch mit einem Zugriffs-Zertifikat für den Zugriff auf den Datensatz verknüpft ist.

## Claims

1. A method for controlling access to data objects (106, 108, 110, 112, 114, 116), comprising:
- providing (1002) a first authorization hierarchy dynamically generated by a plurality of users starting from a first user, wherein the first authorization hierarchy is successively generated in that, starting from the first user, the respective user added most recently to the first authorization hierarchy personally assigns a first access right to a user to be newly added, so that each user encompassed by the first authorization hierarchy is assigned the first access right, and wherein the first authorization hierarchy, in addition to the first user, comprises least two further users;
- providing (1004) a second authorization hierarchy generated starting from a second user, wherein the second authorization hierarchy is successively generated in that, starting from the second user, the respective user added most recently to the second authorization hierarchy personally assigns a second access right to a user to be newly added, so that each user encompassed by the second authorization hierarchy is assigned the second access right, and wherein the second authorization hierarchy, in addition to the second user, comprises at least one further user;
- providing (1006) at least one further, third authorization hierarchy generated starting from a fourth user, wherein the third authorization hierarchy is successively generated in that, starting from the fourth user, the respective user added most recently to the third authorization hierarchy personally assigns a third access right to a user to be newly added, so that each user encompassed by the third authorization hierarchy is assigned the third access right, and wherein the third authorization hierarchy, in addition to the fourth user, comprises at least one further user; and
- verifying (1008) access rights of a third user for access to one of the data objects, wherein access to the data object is only granted when the third user is encompassed both by the first authorization hierarchy, so that he or she is assigned the first access right, and by the second authorization hierarchy, so that he or she is furthermore assigned the second access right, wherein the verification (1008) of the access rights of the third user for access to the data object furthermore comprises verifying at least the further third authorization hierarchy, and access to the data object is only granted when the third user is furthermore encompassed by the third authorization hierarchy so that he or she is assigned the third access right.

2. The method according to claim 1, wherein the first authorization hierarchy implements a hierarchical relationship structure between the users encompassed by the first authorization hierarchy, which corresponds to a hierarchical relationship structure between these users in a hierarchically structured organization to which the users are assigned, and the first user is at the top of this hierarchical relationship structure.

3. A method according to any one of the preceding claims, wherein the data objects comprise data records, and the generation of the first authorization hierarchy comprises:
- creating a first link (902) of a first owner certificate (128, 130), which is assigned to a user data database (102), to the third user (U1), wherein an owner certificate is a certificate that is assigned to one or more user data databases and grants the first access right to each user to whom it is linked, which encompasses the right to establish a communication link to this user data database for transmitting one or more inquiries to the user data database by way of one or more database operations;
- providing (904) a first interface (142), which allows the third user (U1) to create a second link of the second user (U2) to the first owner certificate (128, 130) for the user data database (102) so as to enable him or her to establish a communication link to this user data database for transmitting one or more inquiries to the user data database by way of one or more database operations,
the generation of the second authorization hierarchy comprising:
- providing (906) a second interface (144), which allows the second user (U2), who has set up one of the data records (106, 108) in the user data database (102), to create at least one access certificate (Z.Zert_U2[W], Z.Zert_U2[R], Z.Zert_U2[S]) which grants the second access right and specifies a type of the data record access to the data record created by the second user, and to link this to the user certificate of a user who is to be granted access to this data record,
the user data database only granting the third user access to the data record set up by the second user when the third user is linked both to an owner certificate for the user data database and to an access certificate for access to the data record.

4. The method according to claim 3, wherein the first access right furthermore encompasses the right to set up data records in the user data database to which it is assigned, and/or
wherein the generation of the third authorization hierarchy comprises:
- providing a third interface (152), which allows the fourth user, who carries out a control function, to link at least one attribute certificate (150) to the user certificate of the third user, wherein an attribute certificate is a certificate which encompasses at least one attribute and assigns the at least one attribute to each user to whom it is linked, wherein the third access right is granted by the assignment of the at least one attribute;
the user data database only granting the third user access to the data record set up by the second user when the third user is additionally linked to the attribute certificate and/or
the verification of the access authorization comprising:
- receiving an access inquiry through the user data database from the third user;
- only establishing a database connection for the third user to the user data database when the user data database determines that a valid owner certificate of the user data database is linked to the third user, wherein the establishment of a database connection is carried out regardless of which access certificates are linked to the third user;
- if the database connection is being established, only granting access to the data record of the second user when the user data database determines that an access certificate is linked to the third user, wherein the access is only granted within the scope of the type of access specified in the access certificate; and/or
the at least one access certificate encompassing one or more of the following access certificate types:
- a read access certificate (Z.Zert_U2[R]), which gives a user read access to the content of a data record;
- a write access certificate (Z.Zert_U2[W]), which gives a user modifying access to the content of an existing data record;
- an index access certificate (Z.Zert_U2[S]), which gives a user knowledge about the existence of the data record in the user data database and read access to metadata of the data record; and/or
the first and/or second links to the first owner certificate including a delegatability parameter (118), by way of which either a data value "DELEGATABLE" or a data value "NON-DELEGATABLE" may be assigned, wherein a program logic used to create the links to the owner certificate is configured in such a way that
- a user, to whom an owner certificate for the user data database (102) is assigned and who creates a link to the owner certificate for another user for this user data database, is able to assign the data value "NON-DELEGATABLE" to the delegatability parameter of the created link, regardless of the delegatability parameter of his or her link to the owner certificate, however is only able to assign the data value "DELEGATABLE" to the delegatability parameter of the created link when the data value "DELEGATABLE" is assigned to the delegatability parameter of his or her link to the owner certificate; and
- a user, who is linked to an owner certificate for a user data database, wherein the value "NON-DELEGATABLE" is assigned to the delegatability parameter of the link, is not able to create any further links to the owner certificate for other users for this user data database.

5. The method according to any one of claims 3 to 4, wherein the link of the at least one access certificate to the generated data record is carried out in such a way that the at least one access certificate of the user who set up the data record is stored as an integral part of the data record in a dedicated field of the user data database,
the at least one access certificate preferably including a plurality of access certificates (Z.Zert_U2[W], Z.Zert_U2[R], Z.Zert_U2[S]) for other access types in each case, and the method furthermore comprising:
- for each of the access types, generating an index structure from the access certificates of all data records, which specifies this access type;
- in response to a database inquiry of a user which accesses one or more of the indices of the access certificates created for the user data database, verifying whether the user is assigned an index access certificate (Z.Zert_U2[S]) which gives a user knowledge about the existence of the data record in the user data database and read access to metadata of the data record, and only allowing the use of the one or more indices for executing the database query when the index access certificate is assigned to the user.

6. A method according to any one of claims 3 to 5, wherein the user data database is an NoSQL database.

7. A method according to any one of claims 3 to 6, wherein the third user (134) is assigned a first user certificate, the first user certificate being verifiably classified into a first certificate chain issued by a certifying authority (140),
the creation of the second link to the first owner certificate preferably comprising:
- generating the second link to the first owner certificate in such a way that this is classified into the first certificate chain and verifiable by the first user certificate.

8. A method according to any one of claims 3 to 7, wherein the second user is assigned a second user certificate (132), the second user certificate being verifiably classified into a second certificate chain issued by a certifying authority (140),
preferably furthermore comprising:
- creating a third link of a fifth user (126) to the first owner certificate by the second user, to enable the fifth user to establish a communication link to the user data database for transmitting one or more inquiries to the user data database by way of one or more database operations.

9. A method according to any one of claims 3 to 8, wherein the at least one link to the at least one access certificate includes a delegatability parameter, which can be assigned either the data value "DELEGATABLE" or the data value "NON-DELEGATABLE," a program logic used to create each of the links to the access certificates being configured in such a way that
- a user, who is linked to an access certificate for a data record (106-116) in the user data database (102) and who creates a link to the access certificate for another user for this data record, is able to assign the data value "NON-DELEGATABLE" to the delegatability parameter of the created link, regardless of the delegatability parameter of his or her link to the access certificate, however is only able to assign the data value "DELEGATABLE" to the delegatability parameter of the established link when the data value "DELEGATABLE" is assigned to the delegatability parameter of his or her link to the access certificate; and
- a user, who is linked to an access certificate for a data record, wherein the data value "NON-DELEGATABLE" is assigned to the delegatability parameter, is not able to create any further links to the access certificate for other users for this data record.

10. A method according to any one of claims 3 to 9, wherein a plurality of user certificates, a plurality of owner certificates and/or a plurality of access certificates and/or at least one attribute certificate are stored in an ID database (136), furthermore comprising:
- storing ownership empowerment chain objects (139, 141), wherein each ownership empowerment chain object includes one of the owner certificates and one or more of the user certificates, wherein the string of the user certificates in the ownership empowerment chain object reflects the sequence of the users who created this ownership certificate for respective other users whose user certificate is included in the ownership empowerment chain object, wherein the first authorization hierarchy encompasses one of the ownership empowerment chain objects, and its string of user certificates reflects the hierarchical relationship structure of the users encompassed by the first authorization hierarchy; and/or
- storing access empowerment chain objects (143), wherein each access empowerment chain object includes one of the access certificates and one or more of the user certificates, wherein the string of the user certificates in the access empowerment chain object reflects the sequence of the users who created this access certificate for respective other users whose user certificate is included in the access empowerment chain object, wherein the second authorization hierarchy encompasses one of the access empowerment chain objects; and/or
- storing at least one attribute assignment chain object, wherein the at least one attribute assignment chain object includes the at least one attribute certificate and one or more of the user certificates, wherein the string of the user certificates in the attribute assignment chain object reflects the sequence of the users who created this access certificate for respective other users whose user certificate is included in the attribute assignment chain object, wherein the third authorization hierarchy encompasses the at least one attribute assignment chain object,
- the user data databases preferably being free of access empowerment chain objects and only including, for each data record, the access certificates which grant the user who set up this data record access to this data record.

11. A method according to any one of claims 3 to 10, furthermore comprising:
- receiving an access inquiry of a third user (U1) through the user data database (102), wherein the third user requests access to a data record (108) set up by the second user (U2) in the access inquiry;
- ascertaining the access certificates (Z.Zert_U2[W], Z.Zert_U2[R], Z.Zert_U2[S]) of the second user, who is stored in the user data database as an integral part of the one data record (108), by the user data database;
- sending the first user certificate assigned to the requesting user and the ascertained access certificates from the user data database to the ID database;
- in response to the receipt of the first user certificate and the ascertained access certificate, generating a proof of authorization (220, 222) by the ID database, wherein the proof of authorization indicates whether the third user is linked to an owner certificate of the user data database (102) by at least one of the ownership empowerment chain objects, and whether the third user is assigned to the one data record (108) by at least one of the access empowerment chain objects;
- transmitting the proof of authorization from the ID database to the user data database;
- verifying, by the user data database, based on the proof of authorization, whether the third user is linked to an owner certificate of the user data database, and whether and what access certificates are assigned to the user with respect to the one data record (108),
- the user data database being configured to only grant the third user an establishment of a database link when he or she is linked to an owner certificate of the user data database, and to only grant the third user access to the one data record in the scope which the third user is granted by the access certificates assigned to him or her.

12. A method according to any one of claims 3 to 11, wherein the ID database comprises a private signature key (107), and the user data database (102, 104) comprises a public signature verification key (105) which is designed to verify the signatures created by way of the signature key, furthermore comprising:
- signing the proof of authorization by the ID database using the signature key, wherein the proof of authorization is transmitted in signed form to the user data database; and
- verifying, by the user data database, by way of the signature verification key, whether the signature of the proof of authorization is valid, wherein the establishment of the database link and the data record access are only permitted when the signature is valid;
preferably furthermore comprising:
- in the course of the generation of the proof of authorization (220, 222) including one of the owner certificates, carrying out a certificate chain verification by the ID database to determine whether this owner certificate is verifiably integrated into the certificate chain of the user certificate to whom this owner certificate is assigned in one of the ownership empowerment chain objects, wherein the signing of the proof of authorization only occurs when a successful integration has been determined; and/or
- in the course of the generation of the proof of authorization (220, 222) including one or more of the access certificates of a user (U2), carrying out a certificate chain verification by the ID database to determine for each of the access certificates of the user whether this access certificate is verifiably integrated into the certificate chain of the user certificate to whom this access certificate is assigned in one of the access empowerment chain objects, wherein the signing of the proof of authorization only occurs when a successful integration has been determined.

13. A method according to any one of claims 3 to 12, furthermore comprising:
- using the second interface by the second user (U2), who set up the data record (108), or by a fifth user (U3), who is linked to one or more access certificates of the database user by an access empowerment chain object, to set up a further access empowerment chain object in which one or more of these access certificates (Z.Zert_U2[W], Z.Zert_U2[R], Z.Zert_U2[S]) of the user who set up the data record (108) are assigned to a sixth user,
- the user data database being configured to verify, prior to granting access to the data record generated by the second user by the sixth user, whether one or more of these access certificates (Z.Zert_U2[W], Z.Zert_U2[R], Z.Zert_U2[S]) are assigned to the sixth user; and/or
- each of the data records in the user data database being assigned one or more access certificates of the user creating the data record;
- in each case one or more user certificates being assigned to the owner certificates in the ID database in such a way that the chronological sequence of users who granted themselves owner rights of the user data database is in each case represented in the form of a hierarchy; and
- in each case one or more user certificates being assigned to the access certificates in the ID database in such a way that the chronological sequence of users who granted themselves one or more of the access rights of the user creating the data record is in each case represented in the form of a hierarchy; and
- the hierarchies assigned to the owner certificates being dynamically generated, regardless of the hierarchies assigned to the access certificates; and/or
the user data database storing the data records in a format which precludes an extraction of the information contained in the data records without access via a database link to the user data database, furthermore comprising:
- carrying out a backup of the user data database by copying the user data database by an administrator user to another storage medium, wherein the administrator user does not possess an owner certificate for this user data database; and/or
furthermore comprising:
- writing the chronological sequence of the generation of all links of user certificates to owner certificates and/or access certificates into one or more database logs.

14. A computer system for controlling access to data objects (106, 108, 110, 112, 114, 116), wherein the computer system is designed to:
- provide (1002) a first authorization hierarchy dynamically generated by a plurality of users starting from a first user, wherein the first authorization hierarchy is successively generated in that, starting from the first user, the respective user added most recently to the first authorization hierarchy personally assigns a first access right to a user to be newly added, so that each user encompassed by the first authorization hierarchy is assigned the first access right, and wherein the first authorization hierarchy, in addition to the first user, encompasses at least two further users;
- provide (1004) a second authorization hierarchy generated starting from a second user, wherein the second authorization hierarchy is successively generated in that, starting from the second user, the respective user added most recently to the second authorization hierarchy personally assigns a second access right to a user to be newly added, so that each user encompassed by the second authorization hierarchy is assigned the second access right, and wherein the second authorization hierarchy, in addition to the second user, encompasses at least one further user;
- provide (1006) at least one further, third authorization hierarchy generated starting from a fourth user, wherein the third authorization hierarchy is successively generated in that, starting from the fourth user, the respective user added most recently to the third authorization hierarchy personally assigns a third access right to a user to be newly added, so that each user encompassed by the third authorization hierarchy is assigned the third access right, and wherein the third authorization hierarchy, in addition to the fourth user, comprises at least one further user; and
- verify (1008) access rights of a third user for access to one of the data objects, wherein access to the data object is only granted when the third user is encompassed both by the first authorization hierarchy, so that he or she is assigned the first access right, and by the second authorization hierarchy, so that he or she is furthermore assigned the second access right, wherein the verification (1008) of the access rights of the third user for access to the data object furthermore comprises verifying at least the further third authorization hierarchy, and access to the data object is only granted when the third user is furthermore encompassed by the third authorization hierarchy so that he or she is assigned the third access right.

15. The computer system according to claim 14, wherein the computer system comprises an access management system (100), comprising at least one user data database (102, 104), and an ID database (136), and the data objects comprise data records;
the generation of the first authorization hierarchy comprising:
- linking (902) a first owner certificate (128, 130), which is assigned to the user data database (102), to the third user (U1), wherein an owner certificate is a certificate that is assigned to one or more user data databases and grants the first access right to each user to which it is linked, which encompasses the right to establish a communication link to this user data database for transmitting one or more inquiries to the user data database by way of one or more database operations;
- providing (904) a first interface (142), which allows the third user (U1) to create a link of the second user (U2) to the first owner certificate (128, 130) for the user data database (102) so as to enable him or her to establish a communication link to this user data database for transmitting one or more inquiries to the user data database by way of one or more database operations,
the generation of the second authorization hierarchy comprising:
- providing (906) a second interface (144), which allows the second user (U2), who has set up one of the data records (106, 108) in the user data database (102), to create at least one access certificate (Z.Zert_U2[W], Z.Zert_U2[R], Z.Zert_U2[S]), which grants the second access right and specifies a type of the data record access to the data record created by the second user, and to link this to the user certificate of a user who is to be granted access to this data record,
the user data database only granting the third user access to the data record set up by the second user when the third user is linked both to an owner certificate for the user data database and to an access certificate for access to the data record.

## Revendications

1. Procédé de contrôle d'accès à des objets de données (106, 108, 110, 112, 114, 116) comprenant :
- la mise au point (1002) d'une première hiérarchie d'autorisation générée de manière dynamique en partant d'un premier utilisateur, par une multiplicité d'utilisateurs, où la première hiérarchie d'autorisation est créée de manière successive, en ce qu'en partant du premier utilisateur, l'utilisateur respectivement pris en compte en dernier lieu dans la première hiérarchie d'autorisation attribue personnellement un premier droit d'accès à un nouvel utilisateur à prendre en compte, de sorte qu'à chaque utilisateur pris en compte dans la première hiérarchie d'autorisation est attribué le premier droit d'accès, et où la première hiérarchie d'autorisation comprend, outre le premier utilisateur, au moins deux autres utilisateurs,
- la mise au point (1004) d'une deuxième hiérarchie d'autorisation générée en partant d'un deuxième utilisateur, où la deuxième hiérarchie d'autorisation est créée de manière successive, en ce qu'en partant du deuxième utilisateur, l'utilisateur respectivement pris en compte en dernier lieu dans la deuxième hiérarchie d'autorisation attribue personnellement un deuxième droit d'accès à un nouvel utilisateur à prendre en compte, de sorte qu'à chaque utilisateur pris en compte dans la deuxième hiérarchie d'autorisation est attribué le deuxième droit d'accès, et où la deuxième hiérarchie d'autorisation comprend, outre le deuxième utilisateur, au moins un nouvel utilisateur,
- la mise au point (1006) d'au moins une nouvelle troisième hiérarchie d'autorisation générée en partant d'un quatrième utilisateur, où la troisième hiérarchie d'autorisation est créée de manière successive, en ce qu'en partant du quatrième utilisateur, l'utilisateur respectivement pris en compte en dernier lieu dans la troisième hiérarchie d'autorisation attribue personnellement un troisième droit d'accès à un nouvel utilisateur à prendre en compte, de sorte qu'à chaque utilisateur pris en compte dans la troisième hiérarchie d'autorisation est attribué le troisième droit d'accès, et où la troisième hiérarchie d'autorisation comprend, outre le quatrième utilisateur, au moins un nouvel utilisateur,
- la vérification (1008) de droits d'accès d'un troisième utilisateur pour un accès à l'un des objets de données, où un accès à l'objet de donnée n'est accordé que si le troisième utilisateur est pris en compte à la fois par la première hiérarchie d'autorisation, de sorte que le premier droit d'accès lui est accordé, et à la fois par la deuxième hiérarchie d'autorisation de sorte qu'en outre le deuxième droit d'accès lui est accordé, où la vérification (1008) des droits d'accès du troisième utilisateur pour l'accès à l'objet de donnée comprend en outre une vérification de l'au moins une troisième hiérarchie d'autorisation et un accès à l'objet de donnée n'est alors accordé que si le troisième utilisateur est en outre pris en compte par la troisième hiérarchie d'autorisation, de sorte que le troisième droit d'accès lui est accordé.

2. Procédé selon la revendication 1, dans lequel la première hiérarchie d'autorisation met en oeuvre une structure de relation hiérarchique entre les utilisateurs compris par la première hiérarchie d'autorisation, laquelle correspond à une structure de relation hiérarchique entre ces utilisateurs dans une organisation structurée hiérarchiquement à laquelle les utilisateurs sont associés, et où le premier utilisateur se tient à la tête de cette structure de relation hiérarchique.

3. Procédé selon l'une des revendications précédentes, dans lequel les objets de données comprennent des ensembles de données et dans lequel la création de la première hiérarchie d'autorisation comprend :
- l'établissement d'une première combinaison (902) d'un certificat propriétaire (128, 130), qui est associé à une banque de données de données d'utilisation (102), avec le troisième utilisateur (U1), où un certificat propriétaire est un certificat qui est associé à une ou à plusieurs banques de données de données d'utilisation et accorde à chaque utilisateur, avec lequel il est relié, le premier droit d'accès lequel comprend le droit d'établir une liaison de communication vers cette banque de données de données d'utilisation pour la transmission d'une ou de plusieurs demandes avec une ou plusieurs opérations de banque de données à la banque de données de données d'utilisation,
- la mise en place (904) d'une première interface (142) qui permet au troisième utilisateur (U1) d'établir une deuxième combinaison du deuxième utilisateur (U2) avec le premier certificat propriétaire (128, 130) pour la banque de données de données d'utilisation (102) afin de permettre à celui-ci d'établir une liaison de communication vers cette banque de données de données d'utilisation pour la transmission d'une ou de plusieurs demandes à la banque de données de données d'utilisation ou d'une ou de plusieurs opérations de banque de données à celle-ci,
dans lequel la création de la deuxième hiérarchie d'autorisation comprend :
- la mise en place (906) d'une deuxième interface (144) qui permet au deuxième utilisateur (U2), qui a ajouté un des ensembles de données (106, 108) dans la banque de données des données d'utilisation (102), d'établir au moins un certificat d'accès (Z.Zert_U2[W], Z.Zert_U2[R], Z.Zert_U2[S]), lequel accorde le deuxième droit d'accès et spécifie un type d'accès à l'ensemble de données pour l'ensemble de données établi par le deuxième utilisateur et de combiner avec le certificat d'utilisateur d'un utilisateur auquel l'accès à cet ensemble de données doit être accordé,
dans lequel la banque de données de données d'utilisation n'accorde au troisième utilisateur l'accès à l'ensemble de données ajouté par le deuxième utilisateur que si le troisième utilisateur est combiné à la fois avec un certificat propriétaire pour la banque de données de données d'utilisation et avec un certificat d'accès pour l'accès à la banque de données.

4. Procédé selon la revendication 3, dans lequel le premier droit d'accès comprend en outre le droit de déposer des ensembles de données dans la banque de données de données d'utilisation, auxquels il est associé, et/ou
dans lequel la création de la troisième hiérarchie d'autorisation comprend :
- la mise en place d'une troisième interface (152) qui permet au quatrième utilisateur, qui exerce une fonction de contrôle, de combiner au moins un certificat d'attribut (150) avec le certificat d'utilisateur du troisième utilisateur, où un certificat d'attribut est un certificat qui comprend au moins un attribut et associe à chaque utilisateur, avec lequel il est combiné, l'au moins un attribut, où, par l'association de l'au moins un attribut, le troisième droit d'accès est accordé,
dans lequel la banque de données de données d'utilisation accorde au troisième utilisateur l'accès à l'ensemble de données déposé par le deuxième utilisateur uniquement si le troisième utilisateur est combiné en plus avec le certificat d'attribut, et/ou
dans lequel la vérification de l'autorisation d'accès comprend :
- la réception d'une demande d'accès par la banque de données de données d'utilisation par le troisième utilisateur ;
- l'élaboration d'une liaison à la banque de données pour le troisième utilisateur en plus de la banque de données de données d'utilisation uniquement si la banque de données de données d'application constate qu'un certificat propriétaire valide de la banque de données de données d'utilisation est combiné avec le troisième utilisateur, où l'élaboration de la liaison à la banque de données a lieu de manière indépendante du fait de quels certificats d'accès sont combinés avec le troisième utilisateur ;
- dans le cas où la communication à la banque de données est établie, l'accord pour l'accès à l'ensemble de données du deuxième utilisateur uniquement si la banque de données de données d'utilisation constate qu'un certificat d'accès est combiné avec le troisième utilisateur, où l'accès n'est accordé que dans le cadre du type d'accès spécifié dans le certificat d'accès, et/ou
dans lequel l'au moins un certificat d'accès comprend un ou plusieurs types de certificats d'accès suivants :
- un certificat d'accès en lecture (Z.Zert._U2[R]) lequel permet à un utilisateur un accès en lecture pour le contenu d'un ensemble de données ;
- un certificat d'accès en écriture (Z.Zert._U2[W]) lequel permet à un utilisateur un accès de modification pour le contenu d'un ensemble de données déjà existant ;
- un certificat d'accès à l'index (Z.Zert._U2[S]) lequel permet à un utilisateur la connaissance de l'existence de l'ensemble de données dans la banque de données de données d'utilisation et un accès en lecture à des métadonnées de l'ensemble de données, et/ou
dans lequel la première, et/ou la deuxième, combinaison avec le certificat propriétaire contient un paramètre de délégabilité (118), auquel peut être associée soit la valeur de donnée « DELEGABLE », soit une valeur de donnée « NON DELEGABLE », où une logique de programme employée avec les certificats propriétaires pour l'établissement des combinaisons est conçue de telle manière
- qu'un utilisateur, qui est associé avec un certificat propriétaire pour la banque de données de données d'utilisation (102) et lequel établit une combinaison avec le certificat propriétaire pour un autre utilisateur pour cette banque de données de données d'utilisation, peut associer au paramètre de délégabilité de la combinaison établie de manière indépendante des paramètres de délégabilité sa combinaison avec le certificat propriétaire la valeur de donnée « NON DELEGABLE », ne peut associer au paramètre de délégabilité de la combinaison établie cependant uniquement la valeur de donnée « DELEGABLE » lorsque la valeur de donnée « DELEGABLE' est associée au paramètre de délégabilité de sa combinaison avec le certificat propriétaire ; et
- un utilisateur lequel est combiné avec le certificat propriétaire pour une banque de données de données d'utilisation, où la valeur « NON DELEGABLE » est associée au paramètre de délégabilité de la combinaison, ne peut plus établir de nouvelle combinaison avec le certificat propriétaire pour d'autres utilisateurs pour cette banque de données de données d'utilisation.

5. Procédé selon l'une des revendications 3 à 4, dans lequel la combinaison de l'au moins un certificat d'accès avec l'ensemble de données créé a lieu de telle manière que l'au moins un certificat d'accès de l'utilisateur en question, qui a déposé l'ensemble de données, est stocké sous forme de composant de l'ensemble de données dans un champ propre de la banque de données de données d'utilisation,
dans lequel, de préférence, l'au moins un certificat d'accès contient plusieurs certificats d'accès (Z.Zert_U2[W]), Z.Zert_U2[R]), Z.zert_U2[S]) pour respectivement d'autres types d'accès et le procédé comprend en outre :
- pour chacun des types d'accès, la création d'une structure d'index à partir des certificats d'accès de tous les ensembles de données que spécifie ce type d'accès,
- en réponse à une interrogation de la banque de données d'un utilisateur qui accède à un ou à plusieurs des indices des certificats d'accès établis pour la banque de données des données d'utilisation, la vérification si un certificat d'accès à l'index (Z.Zert_U2[S]), lequel permet à un utilisateur la connaissance de l'existence de l'ensemble de données dans la banque de données de données d'utilisation et un accès en lecture des métadonnées de l'ensemble de données, est associé à l'utilisateur, et la possibilité de permettre l'emploi de l'indice ou des indices pour l'exécution de l'interrogation de la banque de données uniquement si le certificat d'accès à l'index est accordé à l'utilisateur.

6. Procédé selon l'une des revendications 3 à 5, dans lequel, dans le cas de la banque de données de données d'utilisation, il s'agit d'une banque de données NoSQL.

7. Procédé selon l'une des revendications 3 à 6, dans lequel un premier certificat d'utilisateur est associé au troisième utilisateur (134), où le premier certificat d'utilisateur est classé de manière à pouvoir être vérifié dans une première chaîne de certificats délivrée par un organisme de certification (140),
dans lequel, de préférence, l'établissement de la deuxième combinaison avec le premier certificat propriétaire comprend :
- la création de la deuxième combinaison avec le premier certificat propriétaire de sorte que celui-ci se trouve classé dans la première chaîne de certificats et est vérifiable par le certificat d'utilisateur.

8. Procédé selon l'une des revendications 3 à 7, dans lequel un deuxième certificat d'utilisateur (132) est associé au deuxième utilisateur, où le deuxième certificat d'utilisateur est classé de manière à pouvoir être vérifié dans une deuxième chaîne de certificats délivrée par un organisme de certification (140),
comprenant, en outre, de préférence :
- l'établissement d'une troisième combinaison d'un cinquième utilisateur (126) avec le premier certificat propriétaire par le deuxième utilisateur afin de permettre au cinquième utilisateur d'établir une liaison de communication vers la banque de données de données d'utilisation pour la transmission d'une ou de plusieurs demandes avec une ou plusieurs opérations de banque de données à la banque de données de données d'utilisation.

9. Procédé selon l'une des revendications 3 à 8, dans lequel l'au moins une combinaison avec l'au moins un certificat d'accès contient un paramètre de délégabilité, auquel peut être associée soit la valeur de donnée « DELEGABLE », soit la valeur de donnée « NON DELEGABLE », où une logique de programme employée pour l'établissement de chacune des combinaisons avec les certificats d'accès est conçue de telle manière,
- qu'un utilisateur, qui est associé avec un certificat d'accès pour un ensemble de données (106 à 116), est combiné dans la banque de données de données d'utilisation (102) et lequel établit une combinaison avec le certificat d'accès pour un autre utilisateur pour cet ensemble de données, peut associer au paramètre de délégabilité de la combinaison établie de manière indépendante de paramètres de délégabilité sa combinaison avec le certificat d'accès la valeur de donnée « NON DELEGABLE », ne peut associer au paramètre de délégabilité de la combinaison établie cependant uniquement la valeur de donnée « DELEGABLE » lorsque la valeur de donnée « DELEGABLE » est associée au paramètre de délégabilité de sa combinaison avec le certificat d'accès ; et
- un utilisateur, lequel est combiné avec le certificat d'accès pour un ensemble de données, où la valeur « NON DELEGABLE » est associée au paramètre de délégabilité, ne peut plus établir de nouvelle combinaison avec le certificat d'accès pour d'autres utilisateurs pour cet ensemble de données.

10. Procédé selon l'une des revendications 3 à 9, dans lequel une multiplicité de certificats d'utilisateurs, une multiplicité de certificats propriétaires et/ou une multiplicité de certificats d'accès, et/ou au moins un certificat d'attribut sont stockés dans une banque de données d'ID (136), comprenant en outre :
- le stockage d'objets de chaînes d'autorisation de propriété (139, 141), où chaque objet de chaînes d'autorisation de propriété contient un des certificats propriétaires et un ou plusieurs certificats d'utilisateur, où le classement des certificats d'utilisateurs dans l'objet de chaînes d'autorisation de propriété reproduit la séquence des utilisateurs qui ont établi ce certificat de propriété pour respectivement d'autres utilisateurs dont les certificats d'utilisateurs sont contenus dans l'objet de chaînes d'autorisation de propriété, où la première hiérarchie d'autorisation contient un des objets de chaînes d'autorisation de propriété et dont le classement de certificats d'utilisateurs reproduit la structure de relation hiérarchique des utilisateurs compris par la première hiérarchie d'autorisation, et/ou
- le stockage d'objets de chaînes d'autorisation d'accès (143), où chaque objet de chaînes d'autorisation d'accès contient un des certificats d'accès et un ou plusieurs certificats d'utilisateur, où le classement des certificats d'utilisateurs dans l'objet de chaînes d'autorisation d'accès reproduit la séquence des utilisateurs qui ont établi ce certificat d'accès pour respectivement d'autres utilisateurs dont les certificats d'utilisateurs sont contenus dans l'objet de chaînes d'autorisation d'accès, où la deuxième hiérarchie d'autorisation contient un des objets de chaînes d'autorisation d'accès, et/ou
- le stockage d'au moins un objet de chaines d'allocation d'attribut, où l'au moins un objet de chaines d'allocation d'attribut contient l'au moins un certificat d'attribut et un ou plusieurs certificats d'utilisateurs, où le classement des certificats d'utilisateurs dans l'objet de chaînes d'allocation d'attribut reproduit la séquence des utilisateurs qui ont établi ce certificat d'accès pour respectivement d'autres utilisateurs dont les certificats d'utilisateurs sont contenus dans l'objet de chaînes d'allocation d'attributs, où la troisième hiérarchie d'autorisation comprend l'au moins un objet de chaines d'allocations d'attributs.
- dans lequel, de préférence, les banques de données de données d'utilisation sont exemptes d'objets de chaînes d'autorisations d'accès et ne contiennent pour chaque ensemble de données uniquement les certificats d'accès qui accordent à l'utilisateur, lequel a déposé cet ensemble de données, un accès à cet ensemble de données.

11. Procédé selon l'une des revendications 3 à 10, comprenant en outre :
- la réception d'une demande d'accès du troisième utilisateur (U1) par la banque de données de données d'utilisation (102), où le troisième utilisateur demande dans la demande d'accès un accès à un ensemble de données (108) que le deuxième utilisateur (U2) a déposé ;
- la détermination des certificats d'accès (Z.Zert_U2[W], Z.Zert_U2[R], Z.Zert_U2[S]) du deuxième utilisateur, qui sont stockés dans la banque de données de données d'utilisation en tant que composant de l'ensemble de données (108) par la banque de données de données d'utilisation ;
- l'envoi du premier certificat d'utilisateur qui est associé à l'utilisateur demandeur et des certificats d'accès déterminés, par la banque de données de données d'utilisation vers la banque de données d'ID ;
- en réponse à la réception du premier certificat d'utilisateur et des certificats d'accès déterminés, la création d'une preuve d'autorisation (220, 222) par la banque de données d'ID, où la preuve d'autorisation indique si le troisième utilisateur est combiné avec un certificat propriétaire de la banque de données de données d'utilisation (102) par au moins un des objets de chaînes d'autorisations de propriété et si le troisième utilisateur est associé à l'ensemble de données (108) par au moins un des objets de chaînes d'autorisation d'accès ;
- la transmission de la preuve d'autorisation de la banque de données d'ID à la banque de données de données d'utilisation ;
- la vérification, par la banque de données de données d'utilisation, à l'aide de la preuve d'autorisation, que le troisièmes utilisateur est combiné avec un certificat propriétaire de la banque de données de données d'utilisation et que et quels certificats d'accès sont associés au troisième utilisateur en ce qui concerne l'ensemble de données (108) en question ;
- dans lequel la banque de données de données d'utilisation est conçue pour n'accorder au troisième utilisateur un établissement d'une communication à la banque de données que si celui-ci est combiné avec un certificat propriétaire de la banque de données de données d'utilisation et pour n'accorder au troisième utilisateur l'accès à l'ensemble de données en question que dans la mesure où elle est aménagée pour le troisième utilisateur par les certificats d'accès lui étant associés.

12. Procédé selon l'une des revendications 3 à 11, dans lequel la banque de données d'ID comprend une clé de signature privée (107), où la banque de données de données d'utilisation (102, 104 comprend une clé de vérification de signature publique (105), laquelle est conçue pour la vérification des signatures établies avec la clé de signature, comprenant en outre :
- la signature de la preuve d'autorisation par la banque de données d'ID avec la clé de signature, où la preuve d'autorisation est transmise à la banque de données de données d'utilisation sous forme signée ; et
- la vérification, par la banque de données de données d'utilisation, au moyen de la clé de vérification de signature, si la signature de la preuve d'autorisation est valide, où l'établissement de la liaison à la banque de données et l'accès à l'ensemble de données ne sont autorisés que si la signature est valide,
de préférence, comprenant en outre :
- dans le cadre de la création de la preuve d'autorisation (220, 222) contenant l'un des certificats propriétaires, l'exécution d'une vérification de chaines de certificats par la banque de données d'ID afin de constater si ce certificat propriétaire est incorporé vérifiable dans la chaîne de certificats du certificat d'utilisateur auquel ce certificat propriétaire est associé dans un des objets de chaînes d'autorisations de propriété, où la signature de la preuve d'autorisation n'a lieu que dans le cas d'un constat d'une incorporation réussie ; et/ou
- dans le cadre de la création de la preuve d'autorisation (220, 222) contenant un ou plusieurs certificats d'accès d'un utilisateur (U2), l'exécution d'une vérification de chaines de certificats par la banque de données d'ID pour constater si ce certificat d'accès de l'utilisateur est incorporé vérifiable dans la chaîne de certificats du certificat d'utilisateur auquel ce certificat d'accès est associé dans un des objets de chaînes d'autorisations de propriété, où la signature de la preuve d'autorisation n'a lieu que dans le cas d'un constat d'une incorporation réussie.

13. Procédé selon l'une des revendications 3 à 12, comprenant en outre :
- l'emploi de la deuxième interface par le deuxième utilisateur (U2) qui a déposé l'ensemble de données (108), ou par un cinquième utilisateur (U3) qui est combiné par un objet de chaîne d'autorisation d'accès avec un ou plusieurs certificats d'accès de l'utilisateur de la banque de données afin de déposer un nouvel objet de chaîne d'autorisation d'accès dans lequel un ou plusieurs de ces certificats d'accès (Z.Zert_U2[W], Z.Zert_U2[R], Z.Zert_U2[S]) de celui qui a déposé l'ensemble de données (108) sont associés à un sixième utilisateur,
- dans lequel la banque de données de données d'utilisation est conçue pour, avant l'accord pour l'accès à l'ensemble de données créé par le deuxième utilisateur, par le sixième utilisateur, vérifier si un ou plusieurs de ces certificats d'accès (Z.Zert_U2[W], Z.Zert_U2[R], Z.Zert_U2[S]) sont associés au sixième utilisateur, et/ou
- dans lequel un ou plusieurs certificats d'accès de l'utilisateur établissant l'ensemble de données sont associés à chacun des ensembles de données dans la banque de données de données d'utilisation ;
- dans lequel respectivement un ou plusieurs certificats d'utilisateurs sont associés aux certificats propriétaires dans la banque de données d'ID de telle manière que la séquence chronologique des utilisateurs qui se sont aménagés des droits propriétaires de la banque de données de données d'utilisation est respectivement représentée sous forme d'une hiérarchie ; et
- dans lequel les certificats d'accès dans la banque de données d'ID sont associés respectivement à un ou à plusieurs certificats d'utilisateurs de telle manière que la séquence chronologique des utilisateurs qui se sont aménagés des droits d'accès de l'ensemble de données est respectivement représentée sous forme d'une hiérarchie ; et
- dans lequel les hiérarchies associées aux certificats propriétaires sont créées de manière dynamique indépendamment des hiérarchies associées aux certificats d'accès, et/ou
dans lequel la banque de données de données d'utilisation stocke les ensembles de données dans un format lequel exclut une extraction de l'information contenue dans les ensembles de données sans un accès à la banque de données de données d'utilisation par le biais de la liaison à la banque de données, en outre avec :
- l'exécution d'une sauvegarde sur un autre support de stockage de la banque de données de données d'utilisation par la copie de la banque de données de données d'utilisation par un utilisateur administrateur, où l'utilisateur administrateur ne possède pas de certificat propriétaire pour cette banque de données de données d'utilisation, et/ou
en outre avec :
- l'écriture de la séquence chronologique de la création de toutes les combinaisons de certificats d'utilisateurs avec des certificats propriétaires et/ou des certificats d'accès dans une ou plusieurs connexions à la banque de données.

14. Système informatique permettant le contrôle d'accès à des objets de données (106, 108, 110, 112, 114, 116), où le système informatique est conçu pour:
- la mise au point (1002) d'une première hiérarchie d'autorisation générée de manière dynamique en partant d'un premier utilisateur par une multiplicité d'utilisateurs, où la première hiérarchie d'autorisation est créée de manière successive, en ce qu'en partant du premier utilisateur, l'utilisateur respectivement pris en compte en dernier lieu dans la première hiérarchie d'autorisation attribue personnellement un premier droit d'accès à un nouvel utilisateur à prendre en compte, de sorte qu'à chaque utilisateur pris en compte dans la première hiérarchie d'autorisation est attribué le premier droit d'accès, et où la première hiérarchie d'autorisation comprend, outre le premier utilisateur, au moins deux autres utilisateurs,
- la mise au point (1004) d'une deuxième hiérarchie d'autorisation générée en partant d'un deuxième utilisateur, où la deuxième hiérarchie d'autorisation est créée de manière successive, en ce qu'en partant du deuxième utilisateur, l'utilisateur respectivement pris en compte en dernier lieu dans la deuxième hiérarchie d'autorisation attribue personnellement un deuxième droit d'accès à un nouvel utilisateur à prendre en compte, de sorte qu'à chaque utilisateur pris en compte dans la deuxième hiérarchie d'autorisation est attribué le deuxième droit d'accès, et où la deuxième hiérarchie d'autorisation comprend, outre le deuxième utilisateur, au moins un nouvel utilisateur,
- la mise au point (1006) d'au moins une nouvelle troisième hiérarchie d'autorisation générée en partant d'un quatrième utilisateur, où la troisième hiérarchie d'autorisation est créée de manière successive, en ce qu'en partant du quatrième utilisateur, l'utilisateur respectivement pris en compte en dernier lieu dans la troisième hiérarchie d'autorisation attribue personnellement un troisième droit d'accès à un nouvel utilisateur à prendre en compte, de sorte qu'à chaque utilisateur pris en compte dans la troisième hiérarchie d'autorisation est attribué le troisième droit d'accès, et où la troisième hiérarchie d'autorisation comprend, outre le quatrième utilisateur, au moins un nouvel utilisateur,
- la vérification (1008) de droits d'accès d'un troisième utilisateur pour un accès aux objets de données, où un accès à l'objet de donnée n'est accordé que si le troisième utilisateur est pris également en compte par la première hiérarchie d'autorisation, de sorte qu'à la fois le premier droit d'accès lui est accordé et également par la deuxième hiérarchie d'autorisation de sorte qu'en outre le deuxième droit d'accès lui est accordé, où la vérification (1008) des droits d'accès du troisième utilisateur pour l'accès à l'objet de donnée comprend en outre une vérification de l'au moins une troisième hiérarchie d'autorisation et un accès à l'objet de donnée n'est alors accordé que si le troisième utilisateur est en outre pris en compte par la troisième hiérarchie d'autorisation, de sorte que le troisième droit d'accès lui est accordé.

15. Système informatique selon la revendication 14, où le système informatique comprend un système de gestion d'accès (100) avec au moins une banque de données de données d'utilisation (102, 104) ainsi qu'une banque de données d'ID (136) et où les objets de données comprennent des ensembles de données,
dans lequel la création de la première hiérarchie d'autorisation comprend :
- la combinaison (902) d'un premier certificat propriétaire (128, 130) qui est associé à la banque de données de données d'utilisation (102) avec le troisième utilisateur (U1), où un certificat propriétaire est un certificat qui est associé à une ou à plusieurs banques de données de données d'utilisation et accorde à chaque utilisateur avec lequel il est combiné le premier droit d'accès, lequel comprend le droit d'établir une liaison de communication vers cette banque de données de données d'utilisation pour la transmission d'une ou de plusieurs demandes avec une ou plusieurs opérations de banque de données à la banque de données de données d'utilisation,
- la mise en place (904) d'une première interface (142) qui permet au troisième utilisateur (U1) d'établir une deuxième combinaison du deuxième utilisateur (U2) avec le premier certificat propriétaire (128, 130) pour la banque de données de données d'utilisation (102) afin de permettre à celui-ci d'établir une liaison de communication vers cette banque de données de données d'utilisation pour la transmission d'une ou de plusieurs demandes ou d'une ou de plusieurs opérations de banque de données à la banque de données de données d'utilisation,
dans lequel la création de la deuxième hiérarchie d'autorisation comprend :
- la mise en place (906) d'une deuxième interface (144) qui permet au deuxième utilisateur (U2), qui a ajouté un des ensembles de données (106, 108) dans la banque de données des données d'utilisation (102), d'établir au moins un certificat d'accès (Z.Zert_U2[W], Z.Zert_U2[R], Z.Zert_U2[S]), lequel accorde le deuxième droit d'accès et spécifie un type d'accès à l'ensemble de données pour l'ensemble de données établi par le deuxième utilisateur et de combiner avec le certificat d'utilisateur d'un utilisateur, auquel l'accès à cet ensemble de données doit être accordé,
dans lequel la banque de données de données d'utilisation n'accorde au troisième utilisateur l'accès à l'ensemble de données ajouté par le deuxième utilisateur que si le troisième utilisateur est combiné à la fois avec un certificat propriétaire pour la banque de données de données d'utilisation et avec un certificat d'accès pour l'accès à l'ensemble de données.
